(19) Europäisches Patentamt
European Patent Office
Office européen des brevets

(11) EP 4 317 257 A1

(12) **EUROPEAN PATENT APPLICATION**
published in accordance with Art. 153(4) EPC

(43) Date of publication:
**07.02.2024 Bulletin 2024/06**

(21) Application number: **22774759.9**

(22) Date of filing: **14.02.2022**

(51) International Patent Classification (IPC):
***C08G 81/00*** (2006.01) ***C08J 5/22*** (2006.01)
***H01B 1/06*** (2006.01) ***H01B 1/12*** (2006.01)
***H01M 8/10*** (2016.01) ***H01M 8/1018*** (2016.01)
***H01M 8/1067*** (2016.01) ***C25B 13/04*** (2021.01)
***C25B 13/08*** (2006.01) ***C25B 9/00*** (2021.01)
***C25B 1/04*** (2021.01)

(52) Cooperative Patent Classification (CPC):
**C08G 81/00; C08J 5/22; C25B 1/04; C25B 9/00; C25B 13/04; C25B 13/08; H01B 1/06; H01B 1/12; H01M 8/10; H01M 8/1018; H01M 8/1067;**
Y02E 60/50

(86) International application number:
**PCT/JP2022/005585**

(87) International publication number:
**WO 2022/201958 (29.09.2022 Gazette 2022/39)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **23.03.2021 JP 2021048314**
**22.04.2021 JP 2021072384**

(71) Applicant: **Toray Industries, Inc.**
**Tokyo 103-8666 (JP)**

(72) Inventors:
- **MURAKAMI, Kazuho**
**Otsu-shi, Shiga 520-8558 (JP)**
- **MATSUI, Kazuma**
**Otsu-shi, Shiga 520-8558 (JP)**
- **TANAKA, Tsuyoshi**
**Otsu-shi, Shiga 520-8558 (JP)**
- **IZUHARA, Daisuke**
**Otsu-shi, Shiga 520-8558 (JP)**

(74) Representative: **Hoefer & Partner Patentanwälte mbB**
**Pilgersheimer Straße 20**
**81543 München (DE)**

(54) **POLYMER ELECTROLYTE MEMBRANE, BLOCK COPOLYMER, POLYMER ELECTROLYTE MATERIAL, POLYMER ELECTROLYTE MOLDED BODY, ELECTROLYTE MEMBRANE WITH CATALYST LAYER, MEMBRANE ELECTRODE COMPOSITE, SOLID POLYMER FUEL CELL, AND WATER ELECTROLYTIC HYDROGEN GENERATOR**

(57) [Problem] Developed is a polymer electrolyte membrane having excellent proton conductivity even under low-humidity conditions, and having excellent mechanical strength and chemical stability.

[Solution] A polymer electrolyte membrane containing a block copolymer having one or more ionic segments and one or more nonionic segments, wherein the ion exchange capacity (meq/g) of the block copolymer is more than 2.0 and less than 3.1, wherein the polymer electrolyte membrane has a co-continuous phase-separation structure, wherein the average period size (nm) of the co-continuous phase-separation structure is less than 110 nm as observed by transmission electron microscopy, and wherein the average period size (nm) of the co-continuous phase-separation structure and the ion exchange capacity (meq/g) satisfy the relation of: average period size (nm) / ion exchange capacity (meq/g) > 21.

EP 4 317 257 A1

## Description

### TECHNICAL FIELD

The present invention relates to a polymer electrolyte membrane, block copolymer, polymer electrolyte material, molded polymer electrolyte product, catalyst coated membrane, membrane electrode assembly, polymer electrolyte fuel cell, and water electrolysis hydrogen generator.

### BACKGROUND ART

Fuel cells are a kind of power generator from which electric energy is extracted by electrochemical oxidation of a fuel such as hydrogen or methanol, and have recently attracted attention as a clean energy source. Above all, polymer electrolyte fuel cells have a low standard operating temperature of around 100°C and a high energy density. Therefore, polymer electrolyte fuel cells are expected to be widely used for relatively small distributed power generation facilities as well as for power generators for mobile objects such as automobiles and ships. In addition, polymer electrolyte fuel cells have also attracted attention as a power source for small mobile devices and portable devices, and are expected to be substitute applications for secondary batteries such as nickel-hydrogen batteries and lithium-ion batteries in mobile phones and personal computers.

A fuel cell usually includes, as a unit, a cell including a membrane electrode assembly (MEA) sandwiched between separators. In the MEA, catalyst layers are arranged on both sides of an electrolyte membrane, and gas diffusion layers are further arranged on both sides of the resulting laminate. In the MEA, the catalyst layers and the gas diffusion layers that are arranged on both sides of the electrolyte membrane form a pair of electrode layers, and one of the electrode layers is an anode electrode and the other is a cathode electrode. A fuel gas containing hydrogen comes into contact with the anode electrode, and the air comes into contact with the cathode electrode, whereby electric power is generated by an electrochemical reaction. The electrolyte membrane is mainly made from a polymer electrolyte material. The polymer electrolyte material is also used as a binder for the catalyst layer.

Conventionally, "Nation" (registered trademark) (manufactured by The Chemours Company), which is a fluoropolymer electrolyte, has been widely used as a polymer electrolyte material. On the other hand, an inexpensive hydrocarbon electrolyte material that can be used in place of "Nafion" (registered trademark) and that is excellent in membrane characteristics has been actively developed in recent years. A hydrocarbon electrolyte material excels in low gas permeability and heat resistance, and studies have actively been made particularly on an electrolyte material produced using an aromatic polyether ketone or an aromatic polyether sulfone. However, a conventional hydrocarbon electrolyte material exhibits the same or superior degree of proton conductivity under high-humidity conditions, compared with a fluorine electrolyte material, but the proton conductivity is not sufficient under low-humidity conditions.

A block copolymer composed of a segment containing an ionic group (hereinafter referred to as an "ionic segment") and a segment containing no ionic group (hereinafter referred to as a "nonionic segment") is suggested as a hydrocarbon polymer electrolyte material having excellent proton conductivity even under low-humidity conditions, and having excellent mechanical strength and chemical stability (see, for example, Patent Literature 1 and 5). Patent Literature 5 discloses an aromatic polyether sulfone containing a segment having a number-average molecular weight of 80,000 as an ionic segment.

### Citation List

#### Patent Literature

Patent Literature 1: WO2008/018487
Patent Literature 2: WO2013/002274
Patent Literature 3: WO2013/031675
Patent Literature 4: JP2006-2783221A
Patent Literature 5: JP2007-109638A

### SUMMARY OF INVENTION

#### Technical Problem

However, with the use of a block copolymer or a polymer electrolyte membrane described in Patent Literature

1 to 5, the effect of enhancing the proton conductivity and mechanical strength under low-humidity conditions is still not complete, and such a block copolymer and a polymer electrolyte membrane are desired to be further improved so as to be industrially useful.

In view of the background of such a conventional technology, an object of the present invention is to develop a block copolymer and a polymer electrolyte membrane that have excellent proton conductivity under low-humidity conditions, and have excellent mechanical strength and physical durability.

Solution to Problem

The present inventors have considered that the cause of the above-described problem of a conventional technology is presumably that the form of a phase-separation structure in a polymer electrolyte membrane does not have a co-continuous phase-separation size, is not optimal for proton conduction, and is not enabled to inhibit the ion exchange capacity with respect to the period size of the phase separation, and that the period size of the phase separation and the ion exchange capacity are not in a suitable range that makes it possible to achieve both proton conductivity and dimensional stability.

On the basis of this assumption, the present inventors have made studies, and consequently discovered the following facts.

Expanding the period size of the co-continuous phase separation makes it possible to maintain a large proton conduction channel even under low-humidity conditions, enhancing the proton conductivity.

On the other hand, in cases where the ion exchange capacity is increased to expand the period size of the phase separation, the increase in the ion exchange capacity is accompanied by a decrease in the dimensional stability and a decrease in the mechanical strength and the physical durability.

That is, the present inventors have reached the present invention through the discovery that, to achieve both proton conductivity and dimensional stability, it is necessary to expand the period size of the co-continuous phase separation while inhibiting the ion exchange capacity at a value equal to or lower than a given value with respect to the period size of the co-continuous phase separation.

To solve the above-described problem, a polymer electrolyte membrane (hereinafter referred to as a first aspect in some cases) according to the present invention has the following constitution. That is,

a polymer electrolyte membrane containing a block copolymer having one or more segments containing an ionic group (hereinafter referred to as an "ionic segment(s)") and one or more segments containing no ionic group (hereinafter referred to as a "nonionic segment(s)"), wherein the ion exchange capacity (meq/g) of the block copolymer is more than 2.0 and less than 3.1, wherein the polymer electrolyte membrane has a co-continuous phase-separation structure, wherein the average period size (nm) of the co-continuous phase-separation structure is less than 110 nm as observed by transmission electron microscopy, and wherein the average period size (nm) of the co-continuous phase-separation structure and the ion exchange capacity (meq/g) satisfy the relation of: average period size (nm) / ion exchange capacity (meq/g) > 21.

In addition, the present inventors have considered that the cause of the above-described problem of a conventional technology is presumably that the molecular weight of an ionic segment in a block copolymer is small, that is, the length of the chain of the ionic segment is short. Then, the present inventors have advanced studies, and reached the present invention through considering that suitably regulating the length of the molecular chain of the ionic segment contributes to enhancing the aggregability of each segment during the formation of a phase-separation structure, thus enhancing the proton conductivity under low-humidity conditions.

To solve the above-described problem, a block copolymer (hereinafter referred to as a second aspect in some cases) according to the present invention has the following constitution. That is,

a block copolymer containing one or more segments containing an ionic group (hereinafter referred to as an "ionic segment(s)") and one or more segments containing no ionic group (hereinafter referred to as a "nonionic segment(s)"), wherein the ionic segment has an aromatic hydrocarbon polymer having a number-average molecular weight of more than 50,000 and less than 150,000, and wherein the block copolymer satisfies the relation of: Mn3 / (Mn1 + Mn2) > 1, wherein the number-average molecular weight of the ionic segment is represented by Mn1, the number-average molecular weight of the nonionic segment is represented by Mn2, and the number-average molecular weight of the block copolymer is represented by Mn3.

To solve the above-described problem, a polymer electrolyte material according to the present invention (hereinafter referred to as a third aspect in some cases) has the following constitution. That is,

a polymer electrolyte material containing the above-described block copolymer.

To solve the above-described problem, a molded polymer electrolyte product (hereinafter referred to as a fourth aspect in some cases) according to the present invention has the following constitution. That is,

a molded polymer electrolyte product including the above-described polymer electrolyte membrane material.

To solve the above-described problem, a catalyst coated membrane according to the present invention (hereinafter referred to as a fifth aspect in some cases) has the following constitution. That is,
a catalyst coated membrane constituted using any one of the above-described polymer electrolyte membranes.

To solve the above-described problem, a membrane electrode assembly (hereinafter referred to as a sixth aspect in some cases) according to the present invention has the following constitution. That is,
a membrane electrode assembly constituted using any one of the above-described polymer electrolyte membranes.

To solve the above-described problem, a polymer electrolyte fuel cell according to the present invention (hereinafter referred to as a seventh aspect in some cases) has the following constitution. That is,
a polymer electrolyte fuel cell constituted using any one of the above-described polymer electrolyte membranes.

To solve the above-described problem, a water electrolysis hydrogen generator (hereinafter referred to as an eighth aspect in some cases) according to the present invention has the following constitution. That is,
a water electrolysis hydrogen generator constituted using any one of the above-described polymer electrolyte membranes.

For a polymer electrolyte membrane according to the present invention, it is preferable that the heat of crystallization of the above-described block copolymer is 0.1 J/g or more, as measured by differential scanning calorimetry, or that the degree of crystallinity of the above-described block copolymer is 0.5% or more, as measured by wide-angle X-ray diffraction.

In the polymer electrolyte membrane according to the present invention, the block copolymer is preferably an aromatic hydrocarbon polymer.

In the polymer electrolyte membrane according to the present invention, the aromatic hydrocarbon polymer is preferably an aromatic polyether polymer.

In the polymer electrolyte membrane according to the present invention, the block copolymer preferably has a linker site that links the ionic segment with the nonionic segment.

In the polymer electrolyte membrane according to the present invention, the ionic segment preferably contains a structure represented by the following general formula (S1).

[Chem. 1]

$$*-Ar^1-Y^1-Ar^2-O-Ar^3-Y^2-Ar^4-O-* \quad (S1)$$

(In the general formula (S1), $Ar^1$ to $Ar^4$ independently represent a substituted or unsubstituted arylene group, and at least one of $Ar^1$ to $Ar^4$ has an ionic group. $Y^1$ and $Y^2$ independently represent a ketone group or a protective group that may be induced to a ketone group. The symbol * represents a bond with the general formula (S1) or with another constituent unit.)

In the polymer electrolyte membrane according to the present invention, a structure represented by the general formula (S1) is preferably a structure represented by the following general formula (S2).

[Chem. 2]

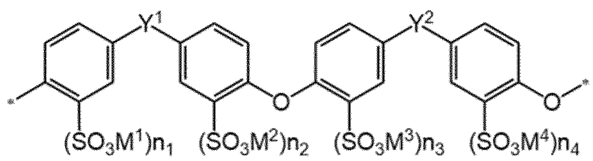

(S2)

(In the general formula (S2), $Y^1$ and $Y^2$ independently represent a ketone group or a protective group that may be induced to a ketone group. $M^1$ to $M^4$ independently represent a hydrogen atom, metal cation, or ammonium cation. $n_1$ to $n_4$ are independently 0 or 1, and at least one of $n_1$ to $n_4$ is 1. The symbol * represents a bond with the general formula (S2) or with another constituent unit.)

In the polymer electrolyte membrane according to the present invention, the nonionic segment preferably contains a structure represented by the following general formula (S3).

[Chem. 3]

$$* —Ar^5—Y^3—Ar^6—O—Ar^7—Y^4—Ar^8—O— * \quad (S3)$$

(In the general formula (S3), $Ar^5$ to $Ar^8$ independently represent an arylene group with the proviso that none of $Ar^5$ to $Ar^8$ has an ionic group. $Y^3$ and $Y^4$ independently represent a ketone group or a protective group that may be induced to a ketone group. The symbol * represents a bond with the general formula (S3) or with another constituent unit.)

In the polymer electrolyte membrane according to the present invention, a structure represented by the general formula (S3) is preferably a structure represented by the following general formula (S4).

[Chem. 4]

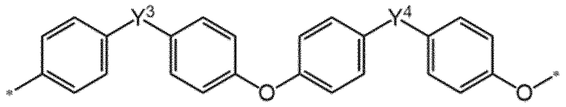

(S4)

(In the general formula (S4), $Y^3$ and $Y^4$ independently represent a ketone group or a protective group that may be induced to a ketone group. The symbol * represents a bond with the general formula (S4) or with another constituent unit.)

For a block copolymer according to the present invention, it is preferable that the heat of crystallization of the above-described block copolymer is 0.1 J/g or more, as measured by differential scanning calorimetry, or that the degree of crystallinity of the above-described block copolymer is 0.5% or more, as measured by wide-angle X-ray diffraction.

In the block copolymer according to the present invention, the aromatic hydrocarbon polymer is preferably an aromatic polyether polymer.

In the block copolymer according to the present invention, the block copolymer preferably has a linker site that links the ionic segment with the nonionic segment.

A block copolymer according to the present invention preferably satisfies the relation of: $2 < Mn1 / Mn2 < 7$.

In the block copolymer according to the present invention, the ionic segment preferably contains a structure represented by the following general formula (S1).

[Chem. 5]

$$* —Ar^1—Y^1—Ar^2—O—Ar^3—Y^2—Ar^4—O— * \quad (S1)$$

(In the general formula (S1), $Ar^1$ to $Ar^4$ independently represent a substituted or unsubstituted arylene group, and at least one of $Ar^1$ to $Ar^4$ has an ionic group. $Y^1$ and $Y^2$ independently represent a ketone group or a protective group that may be induced to a ketone group. The symbol * represents a bond with the general formula (S1) or with another constituent unit.)

In the block copolymer according to the present invention, the structure represented by the general formula (S1) is preferably a structure represented by the following general formula (S2).

[Chem. 6]

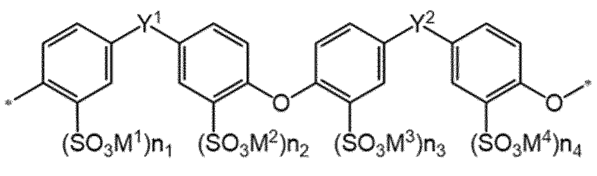

(S2)

(In the general formula (S2), $Y^1$ and $Y^2$ independently represent a ketone group or a protective group that may be induced to a ketone group. $M^1$ to $M^4$ independently represent a hydrogen atom, metal cation, or ammonium cation, $n_1$ to $n_4$ are independently 0 or 1, and at least one of $n_1$ to $n_4$ is 1. The symbol * represents a bond with the general formula (S2) or with another constituent unit.)

In the block copolymer according to the present invention, the nonionic segment preferably has an aromatic

polyether polymer.

In the block copolymer according to the present invention, the nonionic segment preferably contains a structure represented by the following general formula (S3).

[Chem. 7]

$$*-Ar^5-Y^3-Ar^6-O-Ar^7-Y^4-Ar^8-O-* \quad (S3)$$

(In the general formula (S3), $Ar^5$ to $Ar^8$ independently represent an arylene group with the proviso that none of $Ar^5$ to $Ar^8$ has an ionic group. $Y^3$ and $Y^4$ independently represent a ketone group or a protective group that may be induced to a ketone group. The symbol * represents a bond with the general formula (S3) or with another constituent unit.)

In the block copolymer according to the present invention, the structure represented by the general formula (S3) is preferably a structure represented by the following general formula (S4).

[Chem. 8]

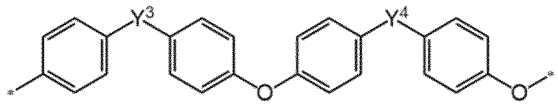

(S4)

(In the general formula (S4), $Y^3$ and $Y^4$ independently represent a ketone group or a protective group that may be induced to a ketone group. The symbol * represents a bond with the general formula (S4) or with another constituent unit.)

A block copolymer according to the present invention preferably has a co-continuous phase-separation structure.

A polymer electrolyte membrane according to the present invention is preferably produced using the polymer electrolyte membrane material.

Advantageous Effects of Invention

A polymer electrolyte membrane according to the present invention has excellent proton conductivity under low-humidity conditions and also has excellent mechanical strength and physical durability.

In addition, a block copolymer according to the present invention, as a polymer electrolyte material, can exhibit excellent processability, have good mechanical strength and physical durability, and simultaneously achieve high proton conductivity under conditions including low-humidity, owing to suitably controlling the molecular weight of a segment contained in the block.

In the present invention, having good mechanical strength and physical durability means having good dimensional stability, and having good dimensional stability means having a smaller rate of dry-wet dimensional change. The rate of dry-wet dimensional change can be measured by the method described in Examples.

BRIEF DESCRIPTION OF DRAWINGS

FIG. 1 is a schematic view of a phase-separation structure of the polymer electrolyte material.

DESCRIPTION OF EMBODIMENTS

Embodiments of the present invention will now be described in detail, and the present invention is not limited to the below-described embodiments, and can be performed with various modifications in accordance with the purpose or usage.

[Polymer Electrolyte Membrane]

The polymer electrolyte membrane according to the present invention includes a block copolymer having one or more segments containing an ionic group (hereinafter referred to as an "ionic segment") and one or more segments containing no ionic group (hereinafter referred to as a "nonionic segment"). In this regard, the nonionic segment in the

present invention may contain an ionic group in a small amount in the range that does not adversely affect the effects of the present invention. Hereinafter, "containing no ionic group" and "nonionic" are used in the same sense in some cases. In the present invention, the segment is a partial structure of a macromonomer in the block copolymer, in which the macromonomer is used to synthesize the block copolymer.

A polymer electrolyte membrane according to the present invention has a co-continuous phase-separation structure. The phase-separation structure can be controlled in accordance with the aggregation state of each of the ionic segment and the nonionic segment and with the shape of the aggregation. An example of the form of the phase-separation structure of the polymer electrolyte membrane is illustrated in FIG. 1. The phase-separation structure is roughly classified into four structures, co-continuous (M1), lamellar (M2), cylindrical (M3), and sea-island (M4). A polymer electrolyte membrane according to the present invention has the phase-separation structure (M1).

In (M1) to (M4) in FIG. 1, the continuous phase (phase 1) that is a white portion is formed with one segment selected from an ionic segment and a nonionic segment, and a continuous phase or discontinuous phase (phase 2) that is a gray portion is formed with another segment.

The phase-separation structure is described in, for example, Annual Review of Physical Chemistry, 41, 1990, p. 525, or the like.

Controlling the higher-order structure and shape of the ionic segment and the nonionic segment makes it possible to achieve excellent proton conductivity even under low-humidity and low-temperature conditions. That is, the polymer electrolyte membrane having one of the phase-separation structures (M1) to (M4) makes it possible to form a continuous proton conduction channel, and enhances the proton conductivity.

Among others, the polymer electrolyte membrane having a co-continuous structure makes it possible to form a three-dimensionally continuous proton conduction channel, and to achieve excellent proton conductivity. In addition, a nonionic hydrophobic segment forms a three-dimensional continuous domain in the same manner, and thus, has excellent fuel-blocking capability, solvent resistance dimensional stability, mechanical strength, and physical durability.

The above-described domain means a mass formed by aggregation of similar segments in one or a plurality of polymer chains.

Whether a polymer electrolyte membrane has the phase-separation structure (M1) can be verified by the below-described technique. Specifically, when a desired image is observed, the membrane in the image is defined as having the structure. In this technique, a comparison is made between the views of three digital slices cut out in the three directions of length, width, and height of a three-dimensional image observed by TEM tomography. For example, in cases where the phase-separation structure of the polymer electrolyte membrane containing a block copolymer having an ionic segment and a nonionic segment is the structure (M1), the hydrophilic domain containing an ionic segment and the hydrophobic domain containing a nonionic segment each form an intricate continuous phase in all of the views of the three sides.

Here, a continuous phase means a phase in which domains are linked with each other without being isolated, as viewed macroscopically, but the phase may have a portion in which the domains are partially not linked with each other.

On the other hand, in cases where the structure is (M2), a hydrophilic domain containing an ionic segment and a hydrophobic domain containing a nonionic segment exhibit a pattern of consecutive layers, and thus, the structure can be distinguished from (M1). In the case of (M3) and (M4), one of the domains does not form a continuous phase in at least one face, and thus, the structures can be distinguished from (M1).

To clarify the state of aggregation of the ionic segment and the nonionic segment and the contrast therebetween in the observation of the phase-separation structure, for example, the polymer electrolyte membrane is immersed in an aqueous 2 wt% lead acetate solution for 2 days to ion-exchange the ionic group with lead, and then can be used for transmission electron microscopic (TEM) and TEM tomographic observations.

The phase-separation structure can be analyzed by not only transmission electron microscopy (TEM) but also small-angle X-ray scattering (SAXS), atomic force microscopy (AFM), or the like.

The ion exchange capacity of a block copolymer contained in a polymer electrolyte membrane according to the present invention is more than 2.0 meq/g and less than 3.1 meq/g, from the viewpoint of a balance between proton conductivity and dimensional stability. The ion exchange capacity of more than 2.0 meq/g makes it possible to obtain the effects of the present invention sufficiently from the viewpoint of proton conductivity. The ion exchange capacity is preferably 2.1 meq/g or more. In addition, the ion exchange capacity of less than 3.1 meq/g makes it possible to obtain the effects of the present invention sufficiently from the viewpoint of dimensional stability. The ion exchange capacity is preferably less than 2.8 meq/g, more preferably less than 2.7 meq/g, from the viewpoint of dimensional stability.

The ion exchange capacity of the ionic segment is preferably higher from the viewpoint of proton conductivity under low-humidity conditions, and the lower value is preferably 2.5 meq/g or more, more preferably 3 meq/g or more, still more preferably 3.5 meq/g or more. In addition, the upper value is not particularly limited, and is preferably 6.5 meq/g or less, more preferably 5 meq/g or less, still more preferably 4.5 meq/g or less.

The ion exchange capacity of the nonionic segment is preferably lower from the viewpoints of hot-water resistance, mechanical strength, dimensional stability, and physical durability, and the upper value is preferably 1.0 meq/g or

less, more preferably 0.5 meq/g, still more preferably 0.1 meq/g or less.

Here, the ion exchange capacity is the molar amount of an ion-exchange group introduced per unit dry weight of each of the block copolymer, polymer electrolyte material, and polymer electrolyte membrane. The ion exchange capacity can be measured by elemental analysis, neutralization titration, or the like. In cases where the ion exchange group is a sulfonic group, the IEC can be calculated from an S/C ratio using an elemental analysis method, but it is difficult to measure the IEC, for example in cases where the electrolyte material contains a sulfur source other than a sulfonic group. Accordingly, in the present invention, the ion exchange capacity is defined as a value obtained by the below-described neutralization titration method.

In a polymer electrolyte membrane according to the present invention, the co-continuous phase-separation structure is recognized when observed by TEM, and that the average period size of the co-continuous phase-separation structure is less than 110 nm. The average period size of less than 110 nm makes it possible to achieve the effects of the present invention sufficiently from the viewpoints of mechanical strength and dimensional stability. The average period size is preferably less than 100 nm from the viewpoints of mechanical strength and dimensional stability. In addition, the average period size is preferably more than 42 nm, more preferably 50 nm or more, still more preferably 55 nm or more, from the viewpoint of further enhancing the effects of the present invention in terms of proton conductivity.

In the present invention, the period size refers to the period length of a domain formed by the aggregation of ionic segments and a domain formed by the aggregation of nonionic segments, and the average period size refers to the period length of the domain, as calculated by fast Fourier transform (FFT) using the method described in Example.

In a polymer electrolyte membrane according to the present invention, the average period size (nm) and ion exchange capacity (meq/g) of the co-continuous phase-separation structure satisfy the relation of: average period size (nm) / ion exchange capacity (meq/g) > 21. Expanding the average period size makes it possible to achieve high proton conductivity. On the other hand, regulating the ion exchange capacity at a value equal to or lower than a given value with respect to the average period size makes it possible to achieve high dimensional stability. That is, satisfying the relation of the above-described equation allows the polymer electrolyte membrane to have excellent proton conductivity even under low-humidity conditions, and to have excellent mechanical strength and chemical stability.

From the viewpoints of proton conductivity and dimensional stability, the relation of: average period size (nm) / ion exchange capacity (meq/g) > 22 is preferably satisfied, and the relation of: average period size (nm) / ion exchange capacity (meq/g) ≥ 23 is more preferably satisfied. On the other hand, from the viewpoint of maintaining mechanical strength and dimensional stability better, the relation of: average period size (nm) / ion exchange capacity (meq/g) ≤ 52 is preferably satisfied.

A method of obtaining a polymer electrolyte membrane that satisfies the relation of: average period size (nm) / ion exchange capacity (meq/g) > 21 is not particularly limited. Examples of a method of expanding the period size of the co-continuous phase-separation structure without increasing the ion exchange capacity include: (1) a method in which temperature and humidity conditions and the rate of solvent drying are adjusted during the formation of a membrane, (2) a method in which a membrane-forming solvent is suitably selected in accordance with the polarity of a block copolymer in such a manner that the size of the phase separation is made preferable, (3) a method in which the molecular weight of each of the ionic segment and the nonionic segment that form a block copolymer, that is, the length of the molecular chain is controlled; and the like.

Among these, the method (3) is preferable. The length of the molecular chain of the ionic segment is one of the factors that influence the size of the hydrophilic domain that forms a proton conduction channel in the co-continuous phase-separation structure. From the viewpoint of expanding the size of the hydrophilic domain, the number-average molecular weight Mn1 of the ionic segment is preferably more than 45,000. Mn1 is more preferably more than 50,000, still more preferably more than 60,000, most preferably more than 80,000. The upper limit of Mn1 is not particularly limited, and is preferably less than 150,000 from the viewpoint of further enhancing the dimensional stability of the polymer electrolyte membrane at higher temperature and higher humidify.

The length of the molecular chain of the nonionic segment is one of the factors that influence the size of the hydrophobic domain, in which the size contributes to the crystallinity and the water resistance. The number-average molecular weight Mn2 of the nonionic segment is preferably 10,000 or more, more preferably 15,000 or more. The upper limit of Mn2 is not particularly limited, and is preferably 50,000 or less from the viewpoint of polymerizability.

A method of adjusting Mn1 to a molecular weight of interest is not particularly limited as long as the method can achieve the molecular weight of interest. Examples include: a method in which a segment the molecular weight of which is a number-average molecular weight of interest is synthesized by an aromatic nucleophilic substitution reaction or a coupling reaction; a method in which a polymer having a number-average molecular weight smaller than a number-average molecular weight of interest is synthesized, and the polymers, used as constituent units of a segment, are linked with each other by a linker (L1); and the like. Because of the smaller restriction in processes, a method in which the polymers are linked with each other by a linker is particularly preferable.

A block copolymer contained in a polymer electrolyte membrane according to the present invention is preferably a hydrocarbon copolymer from the viewpoint of mechanical strength. As used in the present invention, a hydrocarbon

copolymer means a copolymer other than a perfluoro copolymer. In addition, that a block copolymer is an aromatic hydrocarbon copolymer means that at least one of the ionic segment and the nonionic segment which are contained in the block copolymer is an aromatic hydrocarbon polymer.

A block copolymer contained in a polymer electrolyte membrane according to the present invention is preferably an aromatic hydrocarbon copolymer from the viewpoints of crystallinity, dimensional stability, and mechanical strength. An aromatic hydrocarbon copolymer is a copolymer constituted mainly of an aromatic ring.

In the present invention, the aromatic ring contained in the aromatic hydrocarbon copolymer may contain not only a hydrocarbon aromatic ring but also a hetero ring. In addition, the copolymer may be constituted partially of an aliphatic unit together with the aromatic ring unit. Specific examples of the polymer that is a constituent of the aromatic hydrocarbon copolymer include polymers having, in the main chain, a structure selected from polysulfone, polyether sulfone, polyphenylene oxide, a polyarylene ether polymer, polyphenylene sulfide, polyphenylene sulfide sulfone, polyparaphenylene, a polyarylene polymer, polyarylene ketone, polyether ketone, polyarylene phosphine phoxide, polyether phosphine phoxide, polybenzoxazole, polybenzothiazole, polybenzimidazole, polyamide, polyimide, polyetherimide, and polyimidesulfone together with an aromatic ring.

Among these, aromatic polyether polymers are preferable from the viewpoints of cost and polymerizability. That is, the aromatic hydrocarbon copolymer is preferably an aromatic polyether copolymer.

An aromatic polyether polymer refers to a polymer constituted mainly of an aromatic ring, in which polymer the repeating unit contains at least an ether bond as a mode of linking an aromatic ring unit. Examples of the structure of the aromatic polyether polymer include, but are not limited to, an aromatic polyether, aromatic polyether ketone, aromatic polyether ether ketone, aromatic polyether ketone ketone, aromatic polyether ether ketone ketone, aromatic polyether ketone ether ketone ketone, aromatic polyether imide, aromatic polyether sulfone, and the like.

Among these, an aromatic polyether ketone polymer and a polyether sulfone polymer are preferable from the viewpoints of chemical stability and cost, and an aromatic polyether ketone polymer is most preferable from the viewpoints of mechanical strength, dimensional stability, and physical durability. That is, the aromatic hydrocarbon copolymer is most preferably an aromatic polyether ketone copolymer.

An aromatic polyether ketone polymer refers to a polymer constituted mainly of an aromatic ring, in which polymer the repeating unit contains at least an ether bond and a ketone bond as modes of linking an aromatic ring unit.

An aromatic polyether sulfone polymer refers to a polymer constituted mainly of an aromatic ring, in which polymer the repeating unit contains at least an ether bond and a sulfone bond as modes of linking an aromatic ring unit.

In a polymer electrolyte membrane according to the present invention, the ionic segment contained in the block copolymer preferably contains a structure represented by the following general formula (S1), from the viewpoints of mechanical strength and dimensional stability.

[Chem. 9]

$$*-Ar^1-Y^1-Ar^2-O-Ar^3-Y^2-Ar^4-O-* \quad (S1)$$

In the general formula (S1), $Ar^1$ to $Ar^4$ independently represent a substituted or unsubstituted arylene group, and at least one of $Ar^1$ to $Ar^4$ has an ionic group. $Y^1$ and $Y^2$ independently represent a ketone group or a protective group that may be induced to a ketone group. The symbol * represents a bond with the general formula (S1) or with another constituent unit.

Herein, examples of the aromatic ring preferable for $Ar^1$ to $Ar^4$ include, but are not limited to: hydrocarbon arylene groups such as a phenylene group, naphthylene group, biphenylene group, and fluorenediyl group; and heteroarylene groups such as pyridinediyl, quinoxalinediyl, and thiophenediyl; and the like.

In the present invention, the ionic group is preferably an atomic group having a negative charge, and preferably has a proton exchange capability. Such a functional group is preferably a sulfonic group, sulfonimide group, sulfate group, phosphonic group, phosphate group, or carboxylic group, as described below.

[Chem. 10]

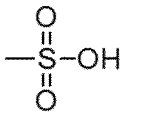
(f1)

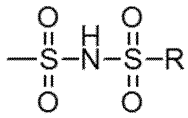
(f2)

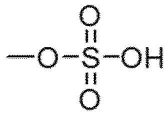
(f3)

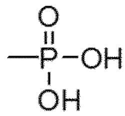
(f4)

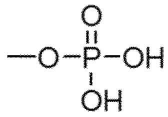
(f5)

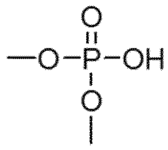
(f6)

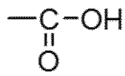
(f7)

Such an ionic group encompasses the above-described functional groups (f1) to (f7) formed into a salt. Examples of a cation that forms such a salt include an arbitrary metal cation, $NR_4^+$ (wherein R is an arbitrary organic group), and the like. Without particular limitation, the metal cation is preferably Na, K, or Li which is inexpensive, and can easily undergo proton exchange.

The block copolymer can contain two or more kinds of these ionic groups, and the combination of the ionic groups can be suitably determined in accordance with the polymer structure or the like. Above all, it is more preferable that the polymer contains at least a sulfonic group, a sulfonimide group, or a sulfate group, from the viewpoint of high proton conductivity, and it is most preferable that the polymer contains a sulfonic group, from the viewpoint of raw material cost.

In a block copolymer to be used in the present invention, a structure represented by the general formula (S1) is preferably a structure represented by the following general formula (P1), from the viewpoints of dimensional stability, raw material availability, and still more preferably a structure represented by the following general formula (S2), from the viewpoints of raw material availability and polymerizability.

[Chem. 11]

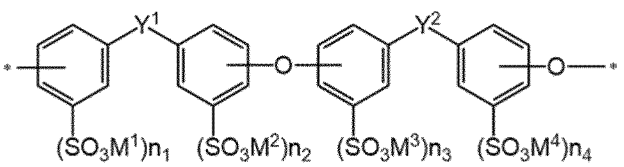
(P1)

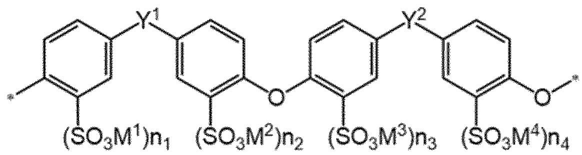
(S2)

In the general formulae (P1) and (S2), $Y^1$ and $Y^2$ independently represent a ketone group or a protective group that may be induced to a ketone group. $M^1$ to $M^4$ independently represent a hydrogen atom, metal cation, or ammonium cation. $n_1$ to $n_4$ are independently 0 or 1, and at least one of $n_1$ to $n_4$ is 1. The symbol * represents a bond to the general formula (P1), (S2), or another constituent unit.

Furthermore, from the viewpoints of raw material availability and polymerizability, m = 1, $n_2$ = 1, $n_3$ = 0, and $n_4$ = 0, or $n_1$ = 0, $n_2$ = 0, $n_3$ = 1, and $n_4$ = 1 are most preferable.

The amount of a constituent unit represented by the general formula (S1) and contained in the ionic segment is more preferably 20 mol% or more, still more preferably 50 mol% or more, most preferably 80 mol% or more.

Examples of an ionic monomer to be used to synthesize such an ionic segment as above-described include an aromatic activated dihalide compound. From the viewpoints of chemical stability, production cost, and the possibility of precisely controlling the amount of an ionic group, it is preferable that an aromatic activated dihalide compound having an ion acid group introduced thereinto is used as an aromatic activated dihalide compound to be used in the ionic segment. Suitable specific examples of the monomer having a sulfonic group as an ionic group include, but are not limited to, 3,3'-disulfonate-4,4'-dichlorodiphenyl sulfone, 3,3'-disulfonate-4,4'-difluorodiphenyl sulfone, 3,3'-disulfonate-4,4'-dichlorodiphenyl ketone, 3,3'-disulfonate-4,4'-difluorodiphenyl ketone, 3,3'-disulfonate-4,4'-dichlorodiphenylphenylphosphine oxide, 3,3'-disulfonate-4,4'-difluorodiphenylphenylphosphine oxide, and the like.

From the viewpoints of proton conductivity and hydrolysis resistance, the ionic group is most preferably a sulfonic group, but the monomer having the above-described ionic group may have another ionic group.

Among the above-described monomers having a sulfonic group, 3,3'-disulfonate-4,4'-dichlorodiphenyl ketone and 3,3'-disulfonate-4,4'-difluorodiphenyl ketone are more preferable from the viewpoints of chemical stability and physical durability, and 3,3'-disulfonate-4,4'-difluorodiphenyl ketone is most preferable from the viewpoint of polymerization activity.

An ionic segment synthesized using, 3,3'-disulfonate-4,4'-dichlorodiphenyl ketone or 3,3'-disulfonate-4,4'-difluorodiphenyl ketone as a monomer having an ionic group contains a constituent unit represented by the following general formula (p1), and is preferably used. The aromatic polyether polymer is a component not only characterized by the high crystallinity possessed by a ketone group but also having better hot-water resistance than a sulfone group, is a component effective for a material having excellent dimensional stability, mechanical strength, and physical durability under high-temperature and high-humidity conditions, and thus, is still more preferably used. These sulfonic groups during polymerization are each preferably in the form of a salt with a monovalent cationic species. The monovalent cationic species may be sodium, potassium, another metal species, various kinds of amine, or the like, and is not limited to these. These aromatic activated dihalide compounds can be used singly, and a plurality of aromatic activated dihalide compounds can be used in combination.

[Chem. 12]

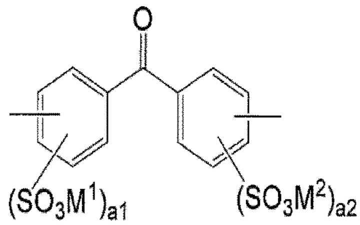
(p1)

(In the general formula (p1), $M^1$ and $M^2$ each represent a hydrogen, metal cation, or ammonium cation, and a1 and a2 each represent an integer of 1 to 4. A constituent unit represented by the general formula (p1) may be optionally substituted.)

In addition, copolymerizing aromatic activated dihalide compounds, one having an ionic group and the other having no ionic group, makes it possible to control the density of the ionic group. However, from the viewpoint of securing the continuity of the proton conduction path, it is more preferable that, in the above-described ionic segment, an aromatic activated dihalide compound having no ionic group is not copolymerized.

More suitable specific examples of the aromatic activated dihalide compound having no ionic group include 4,4'-dichlorodiphenyl sulfone, 4,4'-difluorodiphenyl sulfone, 4,4'-dichlorodiphenyl ketone, 4,4'-difluorodiphenyl ketone, 4,4'-dichlorodiphenylphenylphosphine oxide, 4,4'-difluorodiphenylphenylphosphine oxide, 2,6-dichlorobenzonitrile, 2,6-difluorobenzonitrile, and the like. Among these, 4,4'-dichlorodiphenyl ketone and 4,4'-difluorodiphenyl ketone are more preferable from the viewpoints of crystallization, mechanical strength, physical durability, and hot-water resistance, and 4,4'-difluorodiphenyl ketone is most preferable from the viewpoint of polymer activity. These aromatic activated dihalide compounds can be used singly, and a plurality of aromatic activated dihalide compounds can be used in combination.

A polymer electrolyte material synthesized using 4,4'-dichlorodiphenyl ketone or 4,4'-difluorodiphenyl ketone as an aromatic activated dihalide compound further contains a constituent site represented by the following general formula (p2), and is preferably used. The constituent unit becomes a component that affords an intermolecular cohesive force and crystallinity, becomes a material having excellent dimensional stability, mechanical strength, and physical durability under high-temperature and high-humidity conditions, and thus is preferably used.

[Chem. 13]

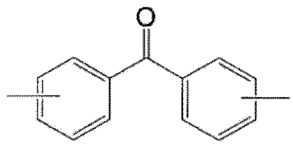

(p2)

(A constituent unit represented by the general formula (p2) may be optionally substituted, but contains no ionic group.)

In addition, a nonionic monomer to be used to synthesize an ionic segment is, for example, an aromatic diphenol compound, and is preferably an aromatic diphenol compound having the below-described protective group, in particular.

As above, monomers to be used to synthesize a constituent unit of the ionic segment have been described.

In a polymer electrolyte membrane according to the present invention, the nonionic segment contained in the block copolymer preferably contains a structure represented by the following general formula (S3), from the viewpoints of mechanical strength and dimensional stability.

[Chem. 14]

$$*—Ar^5—Y^3—Ar^6—O—Ar^7—Y^4—Ar^8—O—* \quad (S3)$$

In the general formula (S3), $Ar^5$ to $Ar^8$ independently represent an arylene group with the proviso that none of $Ar^5$ to $Ar^8$ has an ionic group. $Y^3$ and $Y^4$ independently represent a ketone group or a protective group that may be induced to a ketone group. The symbol * represents a bond with the general formula (S3) or with another constituent unit.

Herein, examples of the aromatic ring preferable for $Ar^5$ to $Ar^8$ include, but are not limited to: hydrocarbon arylene groups such as a phenylene group, naphthylene group, biphenylene group, and fluorenediyl group; and heteroarylene groups such as pyridinediyl, quinoxalinediyl, and thiophenediyl; and the like.

In the block copolymer according to the present invention, the structure represented by the general formula (S3) preferably contains a structure represented by the following formula (P2), from the viewpoint of raw material availability. Among these, it is still more preferable to contain a constituent unit represented by the following formula (S4), from the viewpoints of mechanical strength, dimensional stability, and physical durability that are due to crystallinity.

[Chem. 15]

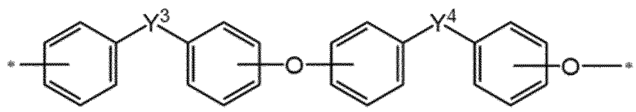

(P2)

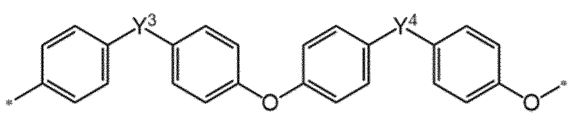

(S4)

In the general formulae (P2) and (S4), $Y^3$ and $Y^4$ independently represent a ketone group or a protective group that may be induced to a ketone group. The symbol * represents a bond with the general formulae (P2) and (S4) or with another constituent unit.

The amount of a structure represented by the general formula (S3) or (P2) and (S4) and contained in the nonionic segment is preferably larger, more preferably 20 mol% or more, still more preferably 50 mol% or more, most preferably 80 mol% or more. In cases where the amount is 20 mol% or more, the mechanical strength, dimensional stability, and physical durability are excellent owing to the crystallinity.

A block copolymer to be used in the present invention is preferably constituted of an ionic segment containing a constituent unit represented by the general formula (S1) and a block copolymer having a nonionic segment containing a constituent unit represented by the general formula (S3).

In cases where the nonionic segment contains a constituent unit represented by the general formula (S3), the

segment exhibits crystallinity. The block copolymer containing such a nonionic segment can be produced, for example, by molding a block copolymer precursor in which a protective group is introduced into at least a nonionic segment, and then deprotecting at least part of the protective group contained in the molded product. A block copolymer more tends to have poor processability than a random copolymer owing to the crystallization of the polymer having a domain formed therein, and accordingly, it is preferable to introduce a protective group into at least a nonionic segment to enhance the processability, and, in a case where the processability becomes poorer, a protective group is preferably introduced also into the ionic segment.

Preferable examples of such a constituent unit containing a protective group include a constituent unit containing at least one selected from the following general formulae (P3) and (P4).

[Chem. 16]

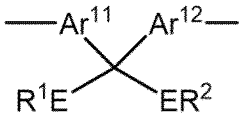
(P3)

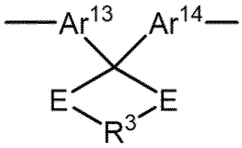
(P4)

(In the formulae (P3) and (P4), $Ar^{11}$ to $Ar^{14}$ each represent an arbitrary divalent arylene group; $R^1$ and $R^2$ each represent at least one group selected from H or an alkyl group; $R^3$ represents an arbitrary alkylene group; E represents O or S; and each symbol may represent two or more groups. A group represented by the formulae (P3) and (P4) may be optionally substituted.)

Among these, a method in which, in the general formulae (P3) and (P4), E is O, that is, a ketone site is protected/deprotected with a ketal site is most preferable from the viewpoints of the smell, reactivity, stability of the compound, and the like.

$R^1$ and $R^2$ in the general formula (P3) are each more preferably an alkyl group, still more preferably a $C_{1-6}$ alkyl group, most preferably a $C_{1-3}$ alkyl group, from the viewpoint of stability. In addition, $R^3$ in the general formula (P4) is more preferably a $C_{1-7}$ alkylene group, most preferably a $C_{1-4}$ alkylene group, from the viewpoint of stability. Specific examples of $R^3$ include, but are not limited to, - $CH_2CH_2$-, -$CH(CH_3)CH_2$-, -$CH(CH_3)CH(CH_3)$-, -$C(CH_3)_2CH_2$-, - $C(CH_3)_2CH(CH_3)$-, -$C(CH_3)_2O(CH_3)_2$-, -$CH_2CH_2CH_2$-, -$CH_2C(CH_3)_2CH_2$-, and the like.

An organic group preferable as each of $Ar^{11}$ to $Ar^{14}$ in the general formulae (P3) and (P4) is a phenylene group, naphthylene group, or biphenylene group. These may be optionally substituted. In the aromatic polyether polymer, $Ar^{13}$ and $Ar^{14}$ in the general formula (P4) are each more preferably a phenylene group from the viewpoints of solubility and easy raw material availability. $Ar^{13}$ and $Ar^{14}$ are each most preferably a *p*-phenylene group.

Here, examples of a method of protecting a ketone site with a ketal include a method in which a precursor compound having a ketone group is allowed to react with a monofunctional and/or bifunctional alcohol in the presence of an acid catalyst. For example, such a protected ketone site can be produced by allowing 4,4'-dihydroxybenzophenone as a ketone precursor to react in the presence of an acid catalyst such as hydrogen bromide in a monofunctional and/or bifunctional alcohol or a solvent of an aliphatic or aromatic hydrocarbon or the like. The alcohol is a $C_{1-20}$ aliphatic alcohol.

An improving method for producing a ketal monomer is composed of allowing 4,4'-dihydroxybenzophenone as a ketone precursor to react with a bifunctional alcohol in the presence of an alkyl ortho ester and a solid catalyst.

A method of deprotecting at least part of the ketone sites protected with ketals, and thus restoring the ketone sites is subject to no particular limitation. The deprotection reaction can be performed in the presence of water and acid under ununiform or uniform conditions, and from the viewpoints of mechanical strength, physical durability, and solvent resistance, a method in which the material is molded in membrane form or the like, and then acid-treated is more preferable. Specifically, the membrane molded can be immersed in an aqueous hydrochloric acid solution or an aqueous sulfuric acid solution to be deprotected, and the concentration of the acid and the temperature of the aqueous solution can be selected suitably.

The weight ratio of the acidic aqueous solution required for the polymer is preferably 1 to 100, and it is possible to use an even larger amount of water. The acid catalyst is preferably used at a concentration of 0.1 to 50 wt% with respect to the water present. Examples of suitable acid catalysts include: strong mineral acids such as hydrochloric acid, nitric acid, fluorosulfonic acid, and sulfuric acid; and strong organic acids such as p-toluene sulfonic acid and trifluoromethanesulfonic acid. The acid catalyst, the amount of excess water, the reaction pressure, and the like can be selected suitably in accordance with the thickness of the polymer membrane and with the like.

For example, in cases where the membrane has a thickness of 50 μm, immersing the membrane in an acidic aqueous solution, for example, an aqueous solution of 6 N hydrochloric acid, and heating the membrane at 95°C for 1 to 48 hours makes it possible to deprotect substantially the whole amount of the membrane easily. In addition, even if the polymer is immersed in an aqueous solution of 1 N hydrochloric acid at 25°C for 24 hours, the majority of the protective groups can undergo deprotection. However, the deprotection is not limited to these conditions, and the deprotection may be performed with acidic gas, organic acid, or the like, or the deprotection may be performed by heat treatment.

In cases where the aromatic polyether polymer contains a linking mode such as a direct bond other than an ether bond, the position of the protective group to be introduced is more preferably an aromatic ether polymer portion from the viewpoint of enhancing the processability.

Specifically, for example, an aromatic polyether polymer containing a constituent unit represented by the general formulae (P3) and (P4) can be synthesized by an aromatic nucleophilic substitution reaction with an aromatic activated dihalide compound, using compounds represented by the following general formulae (P3-1) and (P4-1) respectively as aromatic diphenol compounds. The constituent unit represented by the general formulae (P3) and (P4) may be derived from either an aromatic diphenol compound or an aromatic activated dihalide compound. A constituent unit derived from an aromatic diphenol compound is more preferably used, considering the reactivity of the reactivity of the monomer.

[Chem. 17]

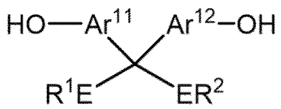

(P3-1)

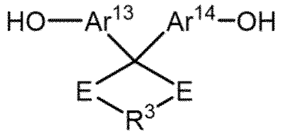

(P4-1)

(In the general formulae (P3-1) and (P4-1), $Ar^{11}$ to $Ar^{14}$ each represent an arbitrary divalent arylene group; $R^1$ and $R^2$ each represent at least one group selected from H or an alkyl group; $R^3$ represents an arbitrary alkylene group; and E represents O or S. A compound represented by the general formula (P3-1) and the general formula (P4-1) may be optionally substituted.) As above, preferable protective groups have been described.

A block copolymer contained in a polymer electrolyte membrane according to the present invention preferably contains one or more linker sites that link the ionic segment with the nonionic segment. In the present invention, the linker is a site that links the ionic segment with the nonionic segment, and is defined as a site different in the chemical structure from the ionic segment and the nonionic segment.

This linker links different segments while inhibiting the randomization of the copolymer due to an ether exchange reaction, the scission of the segment, a side reaction that can occur during the synthesis of a copolymer, and the like. Accordingly, using, as a raw material, a compound that gives such a linker makes it possible to obtain a block copolymer without decreasing the molecular weight of each segment.

Specific suitable examples of the linker include decafluorobiphenyl, hexafluorobenzene, 4,4'-difluorodiphenyl sulfone, 2,6-difluorobenzonitrile, and the like, but are not limited to these in the present invention.

A polymer electrolyte membrane according to the present invention preferably has a phase-separation structure, and simultaneously has crystallinity, from the viewpoint of dimensional stability and mechanical strength. In general, the dimensional stability and the mechanical strength are in a negative correlation with the ion exchange capacity, but a polymer electrolyte membrane according to the present invention, based on comparison among such polymer electrolyte membranes having approximately the same ion exchange capacity, has crystallinity, thus making it possible to achieve a high dimensional stability.

Whether the polymer electrolyte has crystallinity can be verified by differential scanning calorimetry (DSC) or wide-angle X-ray diffraction. Here, having crystallinity means that the heat of crystallization of the block copolymer is 0.1 J/g or more, as measured by differential scanning calorimetry after film formation, or that the degree of crystallinity of the block copolymer is 0.5% or more, as measured by wide-angle X-ray diffraction. That is, in the present invention, "having crystallinity" means that the polymer has a possibility of being crystallized when heated, has a crystallizable property, or has already been crystallized. In addition, an amorphous polymer means that the polymer is not crystalline, or that the polymer substantially does not become crystallized. Accordingly, even if a polymer is crystalline, but if the

polymer is not crystallized sufficiently, the state of the polymer at this point of time is an amorphous state in some cases.

[Block Copolymer]

A block copolymer according to the present invention is characterized by having one or more ionic segments and one or more nonionic segments, wherein the ionic segment has an aromatic hydrocarbon polymer having a number-average molecular weight of more than 50,000 and less than 150,000, and wherein the block copolymer satisfies the relation of: Mn3 / (Mn1 + Mn2) > 1, wherein the number-average molecular weight of the ionic segment is represented by Mn1, the number-average molecular weight of the nonionic segment is represented by Mn2, and the number-average molecular weight of the block copolymer is represented by Mn3.

In the present invention, the segment is a partial structure of a macromonomer in the block copolymer, in which the macromonomer is used to synthesize the block copolymer. A block copolymer according to the present invention contains a nonionic segment(s) together with an ionic segment(s). In this regard, the nonionic segment is termed so in the present invention, but the segment may contain an ionic group in a small amount in the range that does not adversely affect the effects of the present invention. Hereinafter, "containing no ionic group" and "nonionic" are used in the same sense in some cases.

The number-average molecular weight and the weight-average molecular weight in the present invention are each defined as a value measured in terms of standard polystyrene using gel permeation chromatography (GPC), as described in the below-described Examples.

In cases where the ionic segment contains a protective group, the number-average molecular weight of the ionic segment before deprotection is defined as Mn1. In cases where the block copolymerization is performed using a precursor of the ionic segment, the number-average molecular weight of the ionic segment precursor is defined as Mn1. The number-average molecular weight of the ionic segment after being deprotected and the number-average molecular weight of the ionic segment after being converted to the ionic segment from the ionic segment precursor can be calculated on the basis of a segment completely deprotected and a segment completely converted from the precursor respectively in accordance with the structural formulae applicable before and after the deprotection and the conversion respectively. These values are preferably more than 50,000 and less than 150,000.

In cases where the nonionic segment and the block copolymer each contains a protective group, the number-average molecular weight of the nonionic segment before being deprotected and the number-average molecular weight of the block copolymer before being deprotected are each defined as Mn2 and Mn3 respectively.

In cases where Mn1 is more than 50,000, the polymer electrolyte material containing the block copolymer can exhibit excellent proton conductivity under low-humidity conditions. In general, the proton conductivity is in a positive correlation with the ion exchange capacity, but the polymer electrolyte material containing a block copolymer according to the present invention, based on comparison among such block copolymers having approximately the same ion exchange capacity, exhibits high proton conductivity in cases where Mn1 is more than 50,000. Mn1 is preferably more than 60,000, more preferably more than 80,000. On the other hand, in cases where Mn1 is 150,000 or more, there is a concern that, when the above-described polymer electrolyte material is impregnated with hot water, the ratio of swelling increases, and the dimensional stability becomes poor. Accordingly, Mn1 is less than 150,000, preferably less than 120,000.

As Mn2 increases, the crystallinity of the block copolymer increases, and the water resistance and the mechanical and physical durability increase. Thus, Mn2 is preferably 10,000 or more, more preferably 15,000 or more.

As Mn3 increases, the mechanical strength of the block polymer increases. Thus, Mn3 is preferably 60,000 or more, more preferably 100,000 or more.

In cases where a block copolymer according to the present invention satisfies the relation of: Mn3 / (Mn1 + Mn2) > 1, phase separation suitable for proton conductivity is more easily formed in a polymer electrolyte material containing the block copolymer, and high proton conductivity under low-humidity conditions is more easily achieved. From the viewpoint of proton conductivity, the relation of: Mn3 / (Mn1 + Mn2) > 1.1 is preferably satisfied, and the relation of: Mn3 / (Mn1 + Mn2) > 1.2 is more preferably satisfied. The upper limit of Mn3 / (Mn1 + Mn2) is not particularly limited, and is preferably 5 or less.

A block copolymer according to the present invention can achieve a particularly high proton conductivity when the ionic segment has a number-average molecular weight of more than 50,000 and less than 150,000, and satisfies the relation of: Mn3 / (Mn1 + Mn2) > 1.

A block copolymer according to the present invention preferably has a phase-separation structure, and simultaneously has crystallinity, from the viewpoints of dimensional stability and mechanical strength. In general, the dimensional stability and the mechanical strength are in a negative correlation with the ion exchange capacity, but a polymer electrolyte material containing a block copolymer according to the present invention, based on comparison among such block copolymers having approximately the same ion exchange capacity, has crystallinity, thus making it possible to achieve a high dimensional stability.

Whether the polymer electrolyte has crystallinity can be verified by differential scanning calorimetry (DSC) or wide-angle X-ray diffraction. Here, having crystallinity means that the heat of crystallization of the above-described block copolymer, as measured by differential scanning calorimetry after film formation, is 0.1 J/g or more, or that the degree of crystallinity of the above-described block copolymer, as measured by wide-angle X-ray diffraction, is 0.5% or more. That is, in the present invention, "having crystallinity" means that the polymer is capable of being crystallized when heated, has a crystallizable property, or has already been crystallized. In addition, an amorphous polymer means that the polymer is not crystalline, or that the polymer substantial does not become crystallized. Accordingly, even if a polymer is crystalline, but if the polymer is not crystallized sufficiently, the state of the polymer at that point of time is an amorphous state in some cases.

(Ionic Segment)

A block copolymer according to the present invention contains an ionic segment having an aromatic hydrocarbon polymer. Being a hydrocarbon means being other than a perfluoro substance, and an aromatic hydrocarbon polymer means a polymer other than a perfluoro polymer, and constituted mainly of an aromatic ring.

In the present invention, the aromatic ring contained in the aromatic hydrocarbon polymer may contain not only a hydrocarbon aromatic ring but also a hetero ring. In addition, the polymer may be constituted partially of an aliphatic unit together with the aromatic ring unit. Specific examples of the aromatic hydrocarbon polymer include polymers having, in the main chain, a structure selected from polysulfone, polyether sulfone, polyphenylene oxide, a polyarylene ether polymer, polyphenylene sulfide, polyphenylene sulfide sulfone, polyparaphenylene, a polyarylene polymer, polyarylene ketone, polyether ketone, polyarylene phosphine phoxide, polyether phosphine phoxide, polybenzoxazole, polybenzothiazole, polybenzimidazole, polyamide, polyimide, polyetherimide, and polyimidesulfone together with an aromatic ring. Among these, aromatic polyether polymers are preferable from the viewpoints of cost and polymerizability.

An aromatic polyether polymer refers to a polymer constituted mainly of an aromatic ring, in which polymer the repeating unit contains at least an ether bond as a mode of linking an aromatic ring unit. Examples of the structure of the aromatic polyether polymer include, but are not limited to, an aromatic polyether, aromatic polyether ketone, aromatic polyether ether ketone, aromatic polyether ketone ketone, aromatic polyether ether ketone ketone, aromatic polyether ketone ether ketone ketone, aromatic polyether imide, aromatic polyether sulfone, and the like. From the viewpoints of chemical stability and cost, an aromatic polyether ketone polymer and a polyether sulfone polymer are preferable, and from the viewpoints of mechanical strength, dimensional stability, and physical durability, an aromatic polyether ketone polymer is most preferable.

An aromatic polyether ketone polymer refers to a polymer constituted mainly of an aromatic ring, in which polymer the repeating unit contains at least an ether bond and a ketone bond as modes of linking an aromatic ring unit.

An aromatic polyether sulfone polymer refers to a polymer constituted mainly of an aromatic ring, in which polymer at least an ether bond and a sulfone bond are contained as modes of linking an aromatic ring unit.

An ionic segment to be used in the present invention can be synthesized by aromatic nucleophilic substitution reaction, coupling reaction, or the like.

A method of adjusting Mn1 to more than 50,000 is not particularly limited as long as the method can achieve a molecular weight of interest. Examples include: the above-described method in which a segment having a number-average molecular weight of more than 50,000 is synthesized by an aromatic nucleophilic substitution reaction or a coupling react; the above-described method in which a polymer having a number-average molecular weight smaller than a number-average molecular weight of interest is synthesized, and the polymers, used as constituent units of a segment, are linked with each other by a linker (L1); and the like. Because of the smaller restriction in processes, a method in which the polymers are linked with each other by a linker is particularly preferable.

For example, in cases where polymers having a number-average molecular weight of 30,000 are used as constituent units, which are linked via the linker (L1), the constituent units, when in the form of a dimer, become a segment having a number-average molecular weight of 60,000, and the constituent units, when in the form of a trimer, become a segment having a number-average molecular weight of 90,000.

The constituent units linked via the linker (L1) may be the same constituent units between each other or a combination of a plurality of different constituent units.

In cases where an ionic segment to be used in the present invention is synthesized by linking a plurality of constituent units via the above-described linker (L1), the ionic segment is represented by the following general formula (C1), wherein the constituent unit of a polymer containing the ionic group is represented by (A), and the linker is represented by (L1).

[Chem. 18]

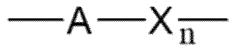
(C1)

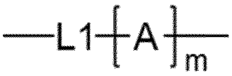
(C2)

In the general formula (C1), X is a structure represented by the general formula (C2), and n represents an integer of 1 or greater. In the general formula (C2), m represents an integer of 1 or greater. In cases where n is 2 or greater, a plurality of m's may be the same or different. In cases where m is 2 or greater, such a case means that two or more structures, -A-, are bound to L1. This means that the ionic segment has a branched structure.

To obtain the above-described ionic segment, a compound to serve as the linker (L1) site needs to be a highly reactive compound such as can link the constituent units with each other while inhibiting the randomization of the copolymer and the scission of the segment. In view of this, (L1) preferably has, but is not limited to, a structure such as the following general formulae (M1) to (M8).

[Chem. 19]

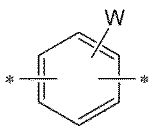
(M1)

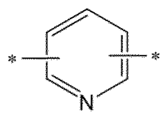
(M5)

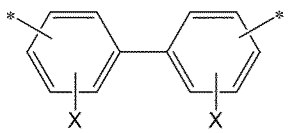
(M2)

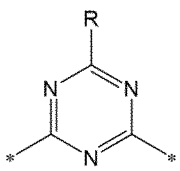
(M6)

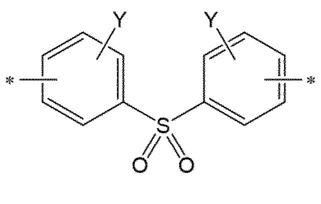
(M3)

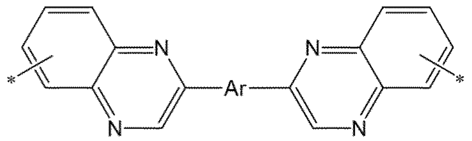
(M7)

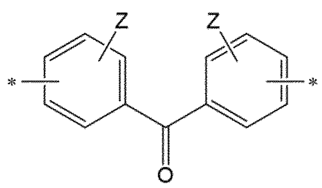
(M4)

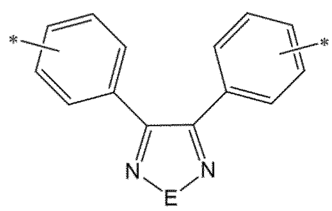
(M8)

In the general formulae (M1) to (M4), W to Z independently represent a group selected from the group consisting of H, $NO_2$, CN, $CF_3$, F, Cl, Br, and I; in the general formula (M6), R represents an arbitrary organic group; in the general formula (M7), Ar represents an arbitrary arylene group; and in the general formula (M8), E represents an oxygen atom or a sulfur atom. The general formulae (M1) to (M8) may be further substituted with an electron-withdrawing group. The symbol * represents a linking site between any one of the general formulae (M1) to (M8) and a constituent unit A.

Such a compound that gives (L1) as above-described (hereinafter referred to as a "linker compound") is preferably, but not limited to, at least one selected from the following general formulae (N1) to (N8). In the present invention, examples of the linker compound include a dihalide compound and a multihalide compound that each result in a linker site after reaction. The multihalide compound refers to a compound having three or more halides as substituents. In cases where a straight-chain ionic segment is desired to be obtained, a dihalide compound is preferably used as a linker.

In cases where a branched structure is desired to be formed in an ionic segment, a multihalide compound is preferably used as a linker. In addition, a dihalide compound and a multihalide compound may be used in combination.

[Chem. 20]

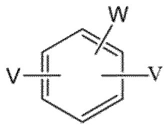 (N1)

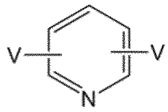 (N5)

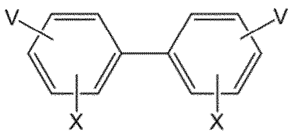 (N2)

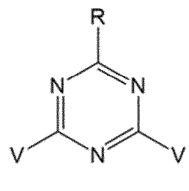 (N6)

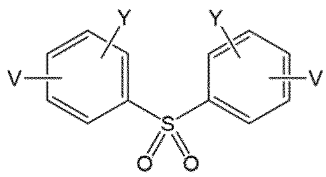 (N3)

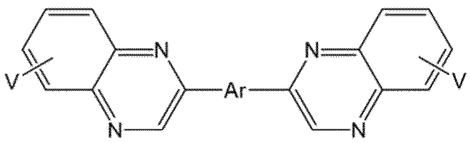 (N7)

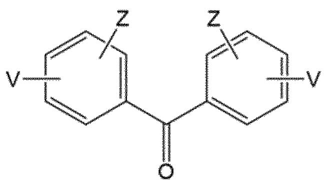 (N4)

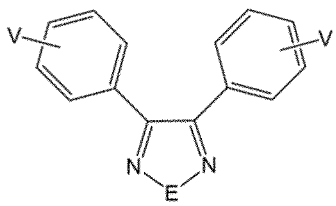 (N8)

In the general formulae (N1) to (N8), V represents Cl or F. W to Z, R, Ar, and E, are the same as in the general formulae (M1) to (M8).

In a block copolymer according to the present invention, the ionic segment preferably contains a structure represented by the above-described general formula (S 1), from the viewpoints of dimensional stability, mechanical strength, and chemical stability.

One specific example of such an ionic segment is an ionic segment that is a structure represented by the general formula (C1), in which A in the structure contains a structure represented by the general formula (S 1). In this case, the structure represented by the general formula (S 1) is a constituent unit of the ionic segment. In addition, the constituent unit may contain a structure other than represented by the general formula (S1).

In addition, other specific examples include an ionic segment that, as a whole, contains a structure represented by the general formula (S1). In addition, the ionic segment may contain a structure other than represented by the general formula (S1).

Herein, examples of the aromatic ring preferable for $Ar^1$ to $Ar^4$ include, but are not limited to: hydrocarbon arylene groups such as a phenylene group, naphthylene group, biphenylene group, and fluorenediyl group; and heteroarylene groups such as pyridinediyl, quinoxalinediyl, and thiophenediyl; and the like.

The ionic group to be used for a block copolymer according to the present invention is preferably an atomic group having a negative charge, and preferably has a proton exchange capability. Such a functional group is preferably a sulfonic group, sulfonimide group, sulfate group, phosphonic group, phosphate group, or carboxylic group, as described in (f1) to (f7) above.

The block copolymer can contain two or more of these ionic groups, the combination of which can be suitably determined in accordance with the polymer structure or the like. Above all, it is more preferable that the polymer contains at least a sulfonic group, a sulfonimide group, or a sulfate group, from the viewpoint of high proton conductivity, and it is most preferable that the polymer contains a sulfonic group, from the viewpoint of raw material cost.

In a block copolymer according to the present invention, a structure represented by the general formula (S1)

is preferably a structure represented by the above-described general formula (P1), from the viewpoints of dimensional stability, raw material availability, and still more preferably a structure represented by the above-described general formula (S2), from the viewpoints of raw material availability and polymerizability.

The amount of a constituent unit represented by the general formula (S 1) and contained in the ionic segment is more preferably 20 mol% or more, still more preferably 50 mol% or more, most preferably 80 mol% or more.

A monomer that can be preferably used to synthesize a constituent unit of such an ionic segment as above-described is such a monomer as above-described and the like.

Preferable examples of a structure that is other than a structure represented by the general formula (S 1), and may be contained as an ionic segment or a constituent unit constituting an ionic segment include an aromatic polyether ketone copolymer structure composed of a structure represented by the following general formulae (T1) and (T2).

[Chem. 21]

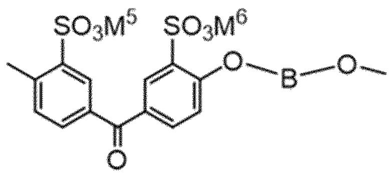

(T1)

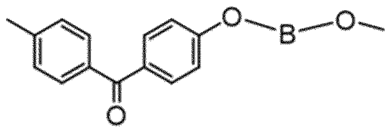

(T2)

In the general formulae (T1) and (T2), B represents a divalent organic group containing an aromatic ring. $M^5$ to $M^6$ independently represent a hydrogen atom, metal cation, or ammonium cation.

In this aromatic polyether ketone copolymer, changing the compositional ratio of the constituent units represented by the general formulae (T 1) and (T2) makes it possible to control the ion exchange capacity.

Among others, an ionic segment having a structure represented by the general formula (P1) and structures represented by the general formulae (T1) and (T2) is particularly preferable. Assuming that, in such an ionic segment, the amounts of the constituent units represented by the general formulae (P1), (T1), and (T2) are p1, t1, and t2 respectively, p1 is preferably 75 parts by mole or more, more preferably 90 parts by mole or more, still more preferably 100 parts by mole or more, with respect to 100 parts by mole of the total molar amount of t1 and t2.

Examples of the divalent organic group B containing an aromatic ring in the general formulae (T1) and (T2) include: a residue of various divalent phenol compounds that can be used to polymerize an aromatic polyether polymer by aromatic nucleophilic substitution reaction; and such a residue into which a sulfonic group has been introduced.

Specific suitable examples of the divalent organic group B containing an aromatic ring include, but are not limited to, a group represented by the following general formulae (X'-1) to (X'-6).

[Chem. 22]

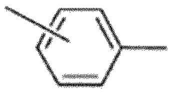

(X'-1)

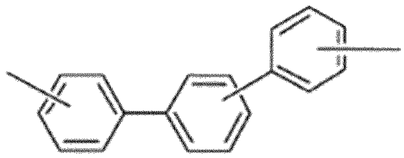

(X'-4)

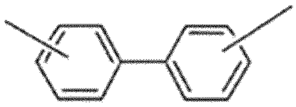

(X'-2)

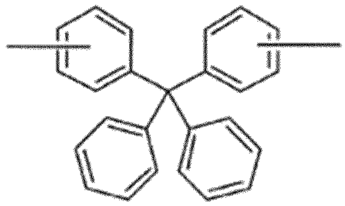

(X'-5)

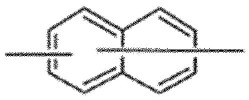

(X'-3)

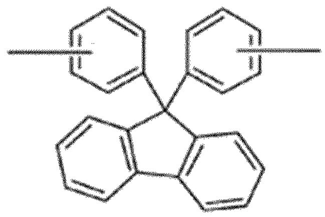

(X'-6)

These may have an ionic group or an aromatic group. In addition, these can be used in combination, as required. Among these, groups represented by the general formulae (X'-1) to (X'-4) are more preferable, and groups represented by the general formulae (X'-2) and (X'-3) are most preferable, from the viewpoints of crystallinity, dimensional stability, toughness, and chemical stability.

(Nonionic Segment)

In the block copolymer according to the present invention, the nonionic segment preferably has an aromatic polyether polymer. Examples of known aromatic polyether polymer structures include, but are not limited to, an aromatic polyether, aromatic polyether ketone, aromatic polyether ether ketone, aromatic polyether ketone ketone, aromatic polyether ether ketone ketone, aromatic polyether ketone ether ketone ketone, aromatic polyether imide, aromatic polyether sulfone, and the like. The aromatic polyether polymer contains at least an aromatic group and an ether bond as repeating unit structures.

In a block copolymer according to the present invention, the nonionic segment is more preferably an aromatic polyether ketone polymer from the viewpoints of mechanical strength, dimensional stability, and physical durability.

In a block copolymer according to the present invention, the nonionic segment preferably contains a structure represented by the above-described general formula (S3), from the viewpoints of dimensional stability, mechanical strength, and chemical stability.

In the block copolymer according to the present invention, the structure represented by the general formula (S3) preferably contains a structure represented by the following formula (P2), from the viewpoint of raw material availability. Among these, it is still more preferable to contain a constituent unit represented by the above-described formula (S4), from the viewpoints of mechanical strength, dimensional stability, and physical durability that are due to crystallinity.

The amount of a structure represented by the general formula (S3) or (S4) and contained in the nonionic segment is preferably larger, preferably 20 mol% or more, more preferably 50 mol% or more, still more preferably 80 mol% or more. The amount of 20 mol% or more makes it possible to sufficiently obtain the effects of the present invention with respect to the mechanical strength, dimensional stability, and physical durability that are due to the crystallinity.

A block copolymer according to the present invention is preferably constituted of an ionic segment containing a constituent unit represented by the general formula (S 1) and a block copolymer having a nonionic segment containing a constituent unit represented by the general formula (S3).

In cases where the nonionic segment contains a constituent unit represented by the general formula (S3), the segment exhibits crystallinity. The block copolymer containing such a nonionic segment can be produced, for example, by molding a block copolymer precursor in which a protective group is introduced into at least a nonionic segment, and then deprotecting at least part of the protective group contained in the molded product. A block copolymer more tends

to have poor processability than a random copolymer owing to the crystallization of the polymer having a domain formed therein, and accordingly, it is preferable to introduce a protective group into at least a nonionic segment to enhance the processability, and, in a case where the processability becomes poorer, a protective group is preferably introduced also into the ionic segment.

Examples of such a protective group that can be preferably used include such a protective group as above-mentioned.

A block copolymer according to the present invention is a block copolymer in which two or more kinds of segment chains incompatible with each other, that is, a hydrophilic segment containing an ionic group and a hydrophobic segment containing no ionic group are linked to form one polymer chain. In the block copolymer, the short-distance interaction caused by the repulsion between chemically different segment chains causes phase separation into nano- or micro-domains composed of the respective segment chains. Then, the segment chains are covalently bound to each other, thus causing a long-distance interaction, and this effect causes each domain to be arranged in a specifically ordered manner. A higher-order structure produced by aggregation of domains composed of the respective segment chains is called a nano- or micro-phase-separation structure. Here, the domain means a mass formed by aggregation of similar segments in one or a plurality of polymer chains. For the ionic conduction of the polymer electrolyte membrane, the spatial arrangement of the ion-conductive segment in the membrane, that is, the nano- or micro-phase-separation structure is important.

The ionic segment having a number-average molecular weight Mn1 of more than 50,000 in a block copolymer according to the present invention makes it possible to obtain the effects of the invention sufficiently. This is considered to be because, as the number-average molecular weight of the ionic segment rises, the aggregability of each segment increases during the formation of a phase-separation structure, thus forming a phase-separation structure suitable for proton conduction.

Mn1 and Mn2 that satisfy $2 < Mn1 / Mn2 < 7$ enable the block copolymerization reaction to progress suitably, make it possible to obtain a block copolymer having a high molecular weight, make it possible to form a phase-separation structure suitable for proton conduction, and thus, are preferable.

From the viewpoints of block copolymerizability and the formation of a phase-separation structure, it is more preferable that the relation of: $3 \leq Mn1 / Mn2 < 7$ is additionally satisfied.

The block copolymer according to the present invention preferably contains one or more linker (L2) sites that link the ionic segment with the nonionic segment. In the present invention, the linker (L2) is a site that links the ionic segment with the nonionic segment, and is defined as a site different in the chemical structure from the ionic segment and the nonionic segment.

The linker (L2) may have the same structure as the above-described linker (L1), or may have a different structure. This linker (L2) links different segments while inhibiting the randomization of the copolymer due to an ether exchange reaction, the scission of the segment, a side reaction that can occur during the synthesis of a copolymer, and the like. Accordingly, using, as a raw material, a compound that gives such a linker (L2) makes it possible to obtain a block copolymer without decreasing the molecular weight of each segment.

Specific suitable examples of the linker (L2) include decafluorobiphenyl, hexafluorobenzene, 4,4'-difluorodiphenyl sulfone, 2,6-difluorobenzonitrile, and the like, but are not limited to these in the present invention.

The ion exchange capacity of a block copolymer according to the present invention is preferably 0.1 to 5 meq/g, more preferably 1.5 meq/g or more, most preferably 2 meq/g or more, from the viewpoint of a balance between proton conductivity and water resistance. In addition, the ion exchange capacity is more preferably 3.5 meq/g or less, most preferably 3 meq/g or less.

The ion exchange capacity of the ionic segment is preferably higher from the viewpoint of proton conductivity under low-humidity conditions, and the lower value is preferably 2.5 meq/g or more, more preferably 3 meq/g or more, still more preferably 3.5 meq/g or more. In addition, the upper value is preferably 6.5 meq/g or less, more preferably 5 meq/g or less, still more preferably 4.5 meq/g or less.

The ion exchange capacity of the nonionic segment is preferably lower from the viewpoints of hot-water resistance, mechanical strength, dimensional stability, and physical durability, and the upper value is preferably 1 meq/g or less, more preferably 0.5 meq/g or less, still more preferably 0.1 meq/g or less.

Specific methods of synthesizing a block copolymer composed of an ionic segment and a nonionic segment will be illustrated. However, the present invention is not limited to these.

Each segment to be used in the present invention is preferably synthesized by an aromatic nucleophilic substitution reaction from the viewpoint of easiness in processes. The aromatic nucleophilic substitution reaction is a method in which a monomer mixture of a dihalide compound and a diol compound is allowed to react in the presence of a basic compound. The polymerization can be performed in the temperature range of from 0 to 350°C, preferably at a temperature of 50 to 250°C.

The reaction can be performed in the presence of no solvent, but preferably performed in the presence of a solvent. Examples of solvents that can be used include: aprotic polar solvents such as *N,N*-dimethylacetoamide, *N,N*-

dimethylformamide, *N*-methyl-2-pyrrolidone, dimethyl sulfoxide, sulfolane, 1,3-dimethyl-2-imidazolidinone, and hexamethylphosphon triamide. The solvent is not limited to these, and can be a solvent that can be used as a stable solvent in an aromatic nucleophilic substitution reaction. These organic solvents may be used singly or in mixture of two or more kinds thereof.

Examples of basic compounds include sodium hydroxide, potassium hydroxide, sodium carbonate, potassium carbonate, sodium hydrogencarbonate, potassium hydrogencarbonate, and the like. Without limitation to these, a basic compound that makes it possible to form a diol into an active phenoxide structure can be used. In addition, to increase the nucleophilicity of the phenoxide, a crown ether such as 18-crown-6 is suitably added. In some cases, a crown ether coordinates to a sodium ion or potassium ion of a sulfonic group to enhance the solubility of the sulfonate moiety of a monomer or a polymer in an organic solvent, and thus, can be preferably used.

In an aromatic nucleophilic substitution reaction, water is generated as a byproduct in some cases. In this case, it is also possible that, independent of a polymerization solvent, toluene or the like is allowed to coexist in a reaction system to form an azeotrope, in the form of which water can be removed out of the system. In a method of removing water out of the system, a water absorbing agent such as a molecular sieve can be used.

A block copolymer according to the present invention can be produced, for example, by synthesizing a block copolymer precursor, and then deprotecting at least part of the protective groups contained in the precursor. A method of producing a block copolymer and a block copolymer precursor according to the present invention preferably includes at least the following steps (1) to (2). Including these steps makes it possible to achieve the enhancement of mechanical strength and durability due to a higher molecular weight, and introducing both segments alternately makes it possible to obtain a block copolymer in which the phase-separation structure and the size of the domain are strictly controlled, and which has excellent low-humidity proton conductivity.

(1) A step in which OM groups at both ends of a segment are allowed to react with linker compounds to introduce linker sites into both ends of the segment, in which the segment is one of an ionic segment having OM groups (M represents a hydrogen atom, metal cation, or ammonium cation) at both ends thereof and a nonionic segment having -OM groups at both ends thereof.
(2) A step in which the linker sites introduced into both ends of one of the segments synthesized in (1) are polymerized with the -OM groups at both ends of the other segment to produce a block copolymer or block copolymer precursor having an ionic segment and a nonionic segment.

Specific examples of the segment both ends of which are each a -OM group, and which is represented by the general formula (S1) and the segment both ends of which are each a -OM group, and which is represented by the general formula (S2) include segment structures represented by the following formulae (H3-1) and (H3-2) respectively. In addition, examples of a structure formed by allowing a segment having a structure represented by each of the formulae (H3-1) and (H3-2) to react with a halide linker include a structure represented by each of the following formulae (H3-3) and (H3-4) respectively. However, the present invention is not limited to these.

[Chem. 23]

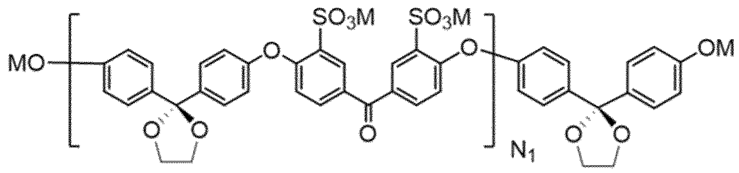

(H3-1)

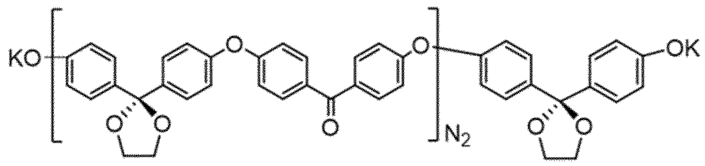

(H3-2)

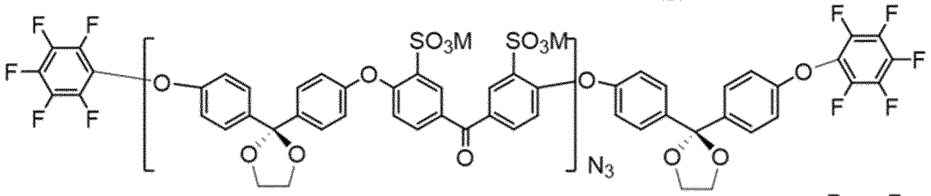

(H3-3)

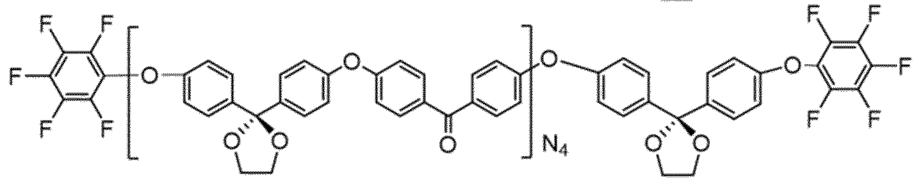

(H3-4)

In the formulae (H3-1) to (H3-4), $N_1$, $N_2$, $N_3$, and $N_4$ independently represent an integer of 1 to 200.

In cases where the ionic segment has a linker (L1), specific examples of the ionic segment obtained by the step (1), and having a linker site introduced thereinto include structures represented by the following formulae (H3-1L) and (H3-3L). However, the present invention is not limited to these.

[Chem. 24]

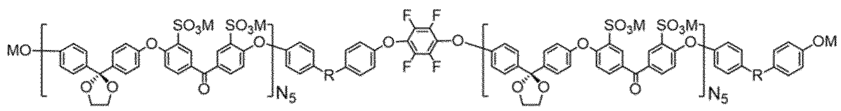

(H3-1L)

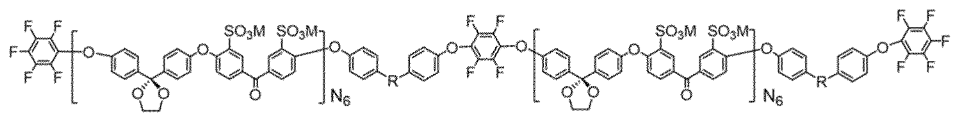

(H3-3L)

In the formulae (H3-1L) to (H3-3L), $N_5$ and $N_6$ independently represent an integer of 1 to 200.

In the formulae (H3-1) to (H3-4), (H3-1L), and (H3-3L), a halogen atom is represented by F, a -OM end group is represented by a -OK group, and an alkali metal is represented by one of Na and K, but the components can be used without limitation to these. In addition, these formulae are inserted in order to help the readers' understanding, and do not always accurately represent the chemical structures, accurate compositions, and arrangements of the polymerization components of a polymer and the position, number, molecular weight, and the like of a sulfonic group. The materials are not limited to these formulae.

Furthermore, in the formulae (H3-1) to (H3-4), (H3-1L), and (H3-3L), a ketal group is introduced as a protective group into each of the segments, but in the present invention, a protective group can be introduced into a component having high crystalline and low solubility. Accordingly, the above-described ionic segment does not always need a protective group, and an ionic segment having no protective group can be preferably used from the viewpoints of physical durability and dimensional stability.

A block copolymer according to the present invention is used as a polymer electrolyte material to be made into a molded polymer electrolyte product or a polymer electrolyte membrane, and thus, can be used in various applications.

A block copolymer according to the present invention is preferably a molded product having a co-continuous phase-separation structure. The form of the molded product is not particularly limited, and is, for example, a binder, fiber, membrane, rod, or the like in the catalyst layer of an electrode. Among these, a membrane and a binder are

preferable, and a membrane is particularly preferable.

The phase-separation structure can be formed through controlling the state of aggregation of each of the ionic segment and the nonionic segment and the shape of the aggregation. Examples of the form of the phase-separation structure include a cylindrical structure, sea-island structure, lamellar structure, and co-continuous structure. Among others, the block copolymer that is a molded product having a co-continuous structure makes it possible to form a three-dimensionally continuous proton conduction channel, and thus to achieve excellent proton conductivity. In addition, a nonionic hydrophobic segment forms a three-dimensional continuous domain in the same manner, and thus, has excellent fuel-blocking capability, solvent resistance dimensional stability, mechanical strength, and physical durability.

The phase-separation structure can be analyzed by transmission electron microscopy (TEM), small-angle X-ray scattering (SAXS), atomic force microscopy (AFM), or the like.

A polymer electrolyte membrane produced using a block copolymer according to the present invention as an electrolyte preferably has a co-continuous phase-separation structure. Controlling the state of aggregation of each of the ionic segment and the nonionic segment and the shape of the aggregation makes it possible to achieve excellent proton conductivity even under low-humidity conditions. The phase-separation structure can be analyzed by transmission electron microscopy (TEM), small-angle X-ray scattering (SAXS), atomic force microscopy (AFM), or the like.

For a polymer electrolyte membrane that are each produced using a block copolymer according to the present invention, it is preferable that the phase-separation structure is recognized when observed by TEM at 50,000 times, and that the average period size metered by image processing is 8 nm or more and 300 nm or less. Among these, the average period size is more preferably 10 nm or more and 200 nm or less, most preferably 15 nm or more and 150 nm or less.

Common matters between a polymer electrolyte membrane according to the present invention and a polymer electrolyte membrane produced using a block copolymer according to the present invention will now be described.

A polymer electrolyte membrane according to the present invention can be produced by a method in which a membrane is formed from a solution in a stage in which the polymer has a protective group such as a ketal; a method in which a membrane is formed from the molten polymer; and the like. The former method is, for example, a method in which the polymer electrolyte material is dissolved in a solvent such as N-methyl-2-pyrrolidone, the resulting solution is applied by cast coating to a glass plate or the like, and the solvent is removed to give a membrane.

A solvent to be used to form a membrane is desirably a solvent that can dissolve a block copolymer, and then removed. Examples of the solvent to be used suitably include: aprotic polar solvents such as N,A-dimethylacetoamide, *N,N*-dimethylformamide, N-methyl-2-pyrrolidone, dimethyl sulfoxide., sulfolane, 1,3-dimethyl-2-imidazolidinone, and hexamethylphosphon triamide; ester solvents such as $\gamma$-butyrolactone and butyl acetate; carbonate solvents such as ethylene carbonate and propylene carbonate; alkylene glycol monoalkyl ethers such as ethylene glycol monomethyl ether, ethylene glycol monoethyl ether, propylene glycol monomethyl ether, and propylene glycol monoethyl ether; alcohol solvents such as isopropanol; water; and mixtures thereof. Aprotic polar solvents have the highest solubility, and are preferable. In addition, to increase the solubility of the ionic segment, a crown ether such as 18-crown-6 is suitably added.

In addition, in cases where a solution is formed into a membrane using a block copolymer in the present invention, the selection of a solvent is important with respect to the phase-separation structure, and using a mixture of an aprotic polar solvent and a solvent having low polarity is a suitable method.

A method in which a polymer solution prepared so as to have a required solid concentration is filtrated by normal pressure filtration, pressure filtration, or the like to remove foreign matter from the polymer electrolyte solution is preferable to afford a tough membrane. A filter medium to be used here is subject to no particular limitation, and is suitably a glass filter or a metallic filter.

In the filtration, the minimum pore diameter that allows the polymer solution to pass through the filter is preferably 1 $\mu$m or less.

Examples of a method of converting a block copolymer in the present invention to a polymer electrolyte membrane include a method in which a membrane constituted of the block copolymer is formed by the above-described technique, and then, at least part of the sites protected with protective groups are deprotected. For example, in cases where the material has ketal sites as protective groups, at least part of the ketone sites protected with ketals are deprotected to be restored to ketone sites. This method makes it possible to form a membrane with a solution of a block copolymer lacking in solubility, and to achieve proton conductivity together with mechanical strength and physical durability.

In addition, molding an electrolyte membrane in a state in which the ionic group contained is in the form a salt with a cation of an alkali metal or an alkaline earth metal may be followed by a step in which the cation of the alkali metal or the alkaline earth metal is exchanged with a proton. This step is preferably a step in which a membrane molded is brought in contact with an acidic aqueous solution, more preferably, in particular, a step in which a membrane molded is immersed in an acidic aqueous solution. In this step, the proton in the acidic aqueous solution is substituted with the cation that is ionically bonded to the ionic group, and residual water-soluble impurities, residual monomers, solvents,

residual salts, and the like are simultaneously removed.

The acidic aqueous solution is not particularly limited, and sulfuric acid, hydrochloric acid, nitric acid, acetic acid, trifluoromethanesulfonic acid, methanesulfonic acid, phosphoric acid, citric acid, or the like is preferably used. The temperature and concentration of the acidic aqueous solution are appropriately determined. From the viewpoint of productivity, it is preferable to use an aqueous solution of 3 mass% or more and 30 mass% or less sulfuric acid at a temperature of 0°C or more and 80°C or less.

The thickness of a polymer electrolyte membrane according to the present invention is more preferably 1 μm or more to obtain the mechanical strength and physical durability of a membrane suitable for practical use, and is preferably 2,000 μm or less to decrease the resistance of the membrane, that is, to enhance the power generation performance. The still more preferable range of the thickness of the membrane is 3 μm or more and 200 μm or less. The thickness of the membrane can be controlled on the basis of the concentration of the solution or the thickness of the coating on the base plate.

In addition, a polymer electrolyte membrane in the present invention may contain an additive to be used for an ordinary polymer compound, such as a crystallization nucleating agent, plasticizer, stabilizer, antioxidant, or mold release agent to the extent that is not contrary to an object of the present invention.

In addition, for the purpose of enhancing the mechanical strength, thermal stability, processability, and the like, a polymer electrolyte membrane in the present invention may contain various kinds of polymer, elastomer, filler, microparticle, additive, and/or the like to the extent that does not adversely affect the various characteristics mentioned earlier. In addition, the polymer electrolyte membrane may be reinforced with a microporous membrane, nonwoven fabric, mesh, or the like.

A polymer electrolyte membrane according to the present invention can be used in various uses. For example, the polymer electrolyte membrane can be used for medical uses such as artificial skin, filtration uses, ion-exchange resin uses such as chlorine-resistant reverse osmosis membranes, various structural material uses, electrochemical uses, humidifying membranes, antifogging films, antistatic films, deoxidation films, solar battery films, and gas barrier films. Above all, the polymer electrolyte membrane can be more preferably used in various electrochemical uses. Examples of the electrochemical uses include polymer electrolyte fuel cells, redox-flow batteries, water electrolysis apparatuses, chlor-alkali electrolysis apparatuses, electrochemical hydrogen pumps, and water electrolysis hydrogen generators.

In the polymer electrolyte fuel cell, electrochemical hydrogen pump, or water electrolysis hydrogen generator, the polymer electrolyte membrane is used in the form of a structure having a catalyst layer, electrode substrate, and separator sequentially stacked on both sides of the polymer electrolyte membrane. Among these, an electrolyte membrane on each of both sides of which a catalyst layer is stacked (that is, a laminate having a layer structure of catalyst layer/electrolyte membrane/catalyst layer) is referred to as a catalyst coated membrane (CCM). Furthermore, a laminate including a catalyst layer and a gas diffusion substrate sequentially stacked on each of both sides of the electrolyte membrane (that is, a laminate having a layer structure of gas diffusion substrate/catalyst layer/electrolyte membrane/catalyst layer/gas diffusion substrate) is referred to as a membrane electrode assembly (MEA). A block copolymer and a polymer electrolyte membrane according to the present invention are particularly suitably used as a polymer electrolyte membrane that constitutes such a CCM or MEA.

EXAMPLES

(1) Molecular Weight of Polymer

The number-average molecular weight and weight-average molecular weight of a polymer were measured by GPC. Using HLC-8022GPC manufactured by Tosoh Corporation as an integrated device of an ultraviolet detector and a differential refractometer, using a TSKgel Guard Column SuperH-H column (having an inner diameter of 4.6 mm and a length of 3.5 cm) manufactured by Tosoh Corporation as a guard column, and using two TSKgel SuperHM-H columns (having an inner diameter of 6.0 mm and a length of 15 cm) manufactured by Tosoh Corporation as GPC columns, the measurement was performed with an *N*-methyl-2-pyrrolidone solvent (*N*-methyl-2-pyrrolidone solvent containing 10 mmol/L lithium bromide) at a sample concentration of 0.1 wt%, at a flow rate of 0.2 mL/min, at a temperature of 40°C, and at a measuring wavelength of 265 nm, and the number-average molecular weight and the weight-average molecular weight were determined in terms of standard polystyrene.

(2) Ion Exchange Capacity (IEC)

The ion exchange capacity was measured by the neutralization titration method described in 1] to 4] below. The measurement was performed three times, and the average of the three measurements was adopted.

1] A block copolymer was subjected to proton exchange, and thoroughly washed with pure water, and water was wiped off. Then, the block copolymer was vacuum-dried at 100°C for 12 hours or more, and the dry weight of the membrane was obtained.
2] To the block copolymer, 50 mL of an aqueous 5 wt% sodium sulfate solution was added, and the resulting mixture was left to stand for 12 hours to undergo ion exchange.
3] The sulfuric acid generated was titrated using an aqueous 0.01 mol/L sodium hydroxide solution. A commercially available 0.1 w/v% phenolphthalein solution for titration was added as an indicator, and the point at which the solution turned pale red-purple was taken as the end point.
4] The IEC was determined in accordance with the following formula.

$$\text{IEC (meq/g)} = [\text{concentration (mmol/mL) of aqueous sodium hydroxide solution} \times \text{dropping amount (mL) of aqueous sodium hydroxide solution}] / \text{dry weight (g) of sample}$$

(3) Rate of Dry-wet Dimensional Change

A membraneous sample piece having a size of 3 mm × 20 mm was taken. The sample piece was placed in the sample holder of a thermomechanical analyzer TMA/SS6100 (manufactured by Hitachi High-Tech Science Corporation) having an oven with a temperature and humidity regulating function in such a manner that the long side of the sample piece was in the direction of measurement. The analyzer was set in such a manner that a stress of 20 mN was applied. In the oven, the sample was made steady at 23°C and at 50% RH for 1 hour, and the length of this sample piece was regarded as the zero point. The temperature in the oven was fixed at 23°C, the humidity was adjusted to 30% RH (a dry condition) over a period of 30 minutes, and the sample piece was held for 20 minutes. Next, the humidity was adjusted to 90% RH (a humidified condition) over a period of 30 minutes. This dry-wet cycle (30% RH-90% RH) was regarded as one cycle, and a difference at the 10th cycle between the rate (%) of dimensional change under the 30% RH and the rate (%) of dimensional change under the 90% RH was regarded as the rate (%) of dry-wet dimensional change.
The rate of dry-wet dimensional change is preferably 7.0% or less, more preferably 6.5% or less, particularly preferably 6.0% or less.

(4) Observation of Phase-separation Structure by Transmission Electron Microscope (TEM)

A sample piece was immersed in an aqueous 2 wt% lead acetate solution as a staining agent, and left to stand at 25°C for 72 hours. The sample stained was taken out, and embedded in an epoxy resin. An 80 nm thin piece was cut out using an ultramicrotome at room temperature, and the thin piece obtained was collected on a Cu grid to be used for TEM observation. The observation was performed at an accelerating voltage of 100 kV, and a photograph was taken at a photographic magnification of ×20,000 and ×40,000. The device used was HT7700 (manufactured by Hitachi High-Technologies Corporation). In addition, the TEM image was transformed by fast Fourier transform (FFT). From the ring-like FFT pattern obtained, the spatial frequencies in the TD direction were measured. From the results of measurement, the average period length of the phase-separation was calculated. As the spatial frequency, the distance from the center of the image to the center of the thickness of the ring was measured. For the FFT and the distance measurement, a DigitalMicrograph (manufactured by Gatan, Inc.) was used.

(5) Observation of Phase-separation Structure by Transmission Electron Microscopic (TEM) Tomography

A thin piece sample made by the method described in (4) above was mounted on a collodion membrane, and observed under the following conditions.
Device: field emission electron microscope (HRTEM) JEM 2100F manufactured by JEOL Ltd.

Image-capturing: DigitalMicrograph (manufactured by Gatan, Inc.)
System: a marker method
Accelerating voltage: 200 kV
Photographic magnification: 30,000 times
Angle of tilt: +60° to -62°
Reconstruction resolution: 0.71 nm/pixel

The marker method was applied to the three-dimensional reconstruction process. An alignment marker used for performing three-dimensional reconstruction was Au colloidal particles provided on a collodion film. Using the marker as a reference, the sample was tilted in 1° steps in the range of from +61° to -62°, and TEM images were taken. On the basis of a total of 124 TEM images obtained from the continuous tilt image series, a CT reconstruction process was performed, and a three-dimensional phase-separation structure was observed.

(6) Proton Conductivity

A carbon paste (G7711, manufactured by EM Japan Co., Ltd.) based on isopropanol was applied to a platinum electrode of a cell, and onto the carbon paste, a diffusion layer electrode (ELAT GDL 140-HT, manufactured by E-TEK) cut to 18 mm × 6 mm was attached. An electrolyte membrane cut to 30 mm × 8 mm was disposed between the electrodes of the cell, and the cell was fastened at 1 MPa, and housed in the chamber of MTS740. The proton resistance of the electrolyte membrane in the direction of the thickness of the membrane was evaluated using an MTS740 membrane resistance measurement system (manufactured by Scribner Associates Inc.). In the MTS740, the cell was housed in the chamber with the temperature controlled, and air gas was supplied to the chamber through a humidifier using a mass flow controller. To the cell, a frequency response analyzer PSM1735 (manufactured by Newtons4th Ltd.) was connected, and it was possible that the resistance was determined with the A/C signal swept from 1 MHz to 1 KHz.

MTS740 and PSM1735 were connected to a personal computer, and were controllable with software. The temperature in the chamber was set at 80°C, then air gas at 90% RH was supplied to the chamber, and the cell was held for 1 hour to wet the electrolyte membrane sufficiently. Then, air at 20% RH was supplied to dry the cell, air at 30% RH was supplied, the cell was held for 30 minutes, and the resistance was measured. When this was done, the frequency was swept from 1 MHz to 1 KHz. Then, air at 80% RH was supplied, the cell was held for 30 minutes, and the resistance was measured in the same manner. From the data of the resistance measured, a Cole-Cole plot was prepared. The frequency band at and around 1 MHz is influenced by the inductance component of a cable connecting the cell to PSM1735, and thus, a value on the real axis at 200 kHz, at which the influence is smaller, was regarded as the resistance value (Ω). The proton conductivity determined when air at 30% RH was supplied was regarded as a low-humidity proton conductivity, and the proton conductivity determined when air at 80% RH was supplied was regarded as a high-humidity proton conductivity. The resistance values measured were used to calculate the proton conductivity in accordance with the following equation.

$$\text{Proton conductivity (mS/cm)} = 1 / (\text{resistance value } (\Omega) \times \text{active area } (\text{cm}^2) / \text{thickness of sample (cm)})$$

The low-humidity proton conductivity is preferably 0.90 mS/cm or more, more preferably, 1.00 mS/cm or more, particularly preferably 1.10 mS/cm or more. The high-humidity proton conductivity is preferably 9.50 mS/cm or more, more preferably 11.00 mS/cm or more, particularly preferably 12.00 mS/cm or more.

(7) Measurement of Heat of Crystallization by Differential Scanning Calorimetry Analysis (DSC)

A polymer electrolyte membrane as an analyte in an amount of 10 mg was placed in a DSC device, and predried at 110°C for 3 hours. Then, the analyte was heated to 200°C under the below-described conditions without being taken out of the DSC device, and subjected to a temperature modulating differential scanning calorimetry analysis in the heating stage.

DSC device: DSC7000X (manufactured by Hitachi High-Technologies Corporation)
Range of measurement temperature: 30°C to 200°C
Temperature control: A/C temperature control
Heating rate: 2°C/min
Amplitude: ±3°C
Frequency applied: 0.02 Hz
Sample pan: aluminum crimped pan
Atmosphere for measurement and predrying: nitrogen, 100 mL/min
Predrying: at 110°C for 3 hours.

(8) Measurement of Crystallinity by Wide-angle X-ray Diffraction (XRD)

A polymer electrolyte membrane as an analyte was set in a diffractometer, and measured by X-ray diffraction under the following conditions.

X-ray diffractometer: D8 ADVANCE, manufactured by Bruker Corporation
X ray: Cu-Kα
X-ray output: 40 kV-40 mA
Optical system: focusing optical system
Scanning rate: 2θ = 2/min
Scanning method: 2θ-θ
Scanning range: 2θ = 5 to 60°
Slit: divergence slit-1/2°, receiving slit-0.15 mm, scattering slit-1/2°

Profile fitting of the crystallinity was performed to separate the components. The diffraction angle and integrated intensity of each component were determined. The integrated intensities of the resulting crystal peak and amorphous halo were used to calculate the crystallinity in accordance with the following calculating equation.

Crystallinity (%) = sum of integrated intensities of all crystal peaks / sum of integrated intensities of all crystal peaks and amorphous halos × 100

The structure of each compound obtained in the following Synthesis Examples 1 to 3 was verified by $^1$H-NMR. The purity was analyzed quantitatively by capillary electrophoresis (for organic substances) and ion chromatography (for inorganic substances).

Synthesis Example 1 (Synthesis of 2,2-bis(4-hydroxyphenyl)-1,3-dioxolane (K-DHBP) represented by the following formula (G1))

In a 500 mL flask equipped with a stirrer, a thermometer, and a distillation tube, 49.5 g of 4,4'-dihydroxybenzophenone, 134 g of ethylene glycol, 96.9 g of trimethyl orthoformate, and 0.50 g ofp-toluenesulfonic acid monohydrate were fed to obtain a solution. Then, the solution was stirred for 2 hours at a temperature kept at 78 to 82°C. Further, the internal temperature was gradually raised to 120°C, and kept at 120°C until the distillation of methyl formate, methanol, and trimethyl orthoformate completely stopped. After the reaction liquid was cooled to room temperature, the reaction liquid was diluted with ethyl acetate. The organic layer was washed with 100 mL of an aqueous 5% potassium carbonate solution, the resulting liquid was then separated, and the solvent was distilled away. To the residue, 80 mL of dichloromethane was added to deposit crystals, and the crystals were filtrated and dried to give 52.0 g of 2,2-bis(4-hydroxyphenyl)-1,3-dioxolane. The compound had a purity of 99.9%.

[Chem. 25]

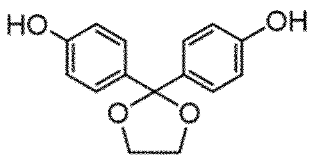
(G1)

Synthesis Example 2 (Synthesis of disodium-3,3'-disulfonate-4,4'-difluorobenzophenone represented by the following formula (G2))

In 150 mL of fuming sulfuric acid (50% $SO_3$) (a Wako Pure Chemical reagent), 109.1 g of 4,4'-difluorobenzophenone (an Aldrich reagent) was allowed to react at 100°C for 10 hours. Then, the resulting product was gradually poured into a large amount of water, the resulting mixture was neutralized with NaOH, and then 200 g of sodium chloride (NaCl) was added to the mixture to precipitate a synthesized product. The precipitate obtained was filtrated off and recrystallized from an aqueous ethanol solution to give disodium-3,3'-disulfonate-4,4'-difluorobenzophenone. The compound had a purity of 99.3%.

[Chem. 26]

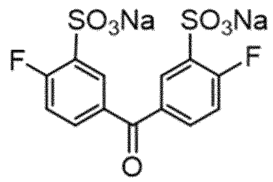

(G2)

Synthesis Example 3 (Synthesis of disodium diphenylsulfone-4,4'-difluoro-3,3'-disulfonate represented by the following formula (G3))

In 150 mL of fuming sulfuric acid (50% $SO_3$) (a Wako Pure Chemical reagent), 109.1 g of 4,4-difluorodiphenyl sulfone (an Aldrich reagent) was allowed to react at 100°C for 10 hours. Then, the resulting product was gradually poured into a large amount of water, the resulting mixture was neutralized with NaOH, and then 200 g of sodium chloride was added to the mixture to precipitate a synthesized product. The precipitate obtained was filtrated off and recrystallized from an aqueous ethanol solution to give disodium diphenylsulfone-4,4'-difluoro-3,3'-disulfonate. The compound had a purity of 99.3%.

[Chem. 27]

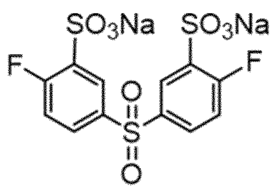

(G3)

Example 1

(Synthesis of nonionic oligomer a1 represented by the following general formula (G4))

Into a 2,000 mL SUS polymerizer equipped with a stirrer, a nitrogen introduction tube, and a Dean-Stark trap, 16.59 g of potassium carbonate (an Aldrich reagent, 120 mmol), 25.83 g (100 mmol) of K-DHBP obtained in Synthesis Example 1, and 21.38 g of 4,4'-difluorobenzophenone (an Aldrich reagent, 98 mmol) were introduced. After the device was purged with nitrogen, 300 mL of *N*-methylpyrrolidone (NMP) and 100 mL of toluene were added, the resulting mixture was dehydrated at 150°C, the temperature was raised to remove toluene, and the mixture was polymerized at 170°C for 3 hours. The resulting product was purified by reprecipitation in a large amount of methanol to obtain a nonionic oligomer a1 having a hydroxy end. The number-average molecular weight of this nonionic oligomer a1 having a hydroxy end was 20,000. Into a 500 mL three-necked flask equipped with a stirrer, a nitrogen introduction tube, and a Dean-Stark trap, 1.1 g of potassium carbonate (an Aldrich reagent, 8 mmol) and 20.0 g (1 mmol) of the nonionic oligomer a1 having a hydroxy end were introduced. After the device was purged with nitrogen, 100 mL of NMP and 30 mL of toluene were added, the resulting mixture was dehydrated at 100°C, and the temperature was raised to remove toluene. Furthermore, 1.1 g of hexafluorobenzene (an Aldrich reagent, 6 mmol) was introduced, and the resulting mixture was allowed to react at 105°C for 12 hours. The resulting product was purified by reprecipitation in a large amount of isopropyl alcohol to obtain a nonionic oligomer a1 (having a fluoro end group) represented by the following formula (G4). The number-average molecular weight of this nonionic oligomer a1 was 21,000.

[Chem. 28]

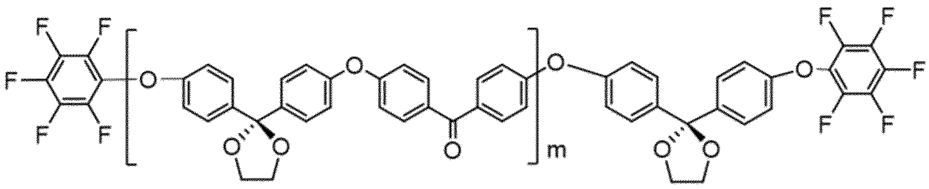

(G4)

(Synthesis of ionic oligomer a2 represented by the following formula (G5))

Into a 2,000 mL SUS polymerizer equipped with a stirrer, a nitrogen introduction tube, and a Dean-Stark trap, 27.64 g of potassium carbonate (an Aldrich reagent, 200 mmol), 12.91 g (50 mmol) of K-DHBP obtained in Synthesis Example 1, 9.31 g of 4,4'-biphenol (an Aldrich reagent, 50 mmol), 41.60 g (98.5 mmol) of disodium-3,3'-disulfonate-4,4'-difluorobenzophenone obtained in Synthesis Example 2, and 26.40 g of 18-crown-6 (Wako Pure Chemical Industries, Ltd., 100 mmol) were introduced. After the device was purged with nitrogen, 300 mL of NMP and 100 mL of toluene were added, the resulting mixture was dehydrated at 150°C, the temperature was raised to remove toluene, and the mixture was polymerized at 170°C for 6 hours. The resulting product was purified by reprecipitation in a large amount of isopropyl alcohol to obtain an ionic oligomer a2 (having a hydroxy end group) represented by the following formula (G5). The number-average molecular weight of this ionic oligomer a2 was 45,000. In this regard, in the formula (G5), M represents a hydrogen atom, Na, or K.

[Chem. 29]

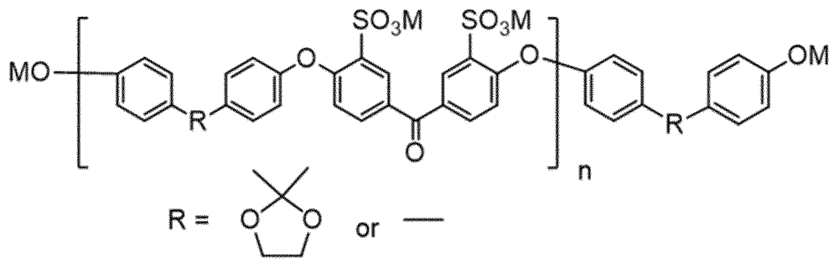

(G5)

(Synthesis of ionic oligomer a2' represented by the following formula (G6))

Into a 2,000 mL SUS polymerizer equipped with a stirrer, a nitrogen introduction tube, and a Dean-Stark trap, 0.56 g of potassium carbonate (an Aldrich reagent, 400 mmol) and 49.0 g of the ionic oligomer a2 were introduced. After the device was purged with nitrogen, 500 mL of NMP was added, the contents were dissolved at 60°C, and then, 19.8 g of a hexafluorobenzene/NMP solution (1 wt%) was added. The resulting mixture was allowed to react at 80°C for 18 hours to obtain an NMP solution containing an ionic oligomer a2' (having an OM end) represented by the formula (G6). The number-average molecular weight of this ionic oligomer a2' was 90,000. In this regard, in the formula (G6), M represents a hydrogen atom, Na, or K.

[Chem. 30]

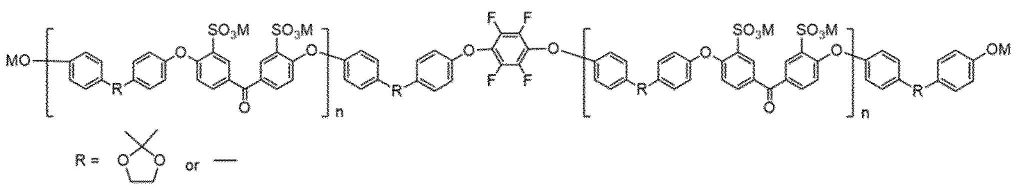

(G6)

(Synthesis of block copolymer b1 containing oligomer a2' as ionic segment and oligomer a1 as nonionic segment)

In a 2,000 mL SUS polymerizer equipped with a stirrer, a nitrogen introduction tube, and a Dean-Stark trap,

49.0 g of the ionic oligomer a2' and 7.65 g of the nonionic oligomer a1 were introduced, NMP was added in such a manner that the total amount of the oligomers fed was 7 wt%, and the resulting mixture was allowed to react at 105°C for 24 hours. The resulting product was reprecipitated in a large amount of an isopropyl alcohol/NMP solution mixture (at a ratio of 2/1 by weight), and purified in a large amount of isopropyl alcohol to obtain a block copolymer b1. This block copolymer b1 had a number-average molecular weight of 170,000 and a weight-average molecular weight of 410,000.

A 20 wt% NMP solution in which the resulting block copolymer b1 was dissolved was filtrated under pressure using a glass fiber filter, then applied to a glass base plate by cast coating, and dried at 100°C for 4 hours to obtain a molded membrane product. This molded product was immersed in an aqueous 10 mass% sulfuric acid solution at 80°C for 24 hours to undergo proton exchange and deprotection reaction, and then immersed in a large excess amount of pure water for 24 hours to be thoroughly washed, to obtain a polymer electrolyte membrane A (having a thickness of 10 $\mu$m). Observation by TEM and TEM tomography made it possible to verify a co-continuous phase-separation structure, and demonstrated that the hydrophilic domain containing an ionic group and the hydrophobic domain containing no ionic group each formed a continuous phase. A crystallization peak was exhibited in DSC, and the heat of crystallization was 15.8 J/g. In addition, no crystal peak was exhibited (the crystallinity was 0%) in wide-angle X-ray diffraction.

The ion exchange capacity (IEC) of the block copolymer b1 was 2.5 meq/g, and the average period size of the phase-separation structure of the polymer electrolyte membrane A was 62 nm. The average period size/IEC was 24.8, which satisfied the following relational formula (1).

$$\text{Average period size / IEC} \geq 21 \ \ldots \ \text{Formula (1)}$$

Example 2

(Synthesis of block copolymer b2 containing oligomer a2' as ionic segment and oligomer a1 as nonionic segment)

A block copolymer b2 was obtained in the same manner as in Example 1 except that the amount of the nonionic oligomer a1 used was 5.4 g. This block copolymer b2 had a number-average molecular weight of 180,000 and a weight-average molecular weight of 430,000.

A polymer electrolyte membrane B (having a thickness of 11 $\mu$m) was obtained by the same method as in Example 1 except that the block copolymer b2 was used in place of the block copolymer b1. Observation by TEM and TEM tomography made it possible to verify a co-continuous phase-separation structure, and demonstrated that the hydrophilic domain containing an ionic group and the hydrophobic domain containing no ionic group each formed a continuous phase. A crystallization peak was exhibited in DSC, and the heat of crystallization was 13.2 J/g. In addition, no crystal peak was exhibited (the crystallinity was 0%) in wide-angle X-ray diffraction.

The ion exchange capacity (IEC) of the block copolymer b2 was 2.7 meq/g, and the average period size of the phase-separation structure of the polymer electrolyte membrane B was 69 nm. The average period size/IEC was 25.6, which satisfied the above-described relational formula (1).

Example 3

(Synthesis of nonionic oligomer a3 represented by formula (G4))

An oligomer a3 having a hydroxy end was obtained in the same manner as the oligomer a1 having a hydroxy end was synthesized except that the amount of 4,4'-difluorobenzophenone used was 21.45 g. The number-average molecular weight of this oligomer a3 having a hydroxy end was 25,000.

A nonionic oligomer a3 (having a fluoro end group) represented by the formula (G4) was obtained in the same manner as the oligomer a1 was synthesized except that 25.0 g of the oligomer a3 having a hydroxy end was used in place of the oligomer a1 having a hydroxy end. The number-average molecular weight of this nonionic oligomer a3 was 26,000.

(Synthesis of block copolymer b3 containing oligomer a2' as ionic segment and oligomer a3 as nonionic segment)

A block copolymer b3 was obtained in the same manner as the block copolymer b1 was synthesized except that the nonionic oligomer a3 (12.3 g) was used in place of the nonionic oligomer a1 (7.65 g). This block copolymer b3 had a number-average molecular weight of 160,000 and a weight-average molecular weight of 390,000.

A polymer electrolyte membrane C (having a thickness of 10 $\mu$m) was obtained by the same method as in Example 1 except that the block copolymer b3 was used in place of the block copolymer b1. Observation by TEM and

TEM tomography made it possible to verify a co-continuous phase-separation structure, and demonstrated that the hydrophilic domain containing an ionic group and the hydrophobic domain containing no ionic group each formed a continuous phase. A crystallization peak was exhibited in DSC, and the heat of crystallization was 22.1 J/g. In addition, no crystal peak was exhibited (the crystallinity was 0%) in wide-angle X-ray diffraction.

The ion exchange capacity (IEC) of the block copolymer b3 was 2.1 meq/g, and the average period size of the phase-separation structure of the polymer electrolyte membrane C was 58 nm. The average period size/IEC was 27.6, which satisfied the above-described relational formula (1).

Example 4

(Synthesis of ionic oligomer a4 represented by formula (G5))

An ionic oligomer a4 was obtained in the same manner as the ionic oligomer a2 was synthesized except that the amount of disodium-3,3'-disulfonate-4,4'-difluorobenzophenone used was 41.38 g (98.0 mmol). The number-average molecular weight of this ionic oligomer a4 was 35,000.

(Synthesis of ionic oligomer a4' represented by general formula (G6))

An NMP solution containing the ionic oligomer a4' (having an OM end) represented by the formula (G6) was obtained in the same manner as the ionic oligomer a2' was synthesized except that the ionic oligomer a4 (37.16 g) was used in place of the ionic oligomer a2 (49.0 g), that the amount of NMP used was 400 mL, and that the amount of the hexafluorobenzene/NMP solution (1 wt%) used was 15.3 g. The number-average molecular weight of the oligomer a4' was 70,000.

(Synthesis of block copolymer b4 containing oligomer a4' as ionic segment and oligomer a1 as nonionic segment)

A block copolymer b4 was obtained in the same manner as the block copolymer b1 was synthesized except that, in a 2,000 mL SUS polymerizer equipped with a stirrer, a nitrogen introduction tube, and a Dean-Stark trap, the ionic oligomer a4' (37.16 g) was used in place of the ionic oligomer a2' (49.0 g), and that the amount of the nonionic oligomer a1 used was 5.80 g. This block copolymer b4 had a number-average molecular weight of 190,000 and a weight-average molecular weight of 440,000.

A polymer electrolyte membrane D (having a thickness of 10 μm) was obtained by the same method as in Example 1 except that the block copolymer b4 was used in place of the block copolymer b1. Observation by TEM and TEM tomography made it possible to verify a co-continuous phase-separation structure, and demonstrated that the hydrophilic domain containing an ionic group and the hydrophobic domain containing no ionic group each formed a continuous phase. A crystallization peak was exhibited in DSC, and the heat of crystallization was 16.6 J/g. In addition, no crystal peak was exhibited (the crystallinity was 0%) in wide-angle X-ray diffraction.

The ion exchange capacity (IEC) of the block copolymer b4 was 2.4 meq/g, and the average period size of the phase-separation structure of the polymer electrolyte membrane D was 58 nm. The average period size/IEC was 24.2, which satisfied the above-described relational formula (1).

Example 5

(Synthesis of nonionic oligomer a5 represented by general formula (G4))

A nonionic oligomer a5 having a hydroxy end was obtained in the same manner as the nonionic oligomer a1 having a hydroxy end was synthesized except that the amount of 4,4'-difluorobenzophenone used was 21.27 g. The number-average molecular weight of this nonionic oligomer a5 having a hydroxy end was 16,000.

A nonionic oligomer a5 (having a fluoro end group) represented by the formula (G4) was obtained in the same manner as the nonionic oligomer a1 was synthesized except that 16.0 g of the nonionic oligomer a5 having a hydroxy end was used in place of 20.0 g of the nonionic oligomer a1 having a hydroxy end. The number-average molecular weight of this nonionic oligomer a5 was 17,000.

(Synthesis of ionic oligomer a6 represented by formula (G5))

Into a 2,000 mL SUS polymerizer equipped with a stirrer, a nitrogen introduction tube, and a Dean-Stark trap, 27.64 g of potassium carbonate (an Aldrich reagent, 200 mmol), 12.91 g (50 mmol) of K-DHBP obtained in Synthesis Example 1, 9.31 g of 4,4'-biphenol (an Aldrich reagent, 50 mmol), and 41.85 g (99.1 mmol) of disodium-3,3'-disulfonate-4,4'-difluorobenzophenone obtained in Synthesis Example 2 were introduced. After the device was purged with nitrogen, 300 mL of dimethyl sulfoxide (DMSO) and 100 mL of toluene were added, the resulting mixture was dehydrated at 133°C, and the temperature was raised to remove toluene. The mixture was polymerized at 150°C for 2 hours, heated to 155°C, and further polymerized for 1 hour. The resulting product was purified by reprecipitation in a large amount of isopropyl alcohol to obtain an ionic oligomer a6 (having a hydroxy end group) represented by the formula (G5). The number-average molecular weight of this ionic oligomer a6 was 56,000.

(Synthesis of block copolymer b5 containing oligomer a6 as ionic segment and oligomer a5 as nonionic segment)

A block copolymer b5 was obtained in the same manner as the block copolymer b1 was synthesized except that the ionic oligomer a6 (32.79 g) was used in place of the ionic oligomer a2' (49.0 g), and that the nonionic oligomer a5 (8.19 g) was used in place of the nonionic oligomer a1 (7.65 g). This block copolymer b5 had a number-average molecular weight of 140,000 and a weight-average molecular weight of 360,000.

A polymer electrolyte membrane E (having a thickness of 12 μm) was obtained by the same method as in Example 1 except that the block copolymer b5 was used in place of the block copolymer b1. Observation by TEM and TEM tomography made it possible to verify a co-continuous phase-separation structure, and demonstrated that the hydrophilic domain containing an ionic group and the hydrophobic domain containing no ionic group each formed a continuous phase. A crystallization peak was exhibited in DSC, and the heat of crystallization was 21.1 J/g. In addition, no crystal peak was exhibited (the crystallinity was 0%) in wide-angle X-ray diffraction.

The ion exchange capacity (IEC) of the block copolymer b5 was 2.1 meq/g, and the average period size of the phase-separation structure of the polymer electrolyte membrane E was 46 nm. The average period size/IEC was 21.9, which satisfied the above-described relational formula (1).

Example 6

(Synthesis of nonionic oligomer a7 represented by general formula (G7))

A nonionic oligomer a7 having a hydroxy end was obtained in the same manner as the nonionic oligomer a1 having a hydroxy end was synthesized except that 23.65 g of 4,4-difluorodiphenyl sulfone was used in place of 4,4'-difluorobenzophenone. The number-average molecular weight of this nonionic oligomer a7 having a hydroxy end was 10,000.

A nonionic oligomer a7 (having an end fluoro group) represented by the formula (G7) was obtained in the same manner as the nonionic oligomer a1 was synthesized except that the nonionic oligomer a7 having a hydroxy end (10.0 g) was used in place of the nonionic oligomer a1 having a hydroxy end (20.0 g). The number-average molecular weight of this nonionic oligomer a7 was 11,000.

[Chem. 31]

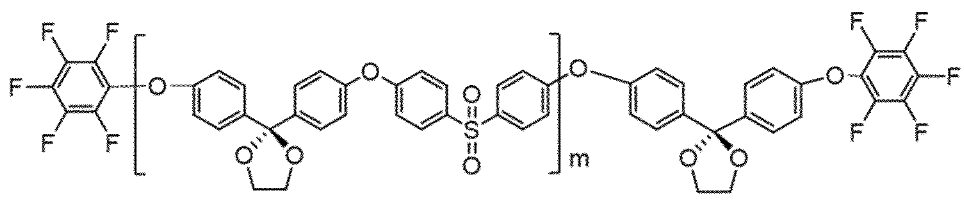
(G7)

(Synthesis of ionic oligomer a8 represented by formula (G8))

Into a 2,000 mL SUS polymerizer equipped with a stirrer, a nitrogen introduction tube, and a Dean-Stark trap, 27.6 g of potassium carbonate (an Aldrich reagent, 200 mmol), 12.9 g (50 mmol) of K-DHBP obtained in the above-described Synthesis Example 1, 9.3 g of 4,4'-biphenol (an Aldrich reagent, 50 mmol), and 45.12 g (99.1 mmol) of disodium diphenylsulfone-4,4'-difluoro-3,3'-disulfonate obtained in Synthesis Example 3 were introduced. After the device was purged with nitrogen, 300 mL of DMSO and 100 mL of toluene were added, the resulting mixture was dehydrated at 130°C, the temperature was raised to remove toluene, and the mixture was polymerized at 155°C for 3 hours. The resulting product was purified by reprecipitation in a large amount of isopropyl alcohol to obtain an ionic oligomer a8 (having a hydroxy end group) represented by the formula (G8). The number-average molecular weight of this ionic oligomer a8 was 57,000.

[Chem. 32]

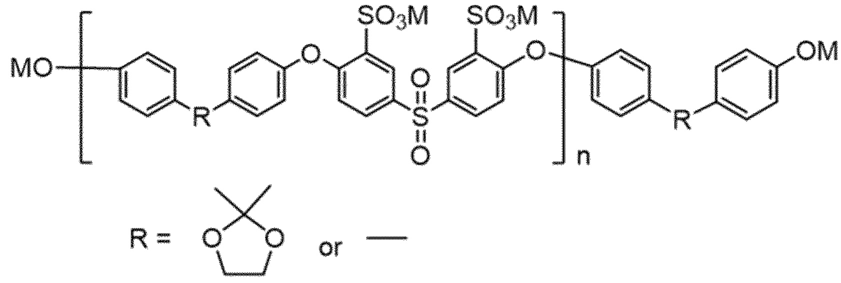
or

(G8)

(Synthesis of block copolymer b6 containing oligomer a8 as ionic segment and oligomer a7 as nonionic segment)

A block copolymer b10 was obtained in the same manner as the block copolymer b1 was synthesized except that the ionic oligomer a8 (65.82 g) was used in place of the ionic oligomer a2' (49.0 g), and that the nonionic oligomer a7 (10.28 g) was used in place of the nonionic oligomer a1 (7.65 g). This block copolymer b6 had a number-average molecular weight of 110,000 and a weight-average molecular weight of 280,000.

A polymer electrolyte membrane F (having a thickness of 10 μm) was obtained by the same method as in Example 1 except that the block copolymer b6 was used in place of the block copolymer b 1. Observation by TEM and TEM tomography made it possible to verify a co-continuous phase-separation structure, and demonstrated that the hydrophilic domain containing an ionic group and the hydrophobic domain containing no ionic group each formed a continuous phase. No crystallization peak was exhibited in DSC (the heat of crystallization was 0 J/g). In addition, no crystal peak was exhibited (the crystallinity was 0%) in wide-angle X-ray diffraction.

The ion exchange capacity (IEC) of the block copolymer b6 was 2.4 meq/g, and the average period size of the phase-separation structure of the polymer electrolyte membrane F was 53 nm. The average period size/IEC was 22.1, which satisfied the above-described relational formula (1).

Example 7

(Synthesis of ionic oligomer precursor a9 represented by the following general formula (G9))

Into a 2,000 mL SUS polymerizer equipped with a stirrer, a nitrogen introduction tube, and a Dean-Stark trap, 200 mL of dried *N,N*-dimethylacetoamide (DMAc), 16.9 g (42 mmol) of neopentyl 3-(2,5-dichlorobenzoyl)benzenesulfonate, and 0.09 g (0.7 mmol) of 4-chlorophenol were introduced, and the resulting mixture was stirred at 80°C under a nitrogen atmosphere for 2 hours. Then, 30 g (109 mmol) of bis (1,5-cyclooctadiene)nickel was added, and the resulting mixture was stirred for 4 hours. The mixture was diluted with 300 mL of dried DMAc, and into the resulting solution, 1 L of acetone was poured. The resulting mixture was solidified, and dried in vacuo at 80°C to obtain an ionic oligomer precursor a9 (having a hydroxy end group) represented by the following formula (G9). The number-average molecular weight was 22,000.

[Chem. 33]

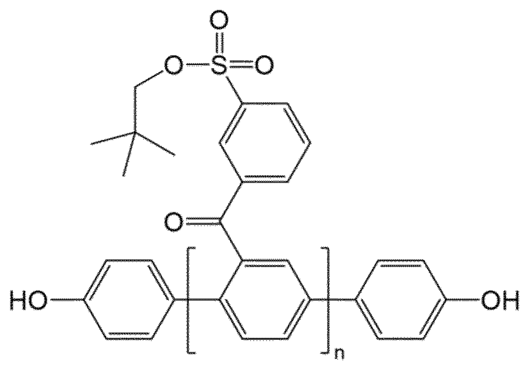

(G9)

(Synthesis of ionic oligomer precursor a9' represented by the following formula (G10))

Into a 2,000 mL SUS polymerizer equipped with a stirrer, a nitrogen introduction tube, and a Dean-Stark trap, 0.56 g of potassium carbonate (an Aldrich reagent, 400 mmol) and 11.1 g of the ionic oligomer a10 were introduced. After the device was purged with nitrogen, 200 mL of dried DMAc was added, the contents were dissolved at 60°C, and then, 30.6 g of a hexafluorobenzene/DMAc solution (1 wt%) was added. The resulting mixture was allowed to react at 80°C for 24 hours to obtain a DMAc solution containing an ionic oligomer precursor a9' (having an OM end) represented by the following formula (G10). The number-average molecular weight of the ionic oligomer precursor a9' was 67,000. In this regard, in the formula (G10), M represents a hydrogen atom, Na, or K.

[Chem. 34]

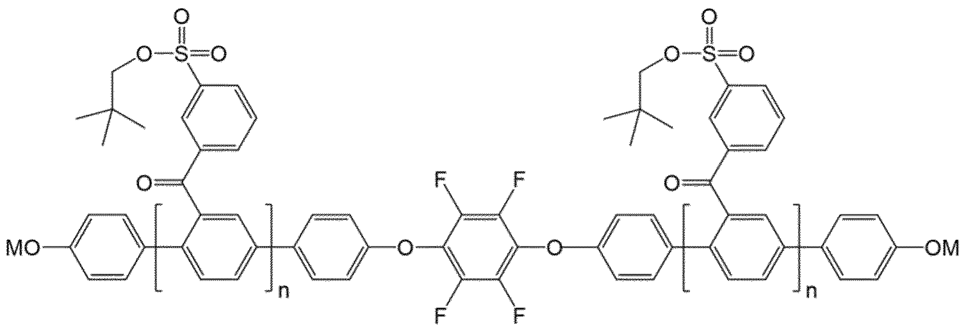
(G10)

(Synthesis of nonionic oligomer a10 represented by the following general formula (G11))

Into a 2,000 mL SUS polymerizer equipped with a stirrer, a nitrogen introduction tube, and a Dean-Stark trap, 200 mL of dried NMP, 10.08 g (40 mmol) of 2,5-dichlorobenzophenone, and 0.12 g (0.9 mmol) of 4-chlorophenol were introduced, and the resulting mixture was stirred at 80°C under a nitrogen atmosphere for 2 hours. Furthermore, 30 g (109 mmol) of bis (1,5-cyclooctadiene)nickel was added, and the resulting mixture was stirred for 4 hours. The mixture was diluted with 300 mL of dried NMP, and precipitated in 1 L of an aqueous 10 wt% hydrochloric acid solution, and then dried in vacuo at 80°C to obtain a nonionic oligomer a10 having a hydroxy end and represented by the following formula (G11). The number-average molecular weight was 9,000.

A nonionic oligomer a10 (having an end fluoro group) represented by the following formula (G11) was obtained in the same manner as the nonionic oligomer a1 was synthesized except that the nonionic oligomer a10 having a hydroxy end (9.0 g (1 mmol)) was used in place of the nonionic oligomer a1 having a hydroxy end (20.0 g). The number-average molecular weight of this nonionic oligomer a10 was 10,000.

[Chem. 35]

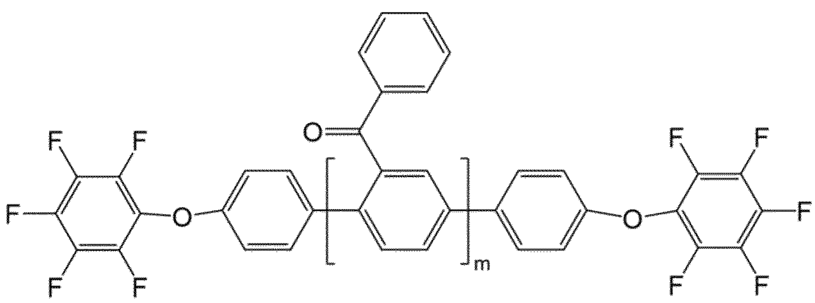
(G11)

(Synthesis of block copolymer b7 containing ionic oligomer a9" as ionic segment and oligomer a10 as nonionic segment)

In a 2,000 mL SUS polymerizer equipped with a stirrer, a nitrogen introduction tube, and a Dean-Stark trap, 11.1 g of the ionic oligomer precursor a9' and 5.71 g of the nonionic oligomer a10 were introduced, DMAc was added in such a manner that the total amount of the oligomers fed was 7 wt%, and the resulting mixture was allowed to react at 105°C for 24 hours. The polymerization reaction solution was diluted with 500 mL of DMAc, stirred for 30 minutes,

and filtrated using Celite as a filter aid.

The filtrate was concentrated with an evaporator, 21.9 g (0.253 mol) of lithium bromide was added to the residue, and the resulting mixture was allowed to react at an internal temperature of 110°C under a nitrogen atmosphere for 7 hours. After the reaction, the mixture was cooled to room temperature, poured into 3 L of acetone, and solidified. The product solidified was collected by filtration, air-dried, pulverized with a mixer, and washed with 1,500 mL of 1 N hydrochloric acid with stirring. After filtration, the product was washed with ion-exchanged water until the washing liquid came to have a pH of 5 or more. Then, the product was dried at 80°C overnight to obtain a block copolymer b7 having an ionic oligomer a9" represented by the following formula (G12). The number-average molecular weight of the ionic oligomer a9" was calculated at 53,000 from the structural formula of the formula (G12) and the number-average molecular weight. The block copolymer b7 had a number-average molecular weight of 90,000 and a weight-average molecular weight of 210,000. In this regard, in the formula (G12), the symbol * represents a bond with a nonionic segment.

[Chem. 36]

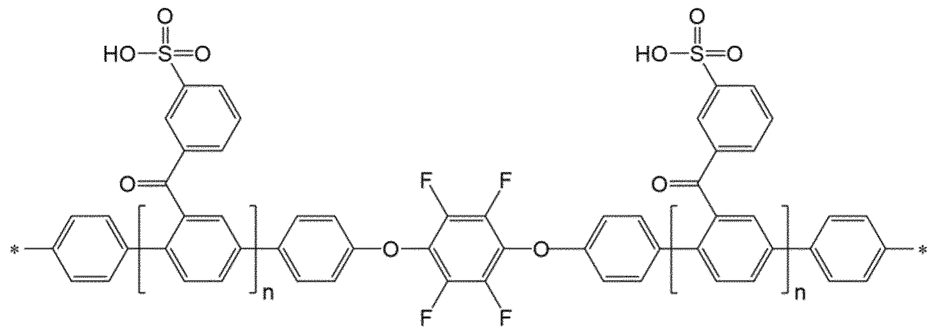
(G12)

The block copolymer b7 was dissolved at 0.1 g/g in a solvent composed of NMP/methanol = 30/70 (mass%). The resulting solution was filtrated under pressure using a glass fiber filter, then applied to a glass base plate by cast coating, and dried at 100°C for 4 hours to obtain a molded membrane product. This molded product was immersed in an aqueous 10 mass% sulfuric acid solution at 80°C for 24 hours, and then immersed in a large excess amount of pure water for 24 hours to be thoroughly washed, to obtain a polymer electrolyte membrane G (having a thickness of 10 μm). Observation by TEM and TEM tomography made it possible to verify a co-continuous phase-separation structure, and demonstrated that the hydrophilic domain containing an ionic group and the hydrophobic domain containing no ionic group each formed a continuous phase. No crystallization peak was exhibited in DSC. In addition, a crystal peak was exhibited in wide-angle X-ray diffraction, and the crystallinity was 10.4%.

The ion exchange capacity (IEC) of the block copolymer b7 was 2.4 meq/g, and the average period size of the phase-separation structure of the polymer electrolyte membrane G was 54 nm. The average period size/IEC was 22.5, which satisfied the above-described relational formula (1).

Comparative Example 1

(Synthesis of nonionic oligomer a11 represented by general formula (G4))

A nonionic oligomer a11 having a hydroxy end was obtained in the same manner as the nonionic oligomer a1 having a hydroxy end was synthesized except that the amount of 4,4'-difluorobenzophenone used was 20.84 g. The number-average molecular weight of this nonionic oligomer a9 having a hydroxy end was 9,000.

A nonionic oligomer a11 (having a fluoro end group) represented by the formula (G4) was obtained in the same manner as the nonionic oligomer a1 was synthesized except that the nonionic oligomer a11 having a hydroxy end (9.0 g) was used in place of the nonionic oligomer a1 having a hydroxy end (20.0 g). The number-average molecular weight of this nonionic oligomer a11 was 10,000.

(Synthesis of ionic oligomer a12 represented by general formula (G5))

Into a 2,000 mL SUS polymerizer equipped with a stirrer, a nitrogen introduction tube, and a Dean-Stark trap, 27.64 g of potassium carbonate (an Aldrich reagent, 200 mmol), 12.91 g (50 mmol) of K-DHBP obtained in Synthesis Example 1, 9.31 g of 4,4'-biphenol (an Aldrich reagent, 50 mmol), 41.47 g (98.2 mmol) of disodium-3,3'-disulfonate-4,4'-difluorobenzophenone obtained in Synthesis Example 2, and 26.40 g of 18-crown-6 (Wako Pure Chemical Industries,

Ltd., 100 mmol) were introduced. After the device was purged with nitrogen, 300 mL of NMP and 100 mL of toluene were added, the resulting mixture was dehydrated at 150°C, the temperature was raised to remove toluene, and the mixture was polymerized at 170°C for 6 hours. The resulting product was purified by reprecipitation in a large amount of isopropyl alcohol to obtain an ionic oligomer a12 (having a hydroxy end group) represented by the formula (G5). The number-average molecular weight of this ionic oligomer a12 was 42,000.

(Synthesis of block copolymer b8 containing oligomer a12 as ionic segment and oligomer a11 as nonionic segment)

A block copolymer b8 was obtained in the same manner as the block copolymer b1 was synthesized except that the ionic-group oligomer a12 (43.57 g) was used in place of the ionic oligomer a2' (49.0 g), and that the nonionic oligomer a11 (10.89 g) was used in place of the nonionic oligomer a1 (7.65 g). This block copolymer b8 had a number-average molecular weight of 140,000 and a weight-average molecular weight of 400,000.

A polymer electrolyte membrane H (having a thickness of 10 μm) was obtained by the same method as in Example 1 except that the block copolymer b8 was used in place of the block copolymer b1. Observation by TEM and TEM tomography made it possible to verify a co-continuous phase-separation structure, and demonstrated that the hydrophilic domain containing an ionic group and the hydrophobic domain containing no ionic group each formed a continuous phase. A crystallization peak was exhibited in DSC, and the heat of crystallization was 15.1 J/g. In addition, no crystal peak was exhibited (the crystallinity was 0%) in wide-angle X-ray diffraction.

The ion exchange capacity (IEC) of the block copolymer b8 was 2.1 meq/g, and the average period size of the phase-separation structure of the polymer electrolyte membrane H was 28 nm. The average period size/IEC was 13.3, which did not satisfy the above-described relational formula (1).

Comparative Example 2

(Synthesis of nonionic oligomer a13 represented by formula (G4))

A nonionic oligomer a15 having a hydroxy end was obtained in the same manner as the nonionic oligomer a1 having a hydroxy end was synthesized except that the amount of 4,4'-difluorobenzophenone used was 20.18 g. The number-average molecular weight of this nonionic oligomer a15 having a hydroxy end was 5,000.

Into a 500 mL three-necked flask equipped with a stirrer, a nitrogen introduction tube, and a Dean-Stark trap, 2.2 g of potassium carbonate (an Aldrich reagent, 16 mmol) and 10.0 g of the nonionic oligomer a13 having a hydroxy end were introduced. After the device was purged with nitrogen, 100 mL of NMP and 30 mL of toluene were introduced, the resulting mixture was dehydrated at 100°C, the temperature was raised to remove toluene, 2.2 g of hexafluorobenzene (an Aldrich reagent, 12 mmol) was added, and the resulting mixture was allowed to react at 105°C for 12 hours. The resulting product was purified by reprecipitation in a large amount of isopropyl alcohol to obtain a nonionic oligomer a13 (having a fluoro end group) represented by the formula (G4). The number-average molecular weight of this nonionic oligomer a13 was 6,000.

(Synthesis of block copolymer b9 containing oligomer a12 as ionic segment and oligomer a13 as nonionic segment)

A block copolymer b9 was obtained in the same manner as the block copolymer b8 was synthesized except that the nonionic oligomer a13 (6.81 g) was used in place of the nonionic oligomer a11 (10.89 g). This block copolymer b9 had a number-average molecular weight of 130,000 and a weight-average molecular weight of 400,000.

A polymer electrolyte membrane I (having a thickness of 10 μm) was obtained by the same method as in Example 1 except that the block copolymer b9 was used in place of the block copolymer b1. Observation by TEM and TEM tomography made it possible to verify a co-continuous phase-separation structure, and demonstrated that the hydrophilic domain containing an ionic group and the hydrophobic domain containing no ionic group each formed a continuous phase, but a non-continuous structure was partially found. A crystallization peak was exhibited in DSC, and the heat of crystallization was 6.4 J/g. In addition, no crystal peak was exhibited (the crystallinity was 0%) in wide-angle X-ray diffraction.

The ion exchange capacity (IEC) of the block copolymer b9 was 2.4 meq/g, and the average period size of the phase-separation structure of the polymer electrolyte membrane I was 35 nm. The average period size/IEC was 14.6, which did not satisfy the above-described relational formula (1).

Comparative Example 3

(Synthesis of nonionic oligomer a14 represented by formula (G4))

A nonionic oligomer a14 having a hydroxy end was obtained in the same manner as the nonionic oligomer a1 having a hydroxy end was synthesized except that the amount of 4,4'-difluorobenzophenone used was 19.99 g. The number-average molecular weight of this nonionic oligomer a14 having a hydroxy end was 4,000.
A nonionic oligomer a14 (having a fluoro end group) represented by the formula (G4) was obtained in the same manner as the nonionic oligomer a13 was synthesized except that 8.0 g of the nonionic oligomer a14 having a hydroxy end was used in place of 10.0 g of the nonionic oligomer a13 having a hydroxy end. The number-average molecular weight of this nonionic oligomer a14 was 5,000.

(Synthesis of block copolymer b10 containing oligomer a12 as ionic segment and oligomer a14 as nonionic segment)

A block copolymer b10 was obtained in the same manner as the block copolymer b9 was synthesized except that the nonionic oligomer a14 (4.84 g) was used in place of the nonionic oligomer a13 (6.81 g). This block copolymer b10 had a number-average molecular weight of 130,000 and a weight-average molecular weight of 400,000.
A polymer electrolyte membrane J (having a thickness of 10 μm) was obtained by the same method as in Example 1 except that the block copolymer b10 was used in place of the block copolymer b1. Observation by TEM and TEM tomography made it possible to verify a co-continuous phase-separation structure, and demonstrated that the hydrophilic domain containing an ionic group and the hydrophobic domain containing no ionic group each formed a continuous phase, but a non-continuous structure was partially found. A crystallization peak was exhibited in DSC, and the heat of crystallization was 2.9 J/g. In addition, no crystal peak was exhibited (the crystallinity was 0%) in wide-angle X-ray diffraction.
The ion exchange capacity (IEC) of the block copolymer b10 was 2.7 meq/g, and the average period size of the phase-separation structure of the polymer electrolyte membrane J was 48 nm. The average period size/IEC was 17.8, which did not satisfy the above-described relational formula (1).

Comparative Example 4

(Synthesis of ionic oligomer a15 represented by the following general formula (G8))

An ionic oligomer a15 (having a hydroxy end group) represented by the formula (G8) was obtained in the same manner as the ionic oligomer a2 was synthesized except that 44.94 g (98.1 mmol) of disodium diphenylsulfone-4,4'-difluoro-3,3'-disulfonate obtained in Synthesis Example 3 was used in place of 41.60 g of disodium-3,3'-disulfonate-4,4'-difluorobenzophenone. The number-average molecular weight of this ionic oligomer a15 was 41,000. In this regard, in the formula (G8), M represents a hydrogen atom, Na, or K.

(Synthesis of block copolymer b11 containing oligomer a15 as ionic segment and oligomer a7 as nonionic segment)

In a 2,000 mL SUS polymerizer equipped with a stirrer, a nitrogen introduction tube, and a Dean-Stark trap, 45.76 g of the ionic oligomer a15 and 8.93 g of the nonionic oligomer a7 were introduced, NMP was added in such a manner that the total amount of the oligomers fed was 7 wt%, and the resulting mixture was allowed to react at 105°C for 24 hours. The resulting product was reprecipitated in a large amount of an isopropyl alcohol/NMP solution mixture (at a ratio of 2/1 by weight), and purified in a large amount of isopropyl alcohol to obtain a block copolymer b18. This block copolymer b11 had a number-average molecular weight of 120,000 and a weight-average molecular weight of 290,000.
A polymer electrolyte membrane K (having a thickness of 10 μm) was obtained by the same method as in Example 1 except that the block copolymer b11 was used in place of the block copolymer b1. Observation by TEM and TEM tomography made it possible to verify a co-continuous phase-separation structure, and demonstrated that the hydrophilic domain containing an ionic group and the hydrophobic domain containing no ionic group each formed a continuous phase. No crystallization peak was exhibited in DSC (the heat of crystallization was 0 J/g). In addition, no crystal peak was exhibited (the crystallinity was 0%) in wide-angle X-ray diffraction.
The ion exchange capacity (IEC) of the block copolymer b11 was 2.4 meq/g, and the average period size of the phase-separation structure of the polymer electrolyte membrane K was 32 nm. The average period size/IEC was 13.3, which did not satisfy the above-described relational formula (1).

Comparative Example 5

(Synthesis of nonionic oligomer a16 represented by the following general formula (G13))

A nonionic oligomer a16 (having a fluoro end group) represented by the formula (G13) was obtained in the same manner as the nonionic oligomer a1 having a hydroxy end was synthesized except that the amount of K-DHBP used was 25.22 g, and the amount of 4,4'-difluorobenzophenone used was 21.82 g. The number-average molecular weight of this ionic oligomer a16 was 17,000.

[Chem. 37]

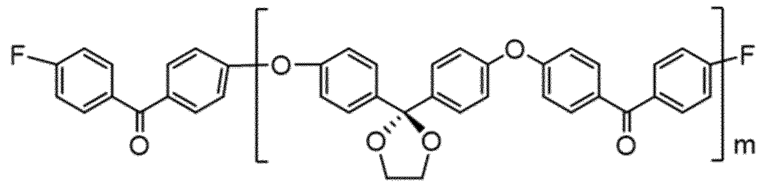

(G13)

(Synthesis of block copolymer b12 containing oligomer a12 as ionic segment and oligomer a16 as nonionic segment)

In a 2,000 mL SUS polymerizer equipped with a stirrer, a nitrogen introduction tube, and a Dean-Stark trap, 43.57 g of the ionic oligomer a12 and 10.89 g of the nonionic oligomer a16 were introduced, NMP was added in such a manner that the total amount of the oligomers fed was 21 wt%, and the resulting mixture was allowed to react at 180°C for 24 hours. The resulting product was reprecipitated in a large amount of an isopropyl alcohol/NMP solution mixture (at a ratio of 2/1 by weight), and purified in a large amount of isopropyl alcohol to obtain a block copolymer b12. This block copolymer b12 had a number-average molecular weight of 90,000 and a weight-average molecular weight of 210,000.

A polymer electrolyte membrane L (having a thickness of 10 μm) was obtained by the same method as in Example 1 except that the block copolymer b12 was used in place of the block copolymer b1 . Observation by TEM and TEM tomography made it possible to verify a sea-island phase-separation structure. A crystallization peak was exhibited in DSC, and the heat of crystallization was 3.6 J/g. In addition, no crystal peak was exhibited (the crystallinity was 0%) in wide-angle X-ray diffraction.

The ion exchange capacity (IEC) of the block copolymer b12 was 2.1 meq/g, and the average period size of the phase-separation structure of the polymer electrolyte membrane L was 120 nm. The average period size/IEC was 57.1, which satisfied the above-described relational formula (1), but the phase-separation structure was sea-island-like, and the average period size (120 nm) did not satisfy the range (less than 110 nm) according to the present invention.

Comparative Example 6

(Synthesis of nonionic oligomer a17 represented by formula (G4))

A nonionic oligomer a17 having a hydroxy end was obtained in the same manner as the nonionic oligomer a1 having a hydroxy end was synthesized except that the amount of 4,4'-difluorobenzophenone used was 19.81 g. The number-average molecular weight of this nonionic oligomer a17 having a hydroxy end was 3,000.

A nonionic oligomer a17 (having a fluoro end group) represented by the formula (G4) was obtained in the same manner as the nonionic oligomer a13 was synthesized except that 6.0 g of the nonionic oligomer a17 having a hydroxy end was used in place of 10.0 g of the nonionic oligomer a13 having a hydroxy end. The number-average molecular weight of this ionic oligomer a17 was 4,000.

(Synthesis of block copolymer b13 containing oligomer a12 as ionic segment and oligomer a17 as nonionic segment)

A block copolymer b13 was obtained in the same manner as the block copolymer b9 was synthesized except that the nonionic oligomer a17 (3.63 g) was used in place of the nonionic oligomer a13 (6.81 g). This block copolymer b13 had a number-average molecular weight of 90,000 and a weight-average molecular weight of 220,000.

A polymer electrolyte membrane M (having a thickness of 10 μm) was obtained by the same method as in Example 1 except that the block copolymer b13 was used in place of the block copolymer b1. Observation by TEM and TEM tomography made it possible to verify a co-continuous phase-separation structure, and demonstrated that the hydrophilic domain containing an ionic group and the hydrophobic domain containing no ionic group each formed a

continuous phase, but a non-continuous structure was partially found. A crystallization peak was exhibited in DSC, and the heat of crystallization was 0.5 J/g. In addition, no crystal peak was exhibited (the crystallinity was 0%) in wide-angle X-ray diffraction.

The ion exchange capacity (IEC) of the block copolymer b13 was 3.2 meq/g, and the average period size of the phase-separation structure of the polymer electrolyte membrane M was 52 nm. The average period size/IEC was 16.3, which did not satisfy the above-described relational formula (1). In addition, the ion exchange capacity (IEC) of the block copolymer b13 did not satisfy the range (more than 2.0 meq/g and less than 3.1 meq/g) according to the present invention.

Comparative Example 7

(Synthesis of nonionic oligomer a18 represented by formula (G4))

A nonionic oligomer a18 having a hydroxy end was obtained in the same manner as the nonionic oligomer a1 having a hydroxy end was synthesized except that the amount of 4,4'-difluorobenzophenone used was 21.49 g. The number-average molecular weight of this nonionic oligomer a18 having a hydroxy end was 27,000.

A nonionic oligomer a18 (having a fluoro end group) represented by the formula (G4) was obtained in the same manner as the oligomer a1 was synthesized except that 27.0 g of the oligomer a18 having a hydroxy end was used in place of the oligomer a1 having a hydroxy end. The number-average molecular weight of this nonionic oligomer a18 was 28,000.

(Synthesis of block copolymer b14 containing oligomer a12 as ionic segment and oligomer a18 as nonionic segment)

A block copolymer b13 was obtained in the same manner as the block copolymer b8 was synthesized except that the nonionic oligomer a17 (14.52 g) was used in place of the nonionic oligomer a11 (10.89 g). This block copolymer b14 had a number-average molecular weight of 70,000 and a weight-average molecular weight of 200,000.

The 20 wt% NMP solution in which the block copolymer b14 obtained was dissolved had poor solubility, and in the solution, gelatinous insoluble matter was observed. The solution was filtrated under pressure through a glass fiber filter. The solution was applied by cast coating to a glass base plate, and dried at 100°C for 4 hours to obtain a molded membraneous product, which exhibited a defect conceivably derived from the gelatinous insoluble matter that had not been removed completely. This molded product was immersed in an aqueous 10 mass% sulfuric acid solution at 80°C for 24 hours to undergo proton exchange and deprotection reaction, and then immersed in a large excess amount of pure water for 24 hours to be thoroughly washed, to obtain a polymer electrolyte membrane N (having a thickness of 13 μm). Observation by TEM and TEM tomography made it possible to verify a co-continuous phase-separation structure, and demonstrated that the hydrophilic domain containing an ionic group and the hydrophobic domain containing no ionic group each formed a continuous phase, but a non-continuous and ununiform structure was partially found. A crystallization peak was exhibited in DSC, and the heat of crystallization was 28.4 J/g. In addition, no crystal peak was exhibited (the crystallinity was 0%) in wide-angle X-ray diffraction.

The ion exchange capacity (IEC) of the block copolymer b14 was 1.8 meq/g, and the average period size of the phase-separation structure of the polymer electrolyte membrane N was 38 nm. The average period size/IEC was 21.1, which satisfied the above-described relational formula (1), but the ion exchange capacity (IEC) of the block copolymer b14 did not satisfy the range (more than 2.0 meq/g and less than 3.1 meq/g) according to the present invention.

Comparative Example 8

(Synthesis of nonionic oligomer a19 represented by the following general formula (G14))

Into a 1,000 mL three-necked flask equipped with a stirrer, a nitrogen introduction tube, and a Dean-Stark trap, 16.59 g of potassium carbonate (an Aldrich reagent, 120 mmol), 25.8 g (100 mmol) of K-DHBP obtained in Synthesis Example 1, and 21.4 g of 4,4'-difluorobenzophenone (an Aldrich reagent, 98 mmol) were introduced. The flask was purged with nitrogen, and then, the resulting mixture was dehydrated in 300 mL of *N*-methylpyrrolidone (NMP) and 100 mL of toluene at 160°C, then heated to remove toluene, and polymerized at 180°C for 1 hour. The resulting product was purified by reprecipitation in a large amount of methanol to obtain an oligomer a19 containing no ionic group and having a hydroxyl end group. The number-average molecular weight was 20,000.

Into a 500 mL three-necked flask equipped with a stirrer, a nitrogen introduction tube, and a Dean-Stark trap, 1.1 g of potassium carbonate (an Aldrich reagent, 8 mmol) and 40.0 g (2 mmol) of the oligomer a19 containing no ionic group and having a hydroxyl end group were introduced. The flask was purged with nitrogen, and then, the resulting mixture was dehydrated in 100 mL of *N*-methylpyrrolidone (NMP) and 30 mL of cyclohexane at 100°C, and then heated

to remove cyclohexane. To the resulting product, 3.0 g of bis(4-fluorophenyl sulfone) (an Aldrich reagent, 12 mmol) was added, and the resulting mixture was allowed to react at 105°C for 1 hour. The resulting product was purified by reprecipitation in a large amount of isopropyl alcohol to obtain a nonionic-group oligomer a19 (having a fluoro end group) represented by the following formula (G14). The number-average molecular weight was 21,000.

[Chem. 38]

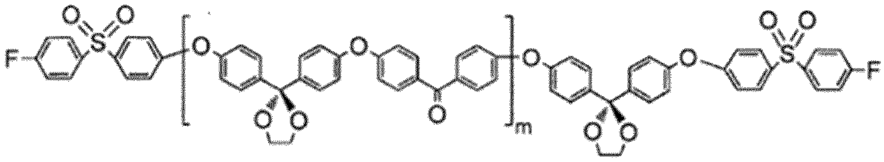

(G14)

(Synthesis of ionic-group oligomer a20 represented by the above-described general formula (G5))

In a 1,000 mL three-necked flask equipped with a stirrer, a nitrogen introduction tube, and a Dean-Stark trap, 27.6 g of potassium carbonate (an Aldrich reagent, 200 mmol), 25.8 g (100 mmol) of K-DHBP obtained in Synthesis Example 1, 41.4 g (98 mmol) of disodium-3,3'-disulfonate-4,4'-difluorobenzophenone obtained in Synthesis Example 2, and 17.9 g of 18-crown-6 (Wako Pure Chemical Industries, Ltd., 82 mmol) were introduced. After the flask was purged with nitrogen, the resulting mixture was dehydrated in 300 mL of *N*-methylpyrrolidone (NMP) and 100 mL of toluene at 170°C, then heated to remove toluene, and polymerized at 180°C for 1 hour. The resulting product was purified by reprecipitation with a large amount of isopropyl alcohol to obtain an ionic group-containing oligomer a20 having a hydroxyl end group and represented by the formula (G5). The number-average molecular weight was 33,000.

(Synthesis of block copolymer b15 containing oligomer a20 as ionic segment and oligomer a19 as nonionic segment)

In a 500 mL three-necked flask equipped with a stirrer, a nitrogen introduction tube, and a Dean-Stark trap, 0.56 g of potassium carbonate (an Aldrich reagent, 4 mmol) and 33 g (1 mmol) of the oligomer a20 containing an ionic group and having a hydroxyl end group were introduced. After the flask was purged with nitrogen, the resulting mixture was dehydrated in 100 mL of *N*-methylpyrrolidone (NMP) and 30 mL of cyclohexane at 100°C, and heated to remove cyclohexane, and 21 g (1 mmol) of the oligomer a19 containing no ionic group (and having a fluoro end group) was added. The resulting mixture was allowed to react at 105°C for 24 hours. The resulting product was purified by reprecipitation in a large amount of isopropyl alcohol to obtain a block copolymer b15. This block copolymer b15 had a number-average molecular weight of 100,000 and a weight-average molecular weight of 360,000.

A polymer electrolyte membrane O (having a thickness of 10 μm) was obtained by the same method as in Example 1 except that the block copolymer b15 was used in place of the block copolymer b1. Observation by TEM and TEM tomography made it possible to verify a co-continuous phase-separation structure, and demonstrated that the hydrophilic domain containing an ionic group and the hydrophobic domain containing no ionic group each formed a continuous phase. A crystallization peak was exhibited in DSC, and the heat of crystallization was 25.1 J/g. In addition, no crystal peak was exhibited (the crystallinity was 0%) in wide-angle X-ray diffraction.

The ion exchange capacity (IEC) of the block copolymer b15 was 2.0 meq/g, and the average period size of the phase-separation structure of the polymer electrolyte membrane O was 50 nm. The average period size/IEC was 13.3, which satisfied the above-described relational formula (1), but the ion exchange capacity (IEC) of the block copolymer b15 did not satisfy the range (more than 2.0 meq/g and less than 3.1 meq/g) according to the present invention.

[Results of Measurement]

The results of measurement of the polymer electrolyte membrane obtained in each of Examples and Comparative Examples are shown in Table 1.

[Table 1]

| | Polymer electrolyte membrane | | Properties | | | | | | |
|---|---|---|---|---|---|---|---|---|---|
| | Type | Type of Block Copolymer | IEC (meq/g) | Phase-Separation Structure | Average Priod Size (nm) | Average Priod Size /IEC | Rate of Dry-Wet Dimensional Change (%) | High-Humidity Proton Conductivity (mS/cm) | Low-Humidity Proton Conductivity (mS/cm) |
| Example 1 | A | b1 | 2.5 | Co-continuous | 62 | 24.8 | 5.4 | 17.06 | 1.46 |
| Example 2 | B | b2 | 2.7 | Co-continuous | 69 | 25.6 | 6.3 | 19.16 | 1.71 |
| Example 3 | C | b3 | 2.1 | Co-continuous | 58 | 27.6 | 3.9 | 14.11 | 1.17 |
| Example 4 | D | b4 | 2.4 | Co-continuous | 58 | 24.2 | 5.3 | 15.39 | 1.22 |
| Example 5 | E | b5 | 2.1 | Co-continuous | 46 | 21.9 | 4.4 | 9.82 | 0.90 |
| Example 6 | F | b6 | 2.4 | Co-continuous | 53 | 22.1 | 7.0 | 11.37 | 1.01 |
| Example 7 | G | b7 | 2.4 | Co-continuous | 54 | 22.5 | 6.8 | 11.60 | 1.07 |
| Comparative Example 1 | H | b8 | 2.1 | Co-continuous | 28 | 13.3 | 4.6 | 6.02 | 0.64 |
| Comparative Example 2 | I | b9 | 2.4 | Co-continuous | 35 | 14.6 | 6.0 | 8.22 | 0.81 |
| Comparative Example 3 | J | b10 | 2.7 | Co-continuous | 48 | 17.8 | 7.2 | 9.42 | 0.89 |
| Comparative Example 4 | K | b11 | 2.4 | Co-continuous | 32 | 13.3 | 7.1 | 6.65 | 0.70 |
| Comparative Example 5 | L | b12 | 2.1 | Sea-Island | 120 | 57.1 | 11.2 | 2.37 | 0.18 |
| Comparative Example 6 | M | b13 | 3.2 | Co-continuous | 52 | 16.3 | 13.5 | 11.97 | 1.12 |

(continued)

| | Polymer electrolyte membrane | | Properties | | | | | | | |
|---|---|---|---|---|---|---|---|---|---|---|
| | Type | Type of Block Copolymer | IEC (meq/g) | Phase-Separation Structure | Average Priod Size (nm) | Average Priod Size /IEC | Rate of Dry-Wet Dimensional Change (%) | High-Humidity Proton Conductivity (mS/cm) | Low-Humidity Proton Conductivity (mS/cm) |
| Comparative Example 7 | N | b14 | 1.8 | Co-continuous | 38 | 21.1 | 3.1 | 2.14 | 0.14 |
| Comparative Example 8 | O | b15 | 2.0 | Co-continuous | 50 | 25.0 | 3.8 | 5.80 | 0.35 |

Example 8

A block copolymer b16 was obtained in the same manner as the block copolymer b1 was synthesized. This block copolymer b16 had a number-average molecular weight (Mn3) of 170,000, the ionic segment had a number-average molecular weight (Mn1) of 90,000, and the nonionic segment had a number-average molecular weight (Mn2) of 21,000. This block copolymer b16 gave Mn1 = 90,000 and Mn3 / (Mn1 + Mn2) = 1.53, and satisfied the following formulae (2) and (3).

$$\text{Mn1} > 50{,}000 \ldots \text{Formula (2)}$$

$$\text{Mn3} / (\text{Mn1} + \text{Mn2}) > 1 \ldots \text{Formula (3)}$$

A 20 wt% NMP solution in which the resulting block copolymer b16 was dissolved was filtrated under pressure using a glass fiber filter, then applied to a glass base plate by cast coating, and dried at 100°C for 4 hours to obtain a molded membrane product. This molded product was immersed in an aqueous 10 mass% sulfuric acid solution at 80°C for 24 hours to undergo proton exchange and deprotection reaction, and then immersed in a large excess amount of pure water for 24 hours to be thoroughly washed, to obtain a polymer electrolyte membrane a (having a thickness of 10 μm). Observation by TEM and TEM tomography made it possible to verify a co-continuous phase-separation structure, and demonstrated that the hydrophilic domain containing an ionic group and the hydrophobic domain containing no ionic group each formed a continuous phase. A crystallization peak was exhibited in DSC, and the heat of crystallization was 15.8 J/g. In addition, no crystal peak was exhibited (the crystallinity was 0%) in wide-angle X-ray diffraction.

Example 9

A block copolymer b17 was obtained in the same manner as the block copolymer b2 was synthesized. This block copolymer b17 had a number-average molecular weight (Mn3) of 180,000, the ionic segment had a number-average molecular weight (Mn1) of 90,000, and the nonionic segment had a number-average molecular weight (Mn2) of 21,000. This block copolymer b17 gave Mn1 = 90,000 and Mn3 / (Mn1 + Mn2) = 1.62, and satisfied the above-described formulae (2) and (3).

A polymer electrolyte membrane b (having a thickness of 11 μm) was obtained by the same method as in Example 8 except that the block copolymer b17 was used in place of the block copolymer b16. Observation by TEM and TEM tomography made it possible to verify a co-continuous phase-separation structure, and demonstrated that the hydrophilic domain containing an ionic group and the hydrophobic domain containing no ionic group each formed a continuous phase. A crystallization peak was exhibited in DSC, and the heat of crystallization was 13.2 J/g. In addition, no crystal peak was exhibited (the crystallinity was 0%) in wide-angle X-ray diffraction.

Example 10

A block copolymer b18 was obtained in the same manner as the block copolymer b3 was synthesized. This block copolymer b18 had a number-average molecular weight (Mn3) of 160,000, the ionic segment had a number-average molecular weight (Mn1) of 90,000, and the nonionic segment had a number-average molecular weight (Mn2) of 26,000. This block copolymer b18 gave Mn1 = 90,000 and Mn3 / (Mn1 + Mn2) = 1.38, and satisfied the above-described formulae (2) and (3).

A polymer electrolyte membrane c (having a thickness of 10 μm) was obtained by the same method as in Example 8 except that the block copolymer b18 was used in place of the block copolymer b16. Observation by TEM and TEM tomography made it possible to verify a co-continuous phase-separation structure, and demonstrated that the hydrophilic domain containing an ionic group and the hydrophobic domain containing no ionic group each formed a continuous phase. A crystallization peak was exhibited in DSC, and the heat of crystallization was 22.1 J/g. In addition, no crystal peak was exhibited (the crystallinity was 0%) in wide-angle X-ray diffraction.

Example 11

A block copolymer b19 was obtained in the same manner as the block copolymer b4 was synthesized. This block copolymer b19 had a number-average molecular weight (Mn3) of 190,000, the ionic segment had a number-average molecular weight (Mn1) of 70,000, and the nonionic segment had a number-average molecular weight (Mn2) of 21,000. This block copolymer b19 gave Mn1 = 70,000 and Mn3 / (Mn1 + Mn2) = 2.09, and satisfied the above-described formulae (2) and (3).

A polymer electrolyte membrane d (having a thickness of 10 μm) was obtained by the same method as in Example 8 except that the block copolymer b19 was used in place of the block copolymer b16. Observation by TEM and TEM tomography made it possible to verify a co-continuous phase-separation structure, and demonstrated that the hydrophilic domain containing an ionic group and the hydrophobic domain containing no ionic group each formed a continuous phase. A crystallization peak was exhibited in DSC, and the heat of crystallization was 16.6 J/g. In addition, no crystal peak was exhibited (the crystallinity was 0%) in wide-angle X-ray diffraction.

Example 12

(Synthesis of nonionic oligomer a1' represented by the following general formula (G15))

Into a 500 mL three-necked flask equipped with a stirrer, a nitrogen introduction tube, and a Dean-Stark trap, 1.1 g of potassium carbonate (an Aldrich reagent, 8 mmol) and 20.0 g (1 mmol) of the nonionic oligomer a1 were introduced. After the device was purged with nitrogen, 100 mL of NMP and 30 mL of toluene were added, the resulting mixture was dehydrated at 100°C, and the temperature was raised to remove toluene. Then, 0.84 g of 2,6-difluorobenzonitrile (an Aldrich reagent, 6 mmol) was introduced, and allowed to react at 105°C for 12 hours. The resulting product was purified by reprecipitation in a large amount of isopropyl alcohol to obtain a nonionic oligomer a1' (having a fluoro end group) represented by the following formula (G15). The number-average molecular weight of this nonionic oligomer a1' was 21,000.

[Chem. 39]

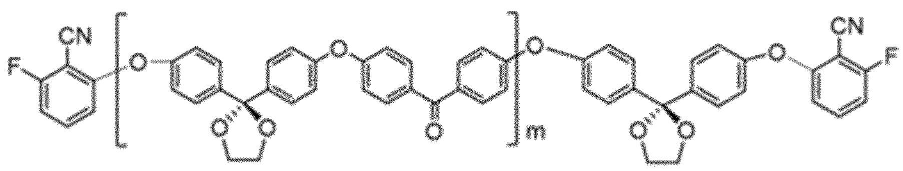

(G15)

(Synthesis of ionic oligomer a4" represented by the following formula (G16))

Into a 2,000 mL SUS polymerizer equipped with a stirrer, a nitrogen introduction tube, and a Dean-Stark trap, 0.56 g of potassium carbonate (an Aldrich reagent, 400 mmol) and 37.16 g of the oligomer a4 containing an ionic group were introduced. After the device was purged with nitrogen, 400 mL of NMP was added, the contents were dissolved at 60°C, and then, 11.4 g of a 2,6-difluorobenzonitrile/NMP solution (1 wt%) was added. The resulting mixture was allowed to react at 80°C for 18 hours to obtain an NMP solution containing an ionic oligomer a4" (having an OM end) represented by the formula (G16). The number-average molecular weight of this ionic oligomer a4" was 70,000. In this regard, in the formula (G16), M represents a hydrogen atom, Na, or K.

[Chem. 40]

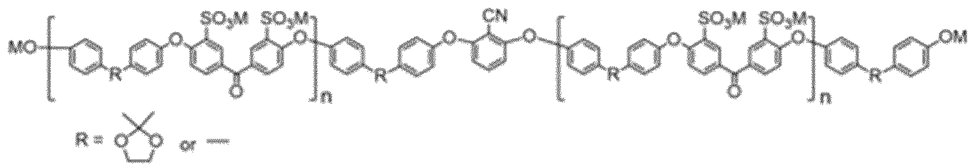

(G16)

(Synthesis of block copolymer b20 containing oligomer a4" as ionic segment and oligomer a1' as nonionic segment)

A block copolymer b20 was obtained in the same manner as the block copolymer b1 was synthesized except that the ionic oligomer a4" (37.16 g) was used in place of the ionic oligomer a2' (49.0 g), and that the amount of the nonionic oligomer a1 used was 5.80 g. This block copolymer b20 had a number-average molecular weight of 100,000 and a weight-average molecular weight of 260,000.

This block copolymer b20 had a number-average molecular weight (Mn3) of 100,000, the ionic segment had a number-average molecular weight (Mn1) of 70,000, and the nonionic segment had a number-average molecular weight

(Mn2) of 21,000. This block copolymer b20 gave Mn1 = 70,000 and Mn3 / (Mn1 + Mn2) = 1.10, and satisfied the above-described formulae (2) and (3).

A polymer electrolyte membrane e (having a thickness of 10 μm) was obtained by the same method as in Example 8 except that the block copolymer b20 was used in place of the block copolymer b16. Observation by TEM and TEM tomography made it possible to verify a co-continuous phase-separation structure, and demonstrated that the hydrophilic domain containing an ionic group and the hydrophobic domain containing no ionic group each formed a continuous phase. A crystallization peak was exhibited in DSC, and the heat of crystallization was 20.1 J/g. In addition, no crystal peak was exhibited (the crystallinity was 0%) in wide-angle X-ray diffraction.

Example 13

(Synthesis of block copolymer b21 containing oligomer a4" as ionic segment and oligomer a1 as nonionic segment)

A block copolymer b21 was obtained in the same manner as the block copolymer b20 was synthesized except that the nonionic oligomer a1 (9.29 g) was used in place of the nonionic oligomer a1' (5.80 g). This block copolymer b21 had a number-average molecular weight of 150,000 and a weight-average molecular weight of 380,000.

This block copolymer b21 had a number-average molecular weight (Mn3) of 150,000, the ionic segment had a number-average molecular weight (Mn1) of 70,000, and the nonionic segment had a number-average molecular weight (Mn2) of 21,000. This block copolymer b21 gave Mn1 = 70,000 and Mn3 / (Mn1 + Mn2) = 1.65, and satisfied the above-described formulae (2) and (3).

A polymer electrolyte membrane f (having a thickness of 10 μm) was obtained by the same method as in Example 8 except that the block copolymer b21 was used in place of the block copolymer b16. Observation by TEM and TEM tomography made it possible to verify a co-continuous phase-separation structure, and demonstrated that the hydrophilic domain containing an ionic group and the hydrophobic domain containing no ionic group each formed a continuous phase. A crystallization peak was exhibited in DSC, and the heat of crystallization was 22.0 J/g. In addition, no crystal peak was exhibited (the crystallinity was 0%) in wide-angle X-ray diffraction.

Example 14

(Synthesis of nonionic oligomer a21 represented by the above-described formula (G7))

An oligomer a21 having a hydroxy end was obtained in the same manner as the oligomer a1 having a hydroxy end was synthesized except that 24.92 g of 4,4'-difluorodiphenyl sulfone was used in place of 4,4'-difluorobenzophenone. The number-average molecular weight of this oligomer a21 having a hydroxy end was 20,000.

A nonionic oligomer a21 (having a fluoro end group) represented by the formula (G7) was obtained in the same manner as the oligomer a1 was synthesized except that the oligomer a21 having a hydroxy end was used in place of the oligomer a1 having a hydroxy end. The number-average molecular weight of this nonionic oligomer a21 was 21,000.

(Synthesis of ionic oligomer a22 represented by the above-described general formula (G8))

An ionic oligomer a22 (having a hydroxy end group) represented by the formula (G8) was obtained in the same manner as the ionic oligomer a2 was synthesized except that 44.94 g (98.1 mmol) of disodium diphenylsulfone-4,4'-difluoro-3,3'-disulfonate obtained in Synthesis Example 3 was used in place of 41.60 g of disodium-3,3'-disulfonate-4,4'-difluorobenzophenone. The number-average molecular weight of this ionic oligomer a22 was 41,000.

(Synthesis of ionic oligomer a22' represented by the following formula (G17))

An NMP solution containing the ionic-group oligomer a22' (having an OM end) represented by the formula (G17) was obtained in the same manner as the ionic oligomer a2' was synthesized except that the ionic oligomer a22 (45.76 g) was used in place of the ionic oligomer a2 (49.0 g), and that 16.35 g of 2,6-difluorobenzonitrile/NMP solution (1 wt%) was used in place of 19.8 g of the hexafluorobenzene/NMP solution (1 wt%). The number-average molecular weight of this ionic oligomer a22' was 82,000. In this regard, in the formula (G17), M represents a hydrogen atom, Na, or K.

[Chem. 41]

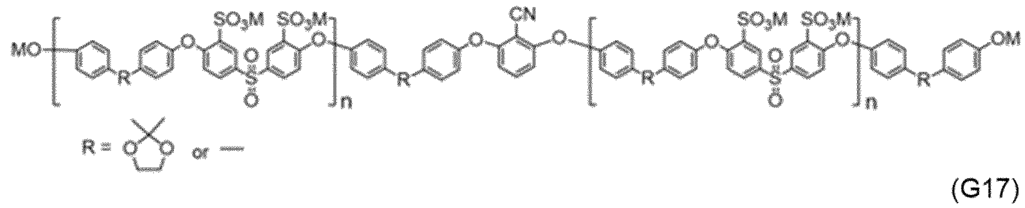

(G17)

(Synthesis of block copolymer b22 containing oligomer a22' as ionic segment and oligomer a21 as nonionic segment)

A block copolymer b22 was obtained in the same manner as the block copolymer b1 was synthesized except that the ionic-group oligomer a22' (45.76 g) was used in place of the ionic oligomer a2' (49.0 g), and that the nonionic oligomer a22 (13.12 g) was used in place of the nonionic oligomer a1 (7.65 g). This block copolymer b22 had a number-average molecular weight of 160,000 and a weight-average molecular weight of 380,000.

This block copolymer b22 had a number-average molecular weight (Mn3) of 160,000, the ionic segment had a number-average molecular weight (Mn1) of 82,000, and the nonionic segment had a number-average molecular weight (Mn2) of 21,000. This block copolymer b22 gave Mn1 = 82,000 and Mn3 / (Mn1 + Mn2) = 1.55, and satisfied the above-described formulae (2) and (3).

A polymer electrolyte membrane g (having a thickness of 12 $\mu$m) was obtained by the same method as in Example 8 except that the block copolymer b22 was used in place of the block copolymer b16. Observation by TEM and TEM tomography made it possible to verify a co-continuous phase-separation structure, and demonstrated that the hydrophilic domain containing an ionic group and the hydrophobic domain containing no ionic group each formed a continuous phase. No crystallization peak was exhibited in DSC. In addition, no crystal peak was exhibited (the crystallinity was 0%) in wide-angle X-ray diffraction.

Example 15

A block copolymer b23 was obtained in the same manner as the block copolymer b5 was synthesized. This block copolymer b23 had a number-average molecular weight (Mn3) of 140,000, the ionic segment had a number-average molecular weight (Mn1) of 56,000, and the nonionic segment had a number-average molecular weight (Mn2) of 17,000. This block copolymer b23 gave Mn1 = 56,000 and Mn3 / (Mn1 + Mn2) = 1.92, and satisfied the above-described formulae (2) and (3).

A polymer electrolyte membrane h (having a thickness of 12 $\mu$m) was obtained by the same method as in Example 8 except that the block copolymer b23 was used in place of the block copolymer b16. Observation by TEM and TEM tomography made it possible to verify a co-continuous phase-separation structure, and demonstrated that the hydrophilic domain containing an ionic group and the hydrophobic domain containing no ionic group each formed a continuous phase. A crystallization peak was exhibited in DSC, and the heat of crystallization was 21.1 J/g. In addition, no crystal peak was exhibited (the crystallinity was 0%) in wide-angle X-ray diffraction.

Example 16

(Synthesis of nonionic oligomer a23 represented by general formula (G4))

A nonionic oligomer a23 having a hydroxy end was obtained in the same manner as the nonionic oligomer a1 having a hydroxy end was synthesized except that the amount of 4,4'-difluorobenzophenone used was 20.84 g. The number-average molecular weight of this nonionic oligomer a23 having a hydroxy end was 9,000.

A nonionic oligomer a23 (having a fluoro end group) represented by the formula (G4) was obtained in the same manner as the nonionic oligomer a1 was synthesized except that the nonionic oligomer a23 having a hydroxy end (9.0 g (1 mmol)) was used in place of the nonionic oligomer a1 having a hydroxy end (20.0 g). The number-average molecular weight of this nonionic oligomer a23 was 10,000.

(Synthesis of block copolymer b24 containing oligomer a6 as ionic segment and oligomer a23 as nonionic segment)

A block copolymer b24 was obtained in the same manner as the block copolymer b5 was synthesized except that the nonionic oligomer a23 (5.12 g) was used in place of the nonionic oligomer as (8.19 g). This block copolymer

b24 had a number-average molecular weight of 190,000 and a weight-average molecular weight of 450,000.

This block copolymer b24 had a number-average molecular weight (Mn3) of 190,000, the ionic segment had a number-average molecular weight (Mn1) of 56,000, and the nonionic segment had a number-average molecular weight (Mn2) of 10,000. This block copolymer b24 gave Mn1 = 56,000 and Mn3 / (Mn1 + Mn2) = 2.88, and satisfied the above-described formulae (2) and (3).

A polymer electrolyte membrane i (having a thickness of 11 μm) was obtained by the same method as in Example 8 except that the block copolymer b24 was used in place of the block copolymer b16. Observation by TEM and TEM tomography made it possible to verify a co-continuous phase-separation structure, and demonstrated that the hydrophilic domain containing an ionic group and the hydrophobic domain containing no ionic group each formed a continuous phase. A crystallization peak was exhibited in DSC, and the heat of crystallization was 10.1 J/g. In addition, no crystal peak was exhibited (the crystallinity was 0%) in wide-angle X-ray diffraction.

Example 17

A block copolymer b25 was obtained in the same manner as the block copolymer b6 was synthesized. This block copolymer b25 had a number-average molecular weight (Mn3) of 110,000, the ionic segment had a number-average molecular weight (Mn1) of 57,000, and the nonionic segment had a number-average molecular weight (Mn2) of 11,000. This block copolymer b25 gave Mn1 = 57,000 and Mn3 / (Mn1 + Mn2) = 1.62, and satisfied the above-described formulae (2) and (3).

A polymer electrolyte membrane j (having a thickness of 10 μm) was obtained by the same method as in Example 8 except that the block copolymer b25 was used in place of the block copolymer b16. Observation by TEM and TEM tomography made it possible to verify a co-continuous phase-separation structure, and demonstrated that the hydrophilic domain containing an ionic group and the hydrophobic domain containing no ionic group each formed a continuous phase. No crystallization peak was exhibited in DSC (the heat of crystallization was 0 J/g). In addition, no crystal peak was exhibited (the crystallinity was 0%) in wide-angle X-ray diffraction.

Example 18

A block copolymer b26 was obtained in the same manner as the block copolymer b7 was synthesized. This block copolymer b26 had a number-average molecular weight (Mn3) of 90,000, the ionic segment had a number-average molecular weight (Mn1) of 67,000, and the nonionic segment had a number-average molecular weight (Mn2) of 10,000. This block copolymer b26 gave Mn1 = 67,000 and Mn3 / (Mn1 + Mn2) = 1.17, and satisfied the above-described formulae (2) and (3).

The block copolymer b26 was dissolved at 0.1 g/g in a solvent composed of NMP/methanol = 30/70 (mass%). The resulting solution was filtrated under pressure using a glass fiber filter, then applied to a glass base plate by cast coating, dried at 100°C for 4 hours to obtain a molded membrane product. This molded product was immersed in an aqueous 10 mass% sulfuric acid solution at 80°C for 24 hours, and then immersed in a large excess amount of pure water for 24 hours to be thoroughly washed, to obtain a polymer electrolyte membrane k (having a thickness of 10 μm). Observation by TEM and TEM tomography made it possible to verify a co-continuous phase-separation structure, and demonstrated that the hydrophilic domain containing an ionic group and the hydrophobic domain containing no ionic group each formed a continuous phase. No crystallization peak was exhibited in DSC. In addition, a crystal peak was exhibited in wide-angle X-ray diffraction, and the crystallinity was 10.4%.

Comparative Example 9

A block copolymer b27 was obtained in the same manner as the block copolymer b8 was synthesized. This block copolymer b27 had a number-average molecular weight (Mn3) of 140,000, the ionic segment had a number-average molecular weight (Mn1) of 42,000, and the nonionic segment had a number-average molecular weight (Mn2) of 10,000. This block copolymer b27 gave Mn1 = 42,000 and Mn3 / (Mn1 + Mn2) = 2.69, and did not satisfy the above-described formula (2).

A polymer electrolyte membrane 1 (having a thickness of 10 μm) was obtained by the same method as in Example 8 except that the block copolymer b27 was used in place of the block copolymer b16. Observation by TEM and TEM tomography made it possible to verify a co-continuous phase-separation structure, and demonstrated that the hydrophilic domain containing an ionic group and the hydrophobic domain containing no ionic group each formed a continuous phase. A crystallization peak was exhibited in DSC, and the heat of crystallization was 15.1 J/g. In addition, no crystal peak was exhibited (the crystallinity was 0%) in wide-angle X-ray diffraction.

Comparative Example 10

A block copolymer b28 was obtained in the same manner as the block copolymer b9 was synthesized. This block copolymer b28 had a number-average molecular weight (Mn3) of 130,000, the ionic segment had a number-average molecular weight (Mn1) of 42,000, and the nonionic segment had a number-average molecular weight (Mn2) of 6,000. This block copolymer b28 gave Mn1 = 42,000 and Mn3 / (Mn1 + Mn2) = 2.71, and did not satisfy the above-described formula (2).

A polymer electrolyte membrane m (having a thickness of 10 μm) was obtained by the same method as in Example 8 except that the block copolymer b28 was used in place of the block copolymer b16. Observation by TEM and TEM tomography made it possible to verify a co-continuous phase-separation structure, and demonstrated that the hydrophilic domain containing an ionic group and the hydrophobic domain containing no ionic group each formed a continuous phase, but a non-continuous structure was partially found. A crystallization peak was exhibited in DSC, and the heat of crystallization was 6.4 J/g. In addition, no crystal peak was exhibited (the crystallinity was 0%) in wide-angle X-ray diffraction.

Comparative Example 11

A block copolymer b29 was obtained in the same manner as the block copolymer b10 was synthesized. This block copolymer b29 had a number-average molecular weight (Mn3) of 130,000, the ionic segment had a number-average molecular weight (Mn1) of 42,000, and the nonionic segment had a number-average molecular weight (Mn2) of 5,000. This block copolymer b29 gave Mn1 = 42,000 and Mn3 / (Mn1 + Mn2) = 2.77, and did not satisfy the above-described formula (2).

A polymer electrolyte membrane n (having a thickness of 10 μm) was obtained by the same method as in Example 8 except that the block copolymer b29 was used in place of the block copolymer b16. Observation by TEM and TEM tomography made it possible to verify a co-continuous phase-separation structure, and demonstrated that the hydrophilic domain containing an ionic group and the hydrophobic domain containing no ionic group each formed a continuous phase, but a non-continuous structure was partially found. A crystallization peak was exhibited in DSC, and the heat of crystallization was 2.9 J/g. In addition, no crystal peak was exhibited (the crystallinity was 0%) in the same X-ray diffraction as performed on the block copolymer b11 in Comparative Example 4 in wide-angle * 21B0355.

Comparative Example 12

(Synthesis of block copolymer b30 containing oligomer a12 as ionic segment and oligomer a1 as nonionic segment)

A block copolymer b30 was obtained in the same manner as the block copolymer b8 was synthesized except that the amount of the ionic-group oligomer a12 used was 44.68 g, that the nonionic oligomer a1 (11.17 g) was used in place of the nonionic oligomer a11 (10.89 g), and that the reaction time at 105°C was 18 hours. This block copolymer b30 had a number-average molecular weight of 60,000 and a weight-average molecular weight of 180,000.

This block copolymer b30 had a number-average molecular weight (Mn3) of 60,000, the ionic segment had a number-average molecular weight (Mn1) of 42,000, and the nonionic segment had a number-average molecular weight (Mn2) of 21,000. This block copolymer b35 gave Mn1 = 42,000 and Mn3 / (Mn1 + Mn2) = 0.95, and did not satisfy the above-described formulae (2) and (3).

The 20 wt% NMP solution in which the block copolymer b30 obtained was dissolved had poor solubility, and in the solution, gelatinous insoluble matter was observed. The solution was filtrated under pressure through a glass fiber filter. The solution was applied by cast coating to a glass base plate, and dried at 100°C for 4 hours to obtain a molded membraneous product, which exhibited a defect conceivably derived from the gelatinous insoluble matter that had not been removed completely. This molded product was immersed in an aqueous 10 mass% sulfuric acid solution at 80°C for 24 hours to undergo proton exchange and deprotection reaction, and then immersed in a large excess amount of pure water for 24 hours to be thoroughly washed, to obtain a polymer electrolyte membrane o (having a thickness of 13 μm). Observation by TEM and TEM tomography made it possible to verify a co-continuous phase-separation structure, and demonstrated that the hydrophilic domain containing an ionic group and the hydrophobic domain containing no ionic group each formed a continuous phase, but a non-continuous and ununiform structure was partially found. A crystallization peak was exhibited in DSC, and the heat of crystallization was 20.2 J/g. In addition, no crystal peak was exhibited (the crystallinity was 0%) in wide-angle X-ray diffraction.

Comparative Example 13

(Synthesis of block copolymer b31 containing oligomer a2' as ionic segment and oligomer a1 as nonionic segment)

A block copolymer b31 was obtained in the same manner as the block copolymer b1 in Example 1 except that the amount of the nonionic oligomer a1 used was 12.25 g. This block copolymer b31 had a number-average molecular weight of 100,000 and a weight-average molecular weight of 250,000.

This block copolymer b31 had a number-average molecular weight (Mn3) of 100,000, the ionic segment had a number-average molecular weight (Mn1) of 90,000, and the nonionic segment had a number-average molecular weight (Mn2) of 21,000. This block copolymer b31 gave Mn1 = 90,000 and Mn3 / (Mn1 + Mn2) = 0.90, and did not satisfy the above-described formula (3).

A polymer electrolyte membrane p (having a thickness of 12 μm) was obtained by the same method as in Example 8 except that the block copolymer b31 was used in place of the block copolymer b16. Observation by TEM and TEM tomography made it possible to verify a co-continuous phase-separation structure, and demonstrated that the hydrophilic domain containing an ionic group and the hydrophobic domain containing no ionic group each formed a continuous phase, but a non-continuous and ununiform structure was partially found. A crystallization peak was exhibited in DSC, and the heat of crystallization was 21.3 J/g. In addition, no crystal peak was exhibited (the crystallinity was 0%) in wide-angle X-ray diffraction.

Comparative Example 14

A block copolymer b32 was obtained in the same manner as the block copolymer b11 was synthesized. This block copolymer b32 had a number-average molecular weight (Mn3) of 120,000, the ionic segment had a number-average molecular weight (Mn1) of 41,000, and the nonionic segment had a number-average molecular weight (Mn2) of 11,000. This block copolymer b32 gave Mn1 = 41,000 and Mn3 / (Mn1 + Mn2) = 2.31, and did not satisfy the above-described formula (2).

A polymer electrolyte membrane q (having a thickness of 10 μm) was obtained by the same method as in Example 8 except that the block copolymer b32 was used in place of the block copolymer b16. Observation by TEM and TEM tomography made it possible to verify a co-continuous phase-separation structure, and demonstrated that the hydrophilic domain containing an ionic group and the hydrophobic domain containing no ionic group each formed a continuous phase. No crystallization peak was exhibited in DSC (the heat of crystallization was 0 J/g). In addition, no crystal peak was exhibited (the crystallinity was 0%) in wide-angle X-ray diffraction.

[Results of Measurement]

The results of measurement of a block copolymer obtained in each of Examples and Comparative Examples and a polymer electrolyte membrane produced using the block copolymer are shown in Table 2.

[Table 2]

| | Block Copolymer | | | | | | Polymer electrolyte membrane | Properties | | | |
|---|---|---|---|---|---|---|---|---|---|---|---|
| | Type | Ionic Segment Mn1 | Nonionic Segment Mn2 | Block Copolymer Mn3 | Mn3/ (Mn1+Mn2) | Mn1/Mn2 | Type | IEC (meq/g) | Rate of Dry-Wet Dimensional Change (%) | High-Humidity Proton Conductivity (mS/cm) | Low-Humidity Proton Conductivity (mS/cm) |
| Example 8 | b16 | 90000 | 21000 | 170000 | 1.53 | 4.29 | a | 2.5 | 5.4 | 17.06 | 1.46 |
| Example 9 | b17 | 90000 | 21000 | 180000 | 1.62 | 4.29 | b | 2.7 | 6.3 | 19.16 | 1.71 |
| Example 10 | b18 | 90000 | 26000 | 160000 | 1.38 | 3.46 | c | 2.1 | 3.9 | 14.11 | 1.17 |
| Example 11 | b19 | 70000 | 21000 | 190000 | 2.09 | 3.33 | d | 2.4 | 5.3 | 15.39 | 1.22 |
| Example 12 | b20 | 70000 | 21000 | 100000 | 1.10 | 3.33 | e | 2.2 | 4.4 | 12.95 | 1.05 |
| Example 13 | b21 | 70000 | 21000 | 150000 | 1.65 | 3.33 | f | 2.1 | 4.2 | 11.74 | 1.00 |
| Example 14 | b22 | 82000 | 21000 | 160000 | 1.55 | 3.90 | g | 2.1 | 5.6 | 11.49 | 1.01 |
| Example 15 | b23 | 56000 | 17000 | 140000 | 1.92 | 3.29 | h | 2.1 | 4.4 | 9.82 | 0.90 |
| Example 16 | b24 | 56000 | 10000 | 190000 | 2.88 | 5.60 | i | 2.4 | 5.7 | 12.03 | 1.08 |
| Example 17 | b25 | 57000 | 11000 | 110000 | 1.62 | 5.18 | j | 2.4 | 7.0 | 11.37 | 1.01 |
| Example 18 | b26 | 67000 | 10000 | 90000 | 1.17 | 6.70 | k | 2.4 | 6.8 | 11.60 | 1.07 |
| Comparative Example 9 | b27 | 42000 | 10000 | 140000 | 2.69 | 4.20 | l | 2.1 | 4.6 | 6.02 | 0.64 |
| Comparative Example 10 | b28 | 42000 | 6000 | 130000 | 2.71 | 7.00 | m | 2.4 | 6.0 | 8.22 | 0.81 |
| Comparative Example 11 | b29 | 42000 | 5000 | 130000 | 2.77 | 8.40 | n | 2.7 | 7.2 | 9.42 | 0.89 |
| Comparative Example 12 | b30 | 42000 | 21000 | 60000 | 0.95 | 2.00 | o | 2.1 | 3.9 | 5.26 | 0.57 |
| Comparative Example 13 | b31 | 90000 | 21000 | 100000 | 0.90 | 4.29 | p | 2.1 | 4.2 | 6.12 | 0.67 |
| Comparative Example 14 | b32 | 41000 | 11000 | 120000 | 2.31 | 3.73 | q | 2.4 | 7.1 | 6.65 | 0.70 |

From the viewpoint of allowing a polymer electrolyte membrane and a block copolymer according to the present invention to achieve mechanical strength and physical durability together with proton conductivity at a comparatively high level, it is preferable that the rate of dry-wet dimensional change is 7.0% or less, the low-humidity proton conductivity is 0.90 mS/cm or more, and the high-humidity proton conductivity is 9.50 mS/cm or more, it is more preferable that the rate of dry-wet dimensional change is 6.5% or less, the low-humidity proton conductivity is 1.00 mS/cm or more, and the high-humidity proton conductivity is 11.00 mS/cm or more, it is particularly preferable that the rate of dry-wet dimensional change is 6.0% or less, the low-humidity proton conductivity is 1.10 mS/cm or more, and the high-humidity proton conductivity is 12.00 mS/cm or more.

Reference Signs List

1 Phase 1
2 Phase 2

## Claims

1. A polymer electrolyte membrane comprising a block copolymer having one or more segments containing an ionic group (hereinafter referred to as an "ionic segment(s)") and one or more segments containing no ionic group (hereinafter referred to as a "nonionic segment(s)"), wherein the ion exchange capacity (meq/g) of said block copolymer is more than 2.0 and less than 3.1, wherein said polymer electrolyte membrane has a co-continuous phase-separation structure, wherein the average period size (nm) of said co-continuous phase-separation structure is less than 110 nm, as observed by transmission electron microscopy, and wherein the average period size (nm) of said phase-separation structure and said ion exchange capacity (meq/g) satisfy the relation of: average period size (nm) / ion exchange capacity (meq/g) > 21.

2. The polymer electrolyte membrane according to claim 1, wherein the heat of crystallization of said block copolymer is 0.1 J/g or more, as measured by differential scanning calorimetry, or the degree of crystallinity of said block copolymer is 0.5% or more, as measured by wide-angle X-ray diffraction.

3. The polymer electrolyte membrane according to claim 1 or 2, wherein said block copolymer is an aromatic hydrocarbon polymer.

4. The polymer electrolyte membrane according to claim 3, wherein said aromatic hydrocarbon polymer is an aromatic polyether polymer.

5. The polymer electrolyte membrane according to any one of claims 1 to 4, wherein said block copolymer comprises a linker site that links said ionic segment with said nonionic segment.

6. The polymer electrolyte membrane according to any one of claims 1 to 5, wherein said ionic segment comprises a structure represented by the following general formula (S1):

[Chem. 1]

$$*-Ar^1-Y^1-Ar^2-O-Ar^3-Y^2-Ar^4-O-* \quad (S1)$$

(wherein, in the general formula (S1), $Ar^1$ to $Ar^4$ independently represent a substituted or unsubstituted arylene group, and at least one of $Ar^1$ to $Ar^4$ has an ionic group; $Y^1$ and $Y^2$ independently represent a ketone group or a protective group that may be induced to a ketone group; and the symbol * represents a bond with the general formula (S1) or with another constituent unit.)

7. The polymer electrolyte membrane according to claim 6, wherein said structure represented by the general formula (S1) is a structure represented by the following general formula (S2):

[Chem. 2]

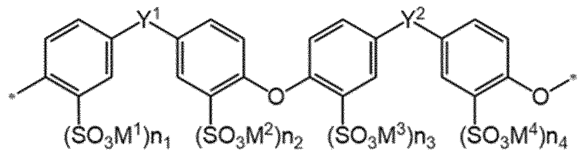

(S2)

(wherein, in the general formula (S2), $Y^1$ and $Y^2$ independently represent a ketone group or a protective group that may be induced to a ketone group; $M^1$ to $M^4$ independently represent a hydrogen atom, metal cation, or ammonium cation; m to $n_4$ are independently 0 or 1, and at least one of $n_1$ to $n_4$ is 1; and the symbol * represents a bond with the general formula (S2) or with another constituent unit.)

**8.** The polymer electrolyte membrane according to any one of claims 1 to 7, wherein said nonionic segment comprises a structure represented by the following general formulae (S3):

[Chem. 3]

$$* - Ar^5 - Y^3 - Ar^6 - O - Ar^7 - Y^4 - Ar^8 - O - * \quad (S3)$$

(wherein, in the general formula (S3), $Ar^5$ to $Ar^8$ independently represent an arylene group with the proviso that none of $Ar^5$ to $Ar^8$ has an ionic group; $Y^3$ and $Y^4$ independently represent a ketone group or a protective group that may be induced to a ketone group; and the symbol * represents a bond with the general formula (S3) or with another constituent unit.)

**9.** The polymer electrolyte membrane according to claim 8, wherein said structure represented by the general formula (S3) is a structure represented by the following general formula (S4):

[Chem. 4]

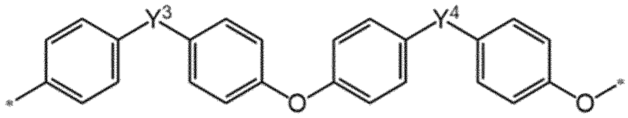

(S4)

(wherein, in the general formula (S4), $Y^3$ and $Y^4$ independently represent a ketone group or a protective group that may be induced to a ketone group; and the symbol * represents a bond with the general formula (S4) or with another constituent unit.)

**10.** A block copolymer comprising one or more segments containing an ionic group (hereinafter referred to as an "ionic segment(s)") and one or more segments containing no ionic group (hereinafter referred to as a "nonionic segment(s)"), wherein said ionic segment has an aromatic hydrocarbon polymer having a number-average molecular weight of more than 50,000 and less than 150,000, and wherein said block copolymer satisfies the relation of: Mn3 / (Mn1 + Mn2) > 1, wherein the number-average molecular weight of said ionic segment is represented by Mn1, the number-average molecular weight of said nonionic segment is represented by Mn2, and the number-average molecular weight of said block copolymer is represented by Mn3.

**11.** The block copolymer according to claim 10, wherein the heat of crystallization of said block copolymer is 0.1 J/g or more, as measured by differential scanning calorimetry, or the degree of crystallinity of said block copolymer is 0.5% or more, as measured by wide-angle X-ray diffraction.

**12.** The block copolymer according to claim 10 or 11, wherein said aromatic hydrocarbon polymer is an aromatic polyether polymer.

**13.** The block copolymer according to any one of claims 10 to 12, wherein said block copolymer comprises a linker site

that links the ionic segment with the nonionic segment.

**14.** The block copolymer according to any one of claims 10 to 13, which satisfies the relation of: $2 < Mn1 / Mn2 < 7$.

**15.** The block copolymer according to any one of claims 10 to 14, wherein said ionic segment comprises a structure represented by the following general formula (S1):

[Chem. 5]

$$*—Ar^1—Y^1—Ar^2—O—Ar^3—Y^2—Ar^4—O—* \quad (S1)$$

(wherein, in the general formula (S1), $Ar^1$ to $Ar^4$ independently represent a substituted or unsubstituted arylene group, and at least one of $Ar^1$ to $Ar^4$ has an ionic group; $Y^1$ and $Y^2$ independently represent a ketone group or a protective group that may be induced to a ketone group; and the symbol * represents a bond with the general formula (S1) or with another constituent unit.)

**16.** The block copolymer according to claim 15, wherein said structure represented by the general formula (S1) is a structure represented by the following general formula (S2):

[Chem. 6]

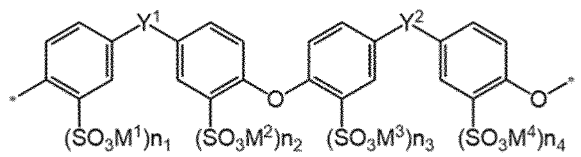

(S2)

(wherein, in the general formula (S2), $Y^1$ and $Y^2$ independently represent a ketone group or a protective group that may be induced to a ketone group; $M^1$ to $M^4$ independently represent a hydrogen atom, metal cation, or ammonium cation; m to $n_4$ are independently 0 or 1, and at least one of m to $n_4$ is 1; and the symbol * represents a bond with the general formula (S2) or with another constituent unit.)

**17.** The block copolymer according to any one of claims 10 to 16, wherein said nonionic segment comprises an aromatic polyether polymer.

**18.** The block copolymer according to any one of claims 10 to 17, wherein said nonionic segment comprises a structure represented by the following general formula (S3):

[Chem. 7]

$$*—Ar^5—Y^3—Ar^6—O—Ar^7—Y^4—Ar^8—O—* \quad (S3)$$

(wherein, in the general formula (S3), $Ar^5$ to $Ar^8$ independently represent an arylene group with the proviso that none of $Ar^5$ to $Ar^8$ has an ionic group; $Y^3$ and $Y^4$ independently represent a ketone group or a protective group that may be induced to a ketone group; and the symbol * represents a bond with the general formula (S3) or with another constituent unit.)

**19.** The block polymer according to claim 18, wherein said structure represented by the general formula (S3) is a structure represented by the following general formula (S4):

[Chem. 8]

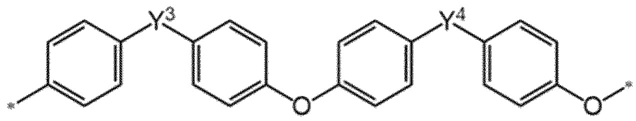

(S4)

(wherein, in the general formula (S4), $Y^3$ and $Y^4$ independently represent a ketone group or a protective group that may be induced to a ketone group; and the symbol * represents a bond with the general formula (S4) or with another constituent unit.)

**20.** The block copolymer according to any one of claims 10 to 18, comprising a co-continuous phase-separation structure.

**21.** A polymer electrolyte material comprising said block copolymer according to any one of claims 10 to 20.

**22.** A molded polymer electrolyte product comprising said polymer electrolyte material according to claim 21.

**23.** A polymer electrolyte membrane produced using the polymer electrolyte material according to claim 21.

**24.** A catalyst coated membrane constituted using said polymer electrolyte membrane according to any one of claims 1 to 9 or said polymer electrolyte membrane according to claim 23.

**25.** A membrane electrode assembly constituted using said polymer electrolyte membrane according to any one of claims 1 to 9 or said polymer electrolyte membrane according to claim 23.

**26.** A polymer electrolyte fuel cell constituted using said polymer electrolyte membrane according to any one of claims 1 to 9 or said polymer electrolyte membrane according to claim 23.

**27.** A water electrolysis hydrogen generator constituted using said polymer electrolyte membrane according to any one of claims 1 to 9 or said polymer electrolyte membrane according to claim 23.

[FIG. 1]

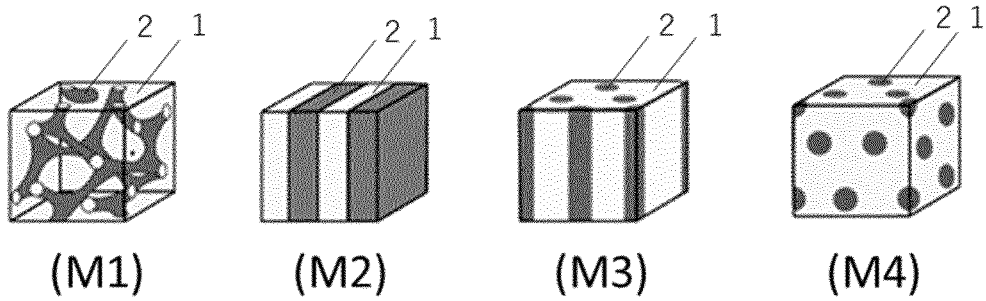

## INTERNATIONAL SEARCH REPORT

International application No.
**PCT/JP2022/005585**

### A. CLASSIFICATION OF SUBJECT MATTER

***C08G 81/00***(2006.01)i; ***C08J 5/22***(2006.01)i; ***H01B 1/06***(2006.01)i; ***H01B 1/12***(2006.01)i; ***H01M 8/10***(2016.01)i; ***H01M 8/1018***(2016.01)i; ***H01M 8/1067***(2016.01)i; ***C25B 13/04***(2021.01)i; ***C25B 13/08***(2006.01)i; ***C25B 9/00***(2021.01)i; ***C25B 1/04***(2021.01)i
FI: H01M8/1018; H01M8/10 101; H01M8/1067; C08G81/00; C08J5/22 CEZ; C08J5/22 101; C25B1/04; C25B9/00 A; C25B13/04 301; C25B13/08 301; H01B1/06 A; H01B1/12 Z

According to International Patent Classification (IPC) or to both national classification and IPC

### B. FIELDS SEARCHED

Minimum documentation searched (classification system followed by classification symbols)

C08G81/00; C08J5/22; H01B1/06; H01B1/12; H01M8/10; H01M8/1018; H01M8/1067; C25B13/04; C25B13/08; C25B1/04; C25B9/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2018-110108 A (TORAY IND., INC.) 12 July 2018 (2018-07-12) paragraphs [0021], [0023], [0026]-[0037], [0085], [0108]-[0112], [0122], [0123], [0140]-[0143], table 1, examples 4, 5 | 1-5, 24-27 |
| A | | 6-9 |
| A | WO 2013/031675 A1 (TORAY IND., INC.) 07 March 2013 (2013-03-07) paragraphs [0076]-[0080], [0101], [0106], [0231]-[0236], [0266]-[0272] | 1-9, 24-27 |
| A | JP 2013-80701 A (TORAY IND., INC.) 02 May 2013 (2013-05-02) paragraphs [0037], [0118]-[0122], [0146]-[0151], [0169], [0213], [0214] | 1-9, 24-27 |
| A | WO 2013/002274 A1 (TORAY IND., INC.) 03 January 2013 (2013-01-03) | 10-27 |
| A | JP 2013-196915 A (HITACHI, LTD.) 30 September 2013 (2013-09-30) | 10-27 |

☐ Further documents are listed in the continuation of Box C.  ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **08 April 2022** | **19 April 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2022/005585**

| Patent document cited in search report | Publication date (day/month/year) | Patent family member(s) | Publication date (day/month/year) |
|---|---|---|---|
| JP 2018-110108 A | 12 July 2018 | (Family: none) | |
| WO 2013/031675 A1 | 07 March 2013 | US 2014/0322628 A1<br>paragraphs [0080]-[0084], [0101], [0106], [0260]-[0266], [0300]-[0307]<br>EP 2752928 A1<br>CA 2847107 A<br>CN 103782434 A<br>KR 10-2014-0041924 A | |
| JP 2013-80701 A | 02 May 2013 | (Family: none) | |
| WO 2013/002274 A1 | 03 January 2013 | US 2014/0213671 A1<br>EP 2690122 A1<br>CA 2833684 A<br>KR 10-2014-0007982 A<br>CN 103635507 A | |
| JP 2013-196915 A | 30 September 2013 | WO 2013/140865 A1 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2008018487 A
- WO 2013002274 A
- WO 2013031675 A
- JP 20062783221 A
- JP 2007109638 A


### Non-patent literature cited in the description


- *Annual Review of Physical Chemistry,* 1990, vol. 41, 525